(19) Europäisches Patentamt
European Patent Office
Office européen des brevets

(11) **EP 3 407 662 B1**

(12) **EUROPEAN PATENT SPECIFICATION**

(45) Date of publication and mention of the grant of the patent:
**13.08.2025 Bulletin 2025/33**

(21) Application number: **17741080.0**

(22) Date of filing: **19.01.2017**

(51) International Patent Classification (IPC):
***H04W 74/08*** *(2024.01)* ***H04W 74/0833*** *(2024.01)*
***H04L 5/00*** *(2006.01)*

(52) Cooperative Patent Classification (CPC):
**H04L 5/00; H04W 74/08; H04W 74/085**

(86) International application number:
**PCT/CN2017/071752**

(87) International publication number:
**WO 2017/125049 (27.07.2017 Gazette 2017/30)**

# (54) METHOD AND APPARATUS FOR SENDING AND RECEIVING PREAMBLE, USER EQUIPMENT, AND BASE STATION

VERFAHREN UND VORRICHTUNG ZUM SENDEN UND EMPFANGEN EINER PRÄAMBEL, BENUTZERGERÄT UND BASISSTATION

PROCÉDÉ ET APPAREIL D'ENVOI ET DE RÉCEPTION DE PRÉAMBULE, ÉQUIPEMENT D'UTILISATEUR ET STATION DE BASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2016 CN 201610044856**

(43) Date of publication of application:
**28.11.2018 Bulletin 2018/48**

(73) Proprietor: **ZTE Corporation**
**Shenzhen, Guangdong 518057 (CN)**

(72) Inventors:
- **YANG, Ling**
  **Shenzhen**
  **Guangdong 518057 (CN)**
- **GOU, Wei**
  **Shenzhen**
  **Guangdong 518057 (CN)**
- **ZHAO, Yajun**
  **Shenzhen**
  **Guangdong 518057 (CN)**
- **BI, Feng**
  **Shenzhen**
  **Guangdong 518057 (CN)**

(74) Representative: **Lavoix**
**Bayerstraße 83**
**80335 München (DE)**

(56) References cited:
**WO-A1-2011/111229** **WO-A1-2012/091645**
**WO-A1-2016/007257** **CN-A- 101 588 637**
**CN-A- 101 778 482** **CN-A- 102 651 907**
**CN-A- 105 207 754** **US-A1- 2010 093 386**
**US-A1- 2013 301 611** **US-A1- 2015 016 312**
**US-A1- 2015 049 712** **US-A1- 2015 057 011**

- **HUAWEI: "TDD PRACH resource selection", 3GPP DRAFT; R2-086351 TDD PRACH RESOURCE SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050321332**
- **SAMSUNG: "Discussion on enhanced random access procedure for UL LAA", vol. RAN WG1, no. Busan, Korea; 20160411 - 20160415, 2 April 2016 (2016-04-02), XP051080336, Retrieved from the Internet <URL:http://www.3gpp.org/ftp/tsg_ran/WG1_RL1/TSGR1_84b/Docs/> [retrieved on 20160402]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **ERICSSON: "Details of Listen-Before-Talk for LAA", vol. RAN WG1, no. San Francisco, USA; 20141117 - 20141121, 13 November 2014 (2014-11-13), XP050895524, Retrieved from the Internet <URL:http://www.3gpp.org/ftp/tsg_ran/WG1_RL1/TSGR1_79/Docs/> [retrieved on 20141113]**
- **SAMSUNG: "Discussion on UL transmission for LAA", vol. RAN WG1, no. Athens, Greece; 20150209 - 20150213, 8 February 2015 (2015-02-08), XP050933577, Retrieved from the Internet <URL:http://www.3gpp.org/ftp/Meetings_3GPP_SYNC/RAN1/Docs/> [retrieved on 20150208]**
- **INTEL CORPORATION: "On Random access for NB-IoT", vol. RAN WG1, no. Budapest, HU; 20160118 - 20160120, 17 January 2016 (2016-01-17), XP051053451, Retrieved from the Internet <URL:http://www.3gpp.org/ftp/Meetings_3GPP_SYNC/RAN1/Docs/> [retrieved on 20160117]**


Remarks:

The file contains technical information submitted after the application was filed and not included in this specification

## Description

### TECHNICAL FIELD

The disclosure relates to the field of communications, and particularly to a method and device for sending a preamble.

### BACKGROUND

Along with rapid increase of data services, data transmission pressure on a carrier of a licensed spectrum keeps increasing. Therefore, offloading data traffic in a licensed carrier through a carrier of an unlicensed spectrum becomes an important evolution direction for subsequent development of Long Term Evolution (LTE).

An unlicensed spectrum has the following characteristics: the unlicensed spectrum is not required to be purchased, is zero in spectrum resource cost and has the characteristic of no/low charge; both of an individual and an enterprise may participate in deployment, equipment of an equipment manufacturer may be freely deployed, and the unlicensed spectrum has the characteristics of low access requirement and low cost; frequency bands of 5GHz, 2.4GHz and the like in the unlicensed spectrum are all available, and the unlicensed spectrum has the characteristic of large available bandwidth; and an unlicensed carrier has the characteristic of resource sharing, that is, when multiple different systems operate therein or different operating companies of the same system operate therein, some resource sharing manners may be considered to improve spectrum utilization efficiency and the like.

A project for researches on Release-13 (Rel-13) of LTE system was set up in September, 2014, and an important research issue is use of carriers of unlicensed spectrums for work of LTE systems. This technology may make an existing carrier of an unlicensed spectrum available for an LTE system, greatly improve potential spectrum resources of the LTE and enable the LTE system to achieve lower spectrum cost.

In an LTE system, random access is a basic function and UE may be scheduled by the system for Uplink (UL) transmission only after UL synchronization with the system through a random access process. Random access in LTE is divided into two forms, i.e., contention-based random access and contention-free random access.

A contention-based random access process may be divided into four operations.

In (1), UE sends a preamble, wherein the UE randomly selects an available preamble for sending.

In (2), an eNB sends a Random Access Response (RAR). The eNB, when detecting a preamble sequence sent by the UE, may send a response (detected preamble sequence index, time regulation information for UL synchronization and initial UL resource allocation (for sending of a Message 3 (Msg3)) and a Temporary Cell Radio Network Temporary Identity (TC-RNTI) on a Downlink Synchronization Channel (DL-SCH) to determine whether to convert the TC-RNTI into a formal Cell Radio Network Temporary Identifier (C-RNTI) or not in Operation 4. The UE is required to monitor an RAR Msg by use of a Random Access Radio Network Temporary Identifier (RA-RNTI) on a Physical Downlink Control Channel (PDCCH).

In (3), the UE sends the Msg3. The UE receives the RAR Msg and obtains UL time synchronization and an UL resource. However, in such a case, it may not be determined that the RAR Msg is sent to not other UE but the UE. Since a preamble sequence of UE is randomly selected from a public resource, there is such a probability that different UE sends the same access preamble sequence on the same time-frequency resource, and they may receive the same RAR through the same RA-RNTI. Moreover, it is also impossible for the UE to know whether there is other UE using the same resource for random access or not. Therefore, the subsequent Msg3 and Msg4 are required by the UE to resolve such a random access collision.

In (4), the eNB sends the Msg4, i.e., a collision resolution Msg. If the UE receives the Msg4 returned by the eNB within a time of a Media Access Control (mac)-ContentionResolutionTimer and a UE Identity (ID) contained therein is consistent with that it reports to the eNB in the Msg3, the UE determines that it has won in this random access collision and succeeded in random access, and sets the TC-RNTI obtained from the RAR Msg as its own C-RNTI. Otherwise, the UE determines that it has failed in access and implements a random access retransmission process according to the abovementioned rule.

For contention-free random access, the preamble sent by the UE is notified by the eNB, UL synchronization is completed by the first two steps, and no collision resolution process is implemented. Further relevant technologies are also known from US 2015/057011 A1 (DI GIROLAMO ROCCO [CA] ET AL) 26 February 2015 (2015-02-26) which relates to random access in dynamic and shared spectrums; HUAWEI: "TDD PRACH resource selection", 3GPP DRAFT; R2-086351 TDD PRACH RESOURCE SELECTION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Prague, Czech Republic; 20081104, 4 November 2008 (2008-11-04); US 2015/049712 A1 (CHEN WANSHI [US] ET AL) 19 February 2015 (2015-02-19) which relates to uplink procedures for LTE/LTE-A communication systems with unlicensed spectrum; US 2010/093386 A1 (DAMNJANOVIC ALEKSANDAR [US] ET AL) 15 April 2010 (2010-04-15) which relates to random access for wireless communication; US 2013/301611 A1 (BAGHEL SUDHIR KUMAR [IN] ET AL) 14 November 2013 (2013-11 -14) which relates to method and system for connectionless transmission during uplink and downlink of data packets; INTEL CORPORATION: "On Random access for NB-IoT", 3GPP DRAFT; R1-160132 - INTEL NB-IOT RA, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Budapest, HU; 20160118 - 20160120 17 January 2016 (2016-01-17), and WO 2016/007257 A1 (QUALCOMM INC [US]) 14 January 2016 (2016-01-14) which relates to methods and apparatus for connectionless access.

However, it is impossible to implement a random access process on an unlicensed carrier in a related art.

## SUMMARY

The disclosure provides a method and device for sending a preamble and a as defined in the attached independent claims, so as at least to solve the problem of incapability of implementing a random access process on an unlicensed carrier in the related art. Further improvements are provided in the dependent claims.

## BRIEF DESCRIPTION OF DRAWINGS

The drawings described herein are adopted to provide a further understanding to the disclosure and form a part of the application. Schematic embodiments of the disclosure and descriptions thereof are adopted to explain the disclosure and not intended to form improper limits to the disclosure. In the drawings:

FIG. 1 is a flowchart of a method for sending a preamble according to an embodiment of the disclosure.
FIG. 2 is a flowchart of a first random access method according to an embodiment of the disclosure.
FIG. 3 is a flowchart of a method for receiving a preamble according to an embodiment of the disclosure.
FIG. 4 is a flowchart of a second random access method according to an embodiment of the disclosure.
FIG. 5 is a schematic diagram of PRACH resources which are continuous in time in a preamble sending time window according to an embodiment of the disclosure.
FIG. 6 is a schematic diagram of PRACH resources which are discrete at the same interval on time in a preamble sending time window according to an embodiment of the disclosure.
FIG. 7 is a schematic diagram of adding standby PRACH resources between discrete PRACH resources in a time window according to an embodiment of the disclosure.
FIG. 8 is a schematic diagram of adding PRACH time-domain resources after a preamble sending window according to an embodiment of the disclosure.
FIG. 9 is a schematic diagram of a location where an LBT mechanism and/or CCA detection are/is implemented when a preamble is sent in formats 0~3 according to an embodiment of the disclosure.
FIG. 10 is a schematic diagram of a location where an LBT mechanism and/or CCA detection are/is implemented when a preamble is sent in a format 4 according to an embodiment of the disclosure.
FIG. 11 is a structure block diagram of a device for sending a preamble according to an embodiment of the disclosure.
FIG. 12 is a first preferred structure block diagram of a first sending module 114 in a device for sending a preamble according to an embodiment of the disclosure.
FIG. 13 is a preferred structure block diagram of a first determination module 112 in a device for sending a preamble according to an embodiment of the disclosure.
FIG. 14 is a preferred structure block diagram of a first determination unit 132 in a first determination module 112 in a device for sending a preamble according to an embodiment of the disclosure.
FIG. 15 is a second preferred structure block diagram of a first sending module 114 in a device for sending a preamble according to an embodiment of the disclosure.
FIG. 16 is a structure block diagram of a device for receiving a preamble according to an embodiment of the disclosure.
FIG. 17 is a preferred structure block diagram of a first receiving module 162 in a device for receiving a preamble according to an embodiment of the disclosure.
FIG. 18 is a preferred structure block diagram of a first processing module 164 in a device for receiving a preamble according to an embodiment of the disclosure.
FIG. 19 is a preferred structure block diagram of a device for receiving a preamble according to an embodiment of the disclosure.
FIG. 20 is a structure block diagram of a first random access device according to an embodiment of the disclosure.
FIG. 21 is a preferred structure block diagram of a second processing module 204 in a first random access device according to an embodiment of the disclosure.
FIG. 22 is a structure block diagram of a second random access device according to an embodiment of the disclosure.
FIG. 23 is a preferred structure block diagram of a third processing module 224 in a second random access device according to an embodiment of the disclosure.
FIG. 24 is a structure block diagram of UE according to an embodiment of the disclosure.

FIG. 25 is a schematic block diagram of an eNB according to an embodiment of the application.

## DETAILED DESCRIPTION

The disclosure will be described below with reference to the drawings and in combination with the embodiments in detail. It is to be noted that the embodiments in the application and characteristics in the embodiments may be combined without conflicts.

It is to be noted that terms "first", "second" and the like in the specification, claims and drawings of the disclosure are adopted not to describe a specific sequence or order but to distinguish similar objects. "Unlicensed carrier" related solutions involved in the embodiments of the disclosure are also applied to a licensed carrier. Descriptions are made with an unlicensed carrier as an example in part of the embodiments.

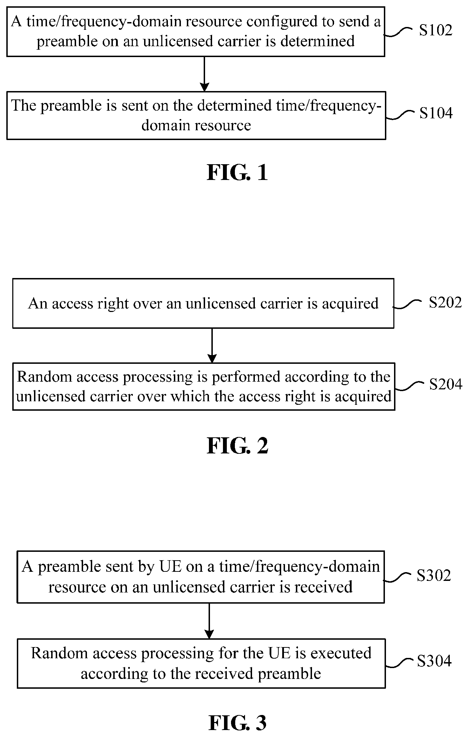

An embodiment provides a method for sending a preamble. FIG. 1 is a flowchart of a method for sending a preamble according to an embodiment of the disclosure. As shown in FIG. 1, the flow includes the following operations.

In S102, a time/frequency-domain resource (which may also be called a time-domain and/or frequency-domain resource) for sending of a preamble on an unlicensed carrier is determined.

In S104, the preamble is sent on the determined time/frequency-domain resource. Wherein, the preamble may be sent in a manner of sending a Msg on the determined time-domain and/or frequency-domain resource, wherein the Msg may include at least one of the following information: the preamble, a UE ID, a C-RNTI, an RRC request, an SR and a BSR. It is to be noted that, under the condition that the preamble is sent in the manner of sending the Msg, part of the time-domain and/or frequency-domain resource for sending of the preamble and another part of the time-domain and/or frequency-domain resource for sending of the other information except the preamble may be two time-domain and/or frequency-domain resources which are the same in a time domain and is offset by an offset in a frequency domain, may also be two time-domain and/or frequency-domain resources which are the same in the frequency domain and are offset by another offset in the time domain, and may further be two time-domain and/or frequency-domain resources with offsets in both of the time domain and the frequency domain, wherein the multiple offsets may be the same and may also be different. In addition, the other part of the time-domain and/or frequency-domain resource for sending of the other information may be scrambled by adopting a TC-RNTI, and the TC-RNTI may also be obtained in multiple manners, and for example, may be acquired in at least one of the following manners: an acquisition manner of correspondence to the preamble, an acquisition manner of allocation by an eNB, an acquisition manner of negotiation between the eNB and UE and an acquisition manner of correspondence to the UE ID.

Moreover, the preamble may also be determined in multiple manners, and for example, may be determined in at least one of the following manners: a determination manner of allocation to the UE by the eNB, a determination manner of notification through physical-layer signaling, a determination manner of notification through high-layer signaling, a determination manner of negotiation between the eNB and the UE and a determination manner of pre-configuration for the UE by a system.

By the operations, the preamble is sent on the determined time-domain and/or frequency-domain resource on the unlicensed carrier, so that the problem of incapability of sending the preamble on the unlicensed carrier for a random access process in the related art is solved, the blank of sending the preamble on the unlicensed carrier for random access in the related art is supplied, an effect of successfully sending the preamble on the unlicensed carrier for random access is further achieved, and a user experience is effectively improved.

The embodiment of the disclosure will be described below based on a UE side and an eNB side respectively.

On the UE side

UE sends a preamble on a determined time-domain and/or frequency-domain resource. According to different manners for determining the time-domain and/or frequency-domain resource, there may also be many sending manners. That is, the UE may send the preamble on the preamble sending time-domain and/or frequency-domain resource on an unlicensed carrier in multiple manners. Descriptions will be made below with examples.

For example, the time-domain and/or frequency-domain resource for sending of the preamble is determined according to a predefined manner; and/or, the time-domain and/or frequency-domain resource for sending of the preamble is determined according to physical-layer DCI signaling; and/or, the time-domain and/or frequency-domain resource for sending of the preamble is determined according to high-layer RRC signaling.

For example, for an LTE-Unlicensed (LTE-U) system, before an unlicensed carrier is used for transmission, it is necessary to acquire a right of use of the carrier according to an LBT mechanism. Similarly, before a random access process is implemented on the unlicensed carrier, the LBT mechanism may be implemented at first. Once the right of use of the unlicensed carrier is acquired by (an eNB and the UE), the random access process may be started to be initiated. On the contrary, when the UE fails to implement LBT, the whole random access process may be delayed, and worse, potential UL transmission on all UL carriers in the same Timing Advance Group (TAG) may be delayed. Particularly, in a scenario that small cells on a licensed carrier and an unlicensed carrier do not belong to the same station, the UL licensed carrier and the unlicensed carrier may belong to different TAGs. Therefore, it is very necessary to independently and accurately implement the random access process on the unlicensed carrier, for the purpose of acquiring UL synchronization on the unlicensed carrier.

Therefore, for increasing a success rate of sending the preamble, LBT or CCA detection may be implemented on the unlicensed carrier, the time-domain and/or frequency-domain resource for sending of the preamble is determined according to an implementation result of implementation of the LBT mechanism and/or the CCA detection, and then the preamble is sent according to the determined time-domain and/or frequency-domain resource. It is to be noted that determining to send the preamble according to the implementation result is a preferred condition that the preamble is considered to be successfully sent. While for convenience of a flow or for increasing a random access speed, the LBT mechanism or the CCA detection may also not be implemented on the unlicensed carrier, and instead, the preamble is directly sent on the determined time-domain and/or frequency-domain resource through an SCS.

In consideration of increasing the success rate of sending the preamble, the time-domain and/or frequency-domain resource for sending of the preamble may be determined according to the implementation result of implementation of the LBT mechanism and/or the CCA detection on the unlicensed carrier. That is, the operation that the time-domain and/or frequency-domain resource for sending of the preamble on the unlicensed carrier is determined includes that: the LBT mechanism and/or the CCA detection are/is implemented on the unlicensed carrier; and the time-domain and/or frequency-domain resource for sending of the preamble on the unlicensed carrier is determined according to the implementation result of implementation of the LBT mechanism and/or the CCA detection. When the time-domain and/or frequency-domain resource for sending of the preamble is determined according to the implementation result, descriptions will be made for various scenarios below respectively.

The operation that the time-domain and/or frequency-domain resource for sending of the preamble on the unlicensed carrier is determined according to the implementation result of implementation of the LBT mechanism and/or the CCA detection includes at least one of the following conditions.

Under the condition that the implementation result is that the LBT mechanism and/or the CCA detection succeeds before a first predetermined time-domain and/or frequency-domain resource on the unlicensed carrier, the first predetermined time-domain and/or frequency-domain resource is determined as the time-domain and/or frequency-domain resource for sending of the preamble, and the UE sends the preamble on the first predetermined time-domain and/or frequency-domain resource. It is to be noted that the first predetermined time-domain and/or frequency-domain resource may include K subframes or N OFDM symbols, wherein K and N are integers more than or equal to 1, and are preferably 1, 2 and 3.

Under the condition that the implementation result is that the LBT mechanism and/or the CCA detection fails before the first predetermined time-domain and/or frequency-domain resource on the unlicensed carrier, the LBT mechanism and/or the CCA detection are/is continued to be implemented on the unlicensed carrier, under the condition that the LBT mechanism and/or the CCA detection succeeds on the unlicensed carrier, an adjacent time-domain and/or frequency-domain resource after a moment when the LBT mechanism and/or the CCA detection succeeds is determined as the time-domain and/or frequency-domain resource for sending of the preamble, and then the UE sends the preamble on the determined adjacent time-domain and/or frequency-domain resource, wherein the adjacent time-domain and/or frequency-domain resource after the success moment may include one or more subframes or one or more symbols after the success moment. Preferably, the time-domain and/or frequency-domain resource for sending of the preamble is determined to be a first time-domain and/or frequency-domain resource after the moment when the LBT mechanism and/or the CCA detection succeeds.

Under the condition that the implementation result is that the LBT mechanism and/or the CCA detection fails before the first predetermined time-domain and/or frequency-domain resource on the unlicensed carrier, the LBT mechanism and/or the CCA detection are/is implemented before a second predetermined time-domain and/or frequency-domain resource after the first predetermined time-domain and/or frequency-domain resource on the unlicensed carrier, and under the condition that the LBT mechanism and/or the CCA detection succeeds before the second predetermined time-domain and/or frequency-domain resource, the second predetermined time-domain and/or frequency-domain resource is determined as the time-domain and/or frequency-domain resource for sending of the preamble. That is, when the LBT mechanism and/or the CCA detection fails before the first predetermined time-domain and/or frequency-domain resource on the unlicensed carrier, contention for the unlicensed carrier is re-implemented on the second corresponding time-domain and/or frequency-domain resource. That is, after an implementation failure, the LBT mechanism and/or the CCA detection are/is continued to be implemented before a subsequent time-domain and/or frequency-domain resource to try to contend for the unlicensed carrier on the subsequent time-domain and/or frequency-domain resource, and when the unlicensed carrier is obtained by contention, the preamble is sent on a first time-domain and/or frequency-domain resource after a successful implementation moment or the preamble is sent on the time-domain and/or frequency-domain resource after successful implementation.

Corresponding to the abovementioned manner of sending the preamble by sending the Msg, when the UE fails to implement the LBT mechanism and/or the CCA detection before the first predetermined time-domain and/or frequency-domain resource, namely failing to obtain the unlicensed carrier by contention, the UE continues implementing the LBT mechanism and/or the CCA detection and sends the Msg on the first time-domain and/or frequency-domain resource after the moment when the LBT mechanism and/or the CCA detection succeeds; or, the UE implements the LBT mechanism and/or CCA before the next first time-domain and/or frequency-domain resource (i.e., the second predetermined time-domain and/or frequency-domain resource), and if the LBT mechanism and/or CCA succeed/succeeds, sends the Msg on the present first time-domain and/or frequency-domain resource. On the contrary, when the LBT mechanism and/or CCA fail/fails, the UE stops sending the Msg on the first time-domain and/or frequency-domain resource, and must wait for continuing trying to implement the LBT mechanism and/or CCA before a moment of the next first time-domain and/or frequency-domain resource.

It is to be pointed out that there may be one or more adjacent time-domain and/or frequency-domain resources, second predetermined time-domain and/or frequency-domain resources and third time-domain and/or frequency-domain resources and, when there are multiple, the multiple adjacent time-domain and/or frequency-domain resources or the multiple second predetermined time-domain and/or frequency-domain resources or the multiple third predetermined time-domain and/or frequency-domain resources may be continuous or discrete in a time domain, wherein that the adjacent time-domain and/or frequency-domain resources, the second predetermined time-domain and/or frequency-domain resources and the third time-domain and/or frequency-domain resources include time-domain and/or frequency-domain resources which are discrete in the time domain may include one of: time-domain and/or frequency-domain resources at the same interval and with different resource block sizes in the time domain; time-domain and/or frequency-domain resources at the same interval in the time domain and with the same resource block size; time-domain and/or frequency-domain resources at different intervals in the time domain and with different resource block sizes; and time-domain and/or frequency-domain resources at different intervals in the time domain and with the same resource block size.

There may be many manners for determining at least one of the first predetermined time-domain and/or frequency-domain resource, the second predetermined time-domain and/or frequency-domain resource, the third predetermined time-domain and/or frequency-domain resource and a starting location or duration or ending location of LBT/CCA or a CP or GT or a PRACH resource. For example, at least one of the first predetermined time-domain and/or frequency-domain resource, the second predetermined time-domain and/or frequency-domain resource, the third predetermined time-domain and/or frequency-domain resource and the starting location or duration or ending location of LBT/CCA or the CP or the GT or the PRACH resource may be determined in at least one of the following manners: a determination manner of allocation to the UE by the eNB; a determination manner of notification through physical-layer signaling (for example, DCI); a determination manner of notification through high-layer signaling (for example, RRC); a determination manner of negotiation between the eNB and the UE; and a determination manner of pre-configuration for the UE by a system.

Under the condition that the implementation result is that the LBT mechanism and/or the CCA detection fails before the first predetermined time-domain and/or frequency-domain resource on the unlicensed carrier, in the embodiment, a preferred processing manner is provided. For example, the LBT mechanism and/or the CCA detection are/is implemented in a time window for sending of the preamble on the unlicensed carrier, and under the condition that the LBT mechanism and/or the CCA detection are successfully implemented before a third predetermined time-domain and/or frequency-domain resource in the time window, the third predetermined time-domain and/or frequency-domain resource is determined as the time-domain and/or frequency-domain resource for sending of the preamble.

That is, under the condition that detection is failed to be implemented, the LBT mechanism and/or the CCA detection are/is tried to be implemented before a candidate time-domain and/or frequency-domain resource (i.e., the third time-domain and/or frequency-domain resource) in the time window, and under the condition of successful implementation before the candidate time-domain and/or frequency-domain resource, the candidate time-domain and/or frequency-domain resource is determined as the time-domain and/or frequency-domain resource for sending of the preamble. It is to be noted that the time window may be at multiple time locations configurable to implement the LBT mechanism and/or the CCA detection, and for example, may be located before and after the first predetermined time-domain and/or frequency-domain resource, or directly includes the first predetermined time-domain and/or frequency-domain resource. Preferably, it may be located after the first predetermined time-domain and/or frequency-domain resource. Preferably, the third predetermined time-domain and/or frequency-domain resource in the time window may be determined through the following parameters: a first offset configured to identify an offset distance between the first predetermined time-domain and/or frequency-domain resource and a starting point of the time window; a second offset configured to identify an offset distance between the third predetermined time-domain and/or frequency-domain resource for sending of the preamble in the time window and the starting point of the time window; a size of the third predetermined time-domain and/or frequency-domain resource; a number of the third predetermined time-domain and/or frequency-domain resources; a window length of the time window; and an interval between the third predetermined time-domain and/or frequency-domain resources.

In addition, there may also be one or more third predetermined time-domain and/or frequency-domain resources in the time window, and under the condition that there are multiple third predetermined time-domain and/or frequency-domain resources, the third predetermined time-domain and/or frequency-domain resources may be continuous or discrete in the time domain. Under the condition that the third predetermined time-domain and/or frequency-domain resources are discrete in the time domain, multiple forms may be adopted. For example, at least one of the following forms may be adopted: time-domain resources at the same interval and with different resource block sizes in the time domain; time-domain resources at the same interval in the time domain and with the same resource block size; time-domain resources at different intervals in the time domain and with different resource block sizes; and time-domain resources at different intervals in the time domain and with the same resource block size.

Corresponding to the abovementioned manner of sending the preamble by sending the Msg, the success rate of sending the preamble in the Msg may be improved or increased according to one of the following manners: a first manner: shortening an interval/period of the time-domain resource for sending of the preamble; and a second manner: designing the preamble sending time window.

The preamble sending time window may be located in multiple time regions, and for example, may be located any one of the following time regions: the time window is located before the first predetermined time-domain and/or frequency-domain resource; the time window is located after the first predetermined time-domain and/or frequency-domain resource; the time window includes the first predetermined time-domain and/or frequency-domain resource; the time window is located before a time-domain and/or frequency-domain location where the LBT mechanism and/or the CCA detection are/is implemented; the time window is located after the time-domain and/or frequency-domain location where the LBT mechanism and/or the CCA detection are/is implemented; and the time window includes the time-domain and/or frequency-domain location where the LBT mechanism and/or the CCA detection are/is implemented. Preferably, the time window is located after the first predetermined time-domain and/or frequency-domain resource.

In addition, a time-domain and/or frequency-domain resource configured to complementally send the preamble in the preamble sending time window and the first predetermined time-domain and/or frequency-domain resource may be continuous in the time domain and may also be discontinuous in the time domain.

When the time window is located after the first predetermined time-domain and/or frequency-domain resource and the time-domain and/or frequency-domain resource configured to complementally send the preamble in the time window is continuous, the method includes the following processing: if the unlicensed carrier is not obtained by contention before the first predetermined time-domain and/or frequency-domain resource, the UE may try to continue implementing the LBT mechanism and/or the CCA detection before a first time-domain and/or frequency-domain resource configured to complementally send the preamble in the time window. If the right of use of the unlicensed carrier is successfully acquired by contention, the UE sends the preamble on the present time-domain and/or frequency-domain resource configured to complementally send the preamble. If the right of use of the unlicensed carrier is not acquired by contention, the UE stops sending on the present time-domain and/or frequency-domain resource configured to complementally send the preamble but continues trying to continue implementing the LBT mechanism and/or the CCA detection before a next time-domain and/or frequency-domain resource configured to complementally send the preamble in the time window. If the LBT mechanism and/or the CCA detection succeeds, the preamble is sent on the present time-domain and/or frequency-domain resource configured to complementally send the preamble. On the contrary, if the LBT mechanism and/or the CCA detection fails, implementation of the LBT mechanism and/or the CCA detection is continued to be tried on the time-domain and/or frequency-domain resource configured to complementally send the preamble in the time window until the time window is ended. If failing to contend for the unlicensed carrier all the time in the present time window, the UE tries to send the preamble on a next first predetermined time-domain and/or frequency-domain resource (for example, the second predetermined time-domain and/or frequency-domain resource) and time window.

When the time window is located after the first predetermined time-domain and/or frequency-domain resource and the time-domain and/or frequency-domain resource configured to complementally send the preamble in the time window is discontinuous, the method includes the following processing: if the UE fails to contend for the unlicensed carrier on the first predetermined time-domain and/or frequency-domain resource, the UE stops sending the preamble on the present first predetermined time-domain and/or frequency-domain resource but tries to send the preamble on a first time-domain and/or frequency-domain resource configured to complementally send the preamble in the time window. If the first time-domain and/or frequency-domain resource configured to complementally send the preamble is obtained by contention, the preamble is sent on the time-domain and/or frequency-domain resource, and a location of the frequency-domain resource may be kept changed or changed relative to the first predetermined time-domain and/or frequency-domain resource. On the contrary, if the first time-domain and/or frequency-domain resource configured to complementally send the preamble is not obtained by contention, the preamble is stopped to be sent on the first time-domain and/or frequency-domain resource configured to complementally send the preamble. The LBT mechanism and/or the CCA detection are/is continued to be implemented on the next time-domain and/or frequency-domain resource configured to complementally send the preamble in the time window, and the preamble is tried to be sent until the time window is ended. If failing to contend for the unlicensed carrier all the time in the time window, the UE may only wait for the next configured first predetermined time-domain resource (for example, the second predetermined time-domain and/or frequency-domain resource) and time window to try sending.

If the UE fails to contend for the unlicensed carrier on the first predetermined time-domain resource and a location of a first PRACH time-domain resource configured to complementally send the preamble in the time window is not reached, sending of the preamble is continued to be tried on the first time-domain and/or frequency-domain resource in the time window, and if the LBT mechanism and/or the CCA detection succeeds, the preamble is sent at a present time point. Preferably, a new opportunity for sending the preamble is provided on a first time-domain resource after the configured first predetermined time-domain resource.

In addition, under the condition that the unlicensed carrier is still not obtained by contention in the preamble sending window, an additional time-domain and/or frequency-domain resource for sending of the preamble may be added after the time window.

Adding the methods for increasing a preamble sending success probability in the abovementioned implementation modes of determining the time-domain and/or frequency-domain resource for sending of the preamble based on an uncertainty about an LBT result optimizes a flow of a contention-based random access manner, thereby reducing an UL transmission delay to a certain extent.

In each abovementioned process of determining the time-domain and/or frequency-domain resource for sending of the preamble, there may be many probabilities for the location where the LBT mechanism and/or the CCA detection are/is implemented. For example, there are substantially two types, i.e., a limited location where the LBT mechanism and/or the CCA detection are/is implemented, or, an unlimited implementation location where the LBT mechanism and/or the CCA detection are/is implemented. For example, the limited implementation location is, for example, a region before the first predetermined time-domain and/or frequency-domain resource, and the unlimited implementation location includes any location where the UE may implement the LBT mechanism and/or the CCA detection. The UE determines to send the preamble according to the success moment when the LBT mechanism and/or the CCA detection succeeds. Preferably, the time-domain and/or frequency-domain resource for sending of the preamble is determined to be the first time-domain and/or frequency-domain resource after the success moment when the LBT mechanism and/or the CCA detection succeeds.

A region before the first predetermined time-domain and/or frequency-domain resource or before the second predetermined time-domain and/or frequency-domain resource or before the third predetermined time-domain and/or frequency-domain resource may also include multiple types. For example, the region before the first predetermined time-domain and/or frequency-domain resource or before the second predetermined time-domain and/or frequency-domain resource or before the third predetermined time-domain and/or frequency-domain resource may include one of: a special subframe before the first predetermined time-domain and/or frequency-domain resource or before the second predetermined time-domain and/or frequency-domain resource or before the third predetermined time-domain and/or frequency-domain resource; an UL subframe before the first predetermined time-domain and/or frequency-domain resource or before the second predetermined time-domain and/or frequency-domain resource or before the third predetermined time-domain and/or frequency-domain resource; and a preamble subframe before the first predetermined time-domain and/or frequency-domain resource or before the second predetermined time-domain and/or frequency-domain resource or before the third predetermined time-domain and/or frequency-domain resource. It is to be noted that the region before the first predetermined time-domain and/or frequency-domain resource or before the second predetermined time-domain and/or frequency-domain resource or before the third predetermined time-domain and/or frequency-domain resource is a relatively limited location where the LBT mechanism and/or the CCA detection are/is implemented. However, the location where the LBT mechanism and/or the CCA detection are/is implemented may also be unlimited, and for example, the location where the LBT mechanism and/or the CCA detection are/is implemented may be any location where the LBT mechanism and/or the CCA detection may be implemented. Therefore, the corresponding time-domain and/or frequency-domain resource for sending of the preamble is also determined by the location where the LBT mechanism and/or the CCA detection are/is implemented and the success moment of successful implementation. Descriptions will be made below for each abovementioned relatively limited type.

Under the condition that the region before the first predetermined time-domain and/or frequency-domain resource or before the second predetermined time-domain and/or frequency-domain resource or before the third predetermined time-domain and/or frequency-domain resource is the special subframe, a region for implementation of the LBT mechanism and/or the CCA detection includes at least one of the following conditions: under the condition that the region before the first predetermined time-domain and/or frequency-domain resource or before the second predetermined time-domain and/or frequency-domain resource or before the third predetermined time-domain and/or frequency-domain resource is an UpPTS of the special subframe, the region for implementation of the LBT mechanism and/or the CCA detection includes at least one of: part or all of the UpPTS; part or all of a GP, and/or the UpPTS, part or all of a DwPTS, and/or the GP, and/or the UpPTS; last k symbols in a downlink subframe, and/or the DwPTS, and/or the GP, and/or the UpPTS; part or all of the UpPTS and/or part or all of CP time; part or all of the GP, and/or the UpPTS, and/or part or all of the CP time; part or all of the DwPTS, and/or the GP, and/or the UpPTS, and/or part or all of the CP time; and the last k symbols in the downlink subframe, and/or the DwPTS, and/or the GP, and/or the UpPTS, and/or part or all of the CP time; and under the condition that the region before the first predetermined time-domain and/or frequency-domain resource or before the second predetermined time-domain and/or frequency-domain resource or before the third predetermined time-domain and/or frequency-domain resource is the GP of the special subframe, the region for implementation of the LBT mechanism and/or the CCA detection includes at least one of: part or all of GP time; part or all of the GP and/or part or all of the CP time; part or all of the DwPTS, and/or the GP, and/or part or all of the CP time; and the last k symbols in the downlink subframe, and/or the DwPTS, and/or the GP, and/or part or all of the CP time.

Under the condition that the region before the first predetermined time-domain and/or frequency-domain resource or before the second predetermined time-domain and/or frequency-domain resource or before the third predetermined time-domain and/or frequency-domain resource is the UL subframe, the region for implementation of the LBT mechanism and/or the CCA detection includes at least one of the following conditions: under the condition that the region before the first predetermined time-domain and/or frequency-domain resource or before the second predetermined time-domain and/or frequency-domain resource or before the third predetermined time-domain and/or frequency-domain resource is the UL subframe and a PRACH exists in a previous subframe of the first predetermined time-domain and/or frequency-domain resource or in the second predetermined time-domain and/or frequency-domain resource or in the third predetermined time-domain and/or frequency-domain resource, the region for implementation of the LBT mechanism and/or the CCA detection includes at least one of: part or all of GT of the PRACH of the previous subframe, and part or all of the GT of the PRACH of the previous subframe and/or part or all of CP time of a present PRACH subframe where the first predetermined time-domain and/or frequency-domain resource or the second predetermined time-domain and/or frequency-domain resource or the third predetermined time-domain and/or frequency-domain resource is located; and under the condition that the region before the first predetermined time-domain and/or frequency-domain resource or before the second predetermined time-domain and/or frequency-domain resource or before the third predetermined time-domain and/or frequency-domain resource is the UL subframe and there is no PRACH in the previous subframe of the first predetermined time-domain and/or frequency-domain resource or of the second predetermined time-domain and/or frequency-domain resource or of the third predetermined time-domain and/or frequency-domain resource, the region for implementation of the LBT mechanism and/or the CCA detection includes at least one of: last k OFDM symbols of the previous subframe, and the last k OFDM symbols of the previous subframe and/or part or all of the CP time of the present PRACH subframe where the first predetermined time-domain and/or frequency-domain resource or the second predetermined time-domain and/or frequency-domain resource or the third predetermined time-domain and/or frequency-domain resource is located.

Corresponding to the abovementioned manner of sending the preamble by sending the Msg, the time-domain and/or frequency-domain resource for sending of the preamble is determined by the location where the LBT mechanism and/or the CCA detection are/is implemented and/or the success moment of successful implementation. Descriptions will be made below with examples.

For example, that the location of the time-domain and/or frequency-domain resource for sending of the preamble is determined by the location where the LBT mechanism and/or the CCA detection are/is implemented and/or the success moment includes that: the PRACH time-domain resource for sending of the preamble (i.e., the time-domain and/or frequency-domain resource for sending of the preamble) is determined according to the location where the LBT mechanism and/or the CCA detection are/is implemented. If the time-domain and/or frequency-domain location where the LBT mechanism and/or the CCA detection are/is implemented is determined, the UE contends for the right of use of the unlicensed carrier at the possible time-domain and/or frequency-domain location where the LBT mechanism and/or the CCA detection are/is implemented. If the right of use of the unlicensed carrier is acquired by contention, the preamble is sent on k complete OFDM symbols or one or more subframes after the LBT mechanism and/or the CCA detection succeeds. If the success moment when the LBT mechanism and/or the CCA detection succeeds does not reach a symbol or subframe boundary, a reservation signal or an occupancy signal is required to be sent. Sending of the preamble is determined by the location where the LBT mechanism and/or the CCA detection are/is implemented.

For another example, that the location of the time-domain and/or frequency-domain resource for sending of the preamble is determined by the location where the LBT mechanism and/or the CCA detection are/is implemented and/or the success moment includes that: the location where the LBT mechanism and/or the CCA detection are/is implemented is not limited, and the time-domain and/or frequency-domain resource for sending of the preamble is determined. That is, the UE may start implementing an LBT process at any moment and send the preamble on the k complete OFDM symbols or one or more subframes after the moment when the LBT mechanism and/or the CCA detection succeeds. If the moment when the LBT mechanism and/or the CCA detection succeeds does not reach the symbol or subframe boundary, the reservation signal or the occupancy signal is required to be sent. Sending of the preamble is determined by a moment when the LBT mechanism and/or the CCA detection are/is started to be implemented and the success moment, and is unrelated or related to the configured PRACH or available PRACH resource.

For different supported formats, descriptions will be made below respectively.

For formats 0~3, if the UpPTS is before the first predetermined time-domain and/or frequency-domain resource, the location where the LBT mechanism and/or the CCA detection are/is implemented may include one of: part or all of the UpPTS; part or all of the UpPTS and part or all of the CP time; part or all of the GP and the UpPTS and part or all of the CP time; part or all of the DwPTS and the GP and the UpPTS and part or all of the CP time; and the last k symbols in the downlink subframe and the DwPTS and the GP and the UpPTS and part or all of the CP time.

For the formats 0~3, if a PRACH subframe is before the first predetermined time-domain and/or frequency-domain resource, the location where the LBT mechanism and/or the CCA detection are/is implemented includes one of: part or all of GT in the PRACH subframe; and part or all of the GT and part or all of CP time in the first time-domain and/or frequency-domain resource.

Wherein, a starting point for implementation of the LBT mechanism and/or the CCA detection may be a starting point of the GT or a certain location in the GT.

For the formats 0~3, if a normal subframe is before the first predetermined time-domain and/or frequency-domain resource, the location where the LBT mechanism and/or the CCA detection are/is implemented may include one of: last k OFDM symbols in the normal subframe; and k OFDM symbols in the normal subframe and part or all of a CP in the first time-domain and/or frequency-domain resource.

For a format 4, the location where the LBT mechanism and/or the CCA detection are/is implemented includes one of: part or all of GP time; part or all of the GP and part or all of CP time; and part or all of the DwPTS and the GP and part or all of the CP time.

After the UE sends the preamble through the Msg, the UE monitors an RAR sent by the eNB, including that: the UE descrambles a Cyclic Redundancy Check (CRC) of DCI of the RAR according to an RA-RNTI which is preset or corresponds to the preamble, and receives the RAR. The RAR may include a TC-RNTI and/or an UL grant and/or a TA value.

When the UE monitors the RAR sent by the eNB, the following operation is further included: the UE adopts a TC-RNTI which is predefined or notified by the eNB to descramble a PDCCH to acquire a C-RNTI or a UE ID. After the UE monitors the RAR sent by the eNB, a Msg3 is sent according to the UL grant allocated for it or the time-domain and/or frequency-domain resource which is predefined or predetermined by the eNB and the UE, wherein the Msg3 may be part or all of the UE ID, the C-RNTI, an RRC request and an SR.

Since the unlicensed carrier is used based on the implementation result of implementation of the LBT mechanism/CCA detection, there exists certain uncertainty. Therefore, once the right of use of the unlicensed carrier is acquired, some useful information is sent in advance as much as possible. When the preamble is sent on the determined time-domain and/or frequency-domain resource, a fourth predetermined time-domain and/or frequency-domain resource for sending of part or all of a content of the Msg3 on the unlicensed carrier is determined according to the determined time-domain and/or frequency-domain resource; and the preamble is sent on the determined time-domain and/or frequency-domain resource, and part or all of the content of the Msg3 is sent on the determined fourth time-domain and/or frequency-domain resource.

Wherein, the fourth predetermined time-domain and/or frequency-domain resource, includes one of: a time-domain and/or frequency-domain resource which is the same in the time domain as the time-domain and/or frequency-domain resource and is offset by a third offset in a frequency domain relative to the time-domain and/or frequency-domain resource; and a time-domain and/or frequency-domain resource which is offset by a fourth offset in the time domain relative to the time-domain and/or frequency-domain resource and is the same in the frequency domain as the time-domain and/or frequency-domain resource.

FIG. 2 is a flowchart of a first random access method according to an embodiment of the disclosure. As shown in FIG. 2, the flow includes the following operations.

In S202, a right of use of an unlicensed carrier is acquired.

In S204, random access processing is performed according to the unlicensed carrier of which the right of use is acquired.

By the operations, random access processing is performed on the unlicensed carrier of which the right of use is acquired, so that the problem of incapability of implementing a random access process on the unlicensed carrier in the related art is solved, the blank of performing random access on the unlicensed carrier in the related art is supplied, an effect of successfully performing random access on the unlicensed carrier is further achieved, and a user experience is effectively improved.

There are many manners for performing random access processing according to the unlicensed carrier. For example, a first manner may be adopted: a Msg_1 may be sent to an eNB on the unlicensed carrier, wherein the Msg_1 includes a Msg1 containing a preamble for random access and/or a partial Msg3 containing part of a content of the Msg3, wherein part of the content of the Msg3 may include at least one of: a UE ID, a C-RNTI, an RRC request, an SR and a BSR; a first response message sent by the eNB according to the Msg_1 is received; the remaining Msg3 containing the remaining content, except part of the content, of the Msg3 is sent to the eNB according to the first response message; a Msg4 sent by the eNB according to the remaining Msg3 is received; and whether random access on the unlicensed carrier succeeds is determined according to the Msg4. Of course, a second manner may also be adopted: a Msg_M is sent to the eNB on the unlicensed carrier, wherein the Msg_M includes the Msg1 containing the preamble for random access and/or the Msg3 containing all of the content of the Msg3; a second response message sent by the eNB according to the Msg_M is received; and whether random access on the unlicensed carrier succeeds is determined according to the second response message.

It is to be noted that a time-domain and/or frequency-domain resource for sending of the Msg1 may be the same as or different from a time-domain and/or frequency-domain resource for sending of the partial Msg3 and the time-domain and/or frequency-domain resource for sending of the Msg1 may also be the same as or different from a time-domain and/or frequency-domain resource for sending of the Msg3. Multiple forms may be adopted for the different time-domain and/or frequency-domain resources. For example, they may be time-domain and/or frequency-domain resources which are the same in a time domain but different in a frequency domain, may be time-domain and/or frequency-domain resources which are different in the time domain but the same in the frequency domain, and may also be time-domain and/or frequency-domain resources which are different in the time domain and also different in the frequency domain.

Preferably, the operation that the partial Msg3 and/or the Msg3 are/is sent further includes that: a transmission channel and/or control channel for sending of the partial Msg3 and/or the Msg3 is scrambled using a first TC-RNTI, wherein the TC-RNTI is acquired through at least one of the following corresponding relationships: a corresponding relationship between a TC-RNTI and a preamble, a corresponding relationship between a TC-RNTI and a UE ID and a corresponding relationship between a TC-RNTI and each of a preamble and a UE ID; or,

the TC-RNTI is acquired in at least one of the following manners: an acquisition manner of predetermination between the eNB and UE, an acquisition manner of notifying or configuring the UE by the eNB, an acquisition manner of notification through high-layer signaling, an acquisition manner of notification through physical-layer signaling and an acquisition manner of notification through MAC-layer signaling.

The first response message may contain at least one of the following information: a second TC-RNTI, UL grant information, a preamble index, the C-RNTI and TA. The operation that the remaining Msg3 is sent further includes that: a transmission channel and/or control channel for sending of the remaining Msg3 is scrambled using the first TC-RNTI or the second TC-RNTI.

After sending the Msg3 on the UL grant allocated for it, the UE receives a Msg4 sent by the eNB, wherein a CRC in DCI in the Msg4 is scrambled by adopting a TC-RNTI allocated for the UE or predetermined before. After the UE receives the Msg4 sent by the eNB, the UE sends an indication signal configured to notify the eNB of successful access of the UE to the eNB, or, re-initiates a random access indication message.

It is to be noted that each abovementioned method for determining the time-domain and/or frequency-domain resource for sending of the preamble may be independently adopted to determine the time-domain and/or frequency-domain resource for sending of the preamble and may also be combined for determination. For example,

if failing to implement the LBT mechanism and/or the CCA detection before the first predetermined time-domain and/or frequency-domain resource, the UE adopts sending the preamble on a present time-domain and/or frequency-domain resource, continues trying to contend for the unlicensed carrier before the third predetermined time-domain and/or frequency-domain resource in the time window, and if the LBT mechanism and/or the CCA detection succeeds, sends the preamble on the time-domain and/or frequency-domain resource. If the LBT mechanism and/or the CCA detection fails, contention for the unlicensed carrier is continued to be sequentially tried before a candidate time-domain and/or frequency-domain resource in the time window, and when the LBT mechanism and/or the CCA detection succeeds before any one of the third predetermined time-domain and/or frequency-domain resource, the preamble is sent on the time-domain and/or frequency-domain resource. On the contrary, if the unlicensed carrier is not obtained by contention all the time on the candidate time-domain or frequency-domain resource in the configured time window, the UE stops sending the preamble and may only wait for a next configured time-domain and/or frequency-domain resource to contend for a channel again.

On the eNB side

FIG. 3 is a flowchart of a method for receiving a preamble according to an embodiment of the disclosure. As shown in FIG. 3, the flow includes the following operations.

In S302, a preamble sent by UE on a time-domain and/or frequency-domain resource is received, wherein, corresponding to the abovementioned manner of sending a Msg on the time-domain and/or frequency-domain resource, the time-domain and/or frequency-domain resource includes part of the time-domain and/or frequency-domain resource for sending of the preamble and another part of the resource for sending of other information (for example, including at least one of a UE ID, a C-RNTI and an SR) except the preamble.

In S304, random access processing for the UE is implemented according to the received preamble.

By the operations, the preamble is received on the determined time-domain and/or frequency-domain resource on an unlicensed carrier, so that the problem of incapability of receiving the preamble on the unlicensed carrier for a random access process in the related art is solved, the blank of receiving the preamble on the unlicensed carrier for random access in the related art is supplied, an effect of successfully receiving the preamble on the unlicensed carrier for random access is further achieved, and a user experience is effectively improved.

When the preamble sent by the UE on the time-domain and/or frequency-domain resource on the unlicensed carrier is received, multiple processing manners may be adopted. For example, for increasing a success rate of sending the preamble, the time-domain and/or frequency-domain resource for sending of the preamble may be obtained by contention according to an LBT mechanism and/or CCA detection implemented by the UE on the unlicensed carrier to send the preamble. For another example, the preamble sent by the UE on the time-domain and/or frequency-domain resource on the unlicensed carrier through an SCS may also be directly received. That is, when the UE does not implement the LBT mechanism and/or the CCA detection to contend for the unlicensed carrier, the preamble may directly be sent through the SCS. Although it may not be ensured that the preamble is successfully sent, an advantage of accelerating the flow is achieved.

For effectively utilizing the unlicensed carrier obtained by contention, when random access processing for the UE is implemented according to the received preamble, part or all of a content of a Msg3 may be received on a fourth predetermined time-domain and/or frequency-domain resource on the unlicensed carrier, wherein the fourth predetermined time-domain and/or frequency-domain resource includes at least one of: a time-domain and/or frequency-domain resource which is the same in a time domain as the time-domain and/or frequency-domain resource and is offset by a third offset in a frequency domain relative to the time-domain and/or frequency-domain resource, and a time-domain and/or frequency-domain resource which is offset by a fourth offset in the time domain relative to the time-domain and/or frequency-domain resource and is the same in the frequency domain as the time-domain and/or frequency-domain resource.

In addition, before the operation that the preamble sent by the UE on the time-domain and/or frequency-domain resource is received, the method further includes that: an instruction for determination of the time-domain and/or frequency-domain resource and/or the fourth time-domain and/or frequency-domain resource and/or the preamble is sent to the UE, wherein the instruction may include physical-layer DCI and may also be high-layer RRC signaling. The DCI or the RRC signaling may include at least one of the following information: a TC-RNTI, a preamble ID, the time-domain and/or frequency-domain resource for sending of the preamble, or a time-domain and/or frequency-domain resource for sending of part or all of the Msg3.

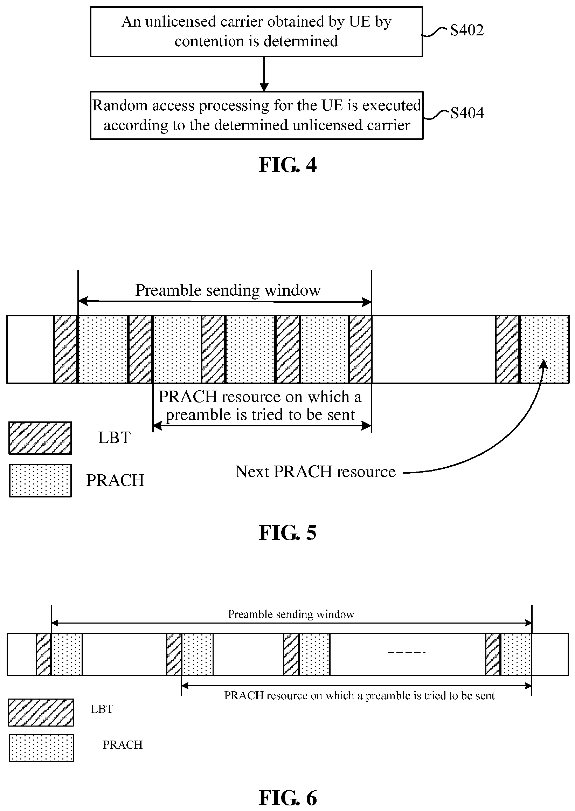

FIG. 4 is a flowchart of a second random access method according to an embodiment of the disclosure. As shown in FIG. 4, the flow includes the following operations.

In S402, an unlicensed carrier obtained by UE by contention is determined.

In S404, random access processing for the UE is implemented according to the determined unlicensed carrier.

By the operations, random access processing for the UE is implemented on the unlicensed carrier obtained by the UE by contention, so that the problem of incapability of implementing a random access process on the unlicensed carrier in the related art is solved, the blank of performing random access on the unlicensed carrier in the related art is supplied, an effect of successfully performing random access on the unlicensed carrier is further achieved, and a user experience is effectively improved.

Corresponding to the random access flow of the UE, the operation that an eNB implements random access processing for the UE according to the determined unlicensed carrier includes that: a Msg_1 sent by the UE is received on the unlicensed carrier, the Msg_1 including a Msg1 containing a preamble for random access and/or a partial Msg3 containing part of a content of the Msg3, a first response message is sent to the UE based on the Msg_1, the remaining Msg3 sent by the UE according to the first response message and containing the remaining content, except part of the content, of the Msg3 is received and a Msg4 is sent to the UE according to the remaining Msg3, wherein the Msg4 is configured for the UE to determine whether random access on the unlicensed carrier succeeds; or, a Msg_M sent by the UE is received on the unlicensed carrier, the Msg_M including the Msg1 containing the preamble for random access and/or the Msg3 containing all of the content of the Msg3, and a second response message is sent to the UE according to the Msg_M, wherein the second response message is configured for the UE to determine whether random access on the unlicensed carrier succeeds.

It is to be noted that the first response message may be sent to the UE based on the Msg_1 in multiple manners. For example, the first response message may directly be sent to the UE on a licensed carrier; and an LBT mechanism and/or CCA detection may also be implemented on the unlicensed carrier and then the first response message is sent on a time-domain and/or frequency-domain resource obtained by contention after the LBT mechanism and/or the CCA detection succeeds.

After the Msg sent by the UE is received, an RAR corresponding to the preamble may be sent to the UE; or, response information of the Msg1 and part or all of the Msg3 is sent, wherein the response information of the Msg1 and part or all of the Msg3 includes at least one of: a TC-RNTI, an UL grant, TA, a preamble index, a C-RNTI and a UE ID; and the RAR may include at least one of: the TC-RNTI, the UL grant, the TA and the preamble index.

Subsequent random access further includes the following processing: after the RAR corresponding to the preamble is sent, the Msg3 sent by the corresponding UE according to the UL grant allocated for it is received; or, after the response information of the Msg1 and the partial Msg3 is sent to the UE, the remaining or all of the Msg3 sent by the corresponding UE according to the UL grant allocated for it is received; or, after the remaining or all of the Msg3 sent by the corresponding UE according to the UL grant allocated for it is received, the Msg4 is sent to the UE. It is to be pointed out that, corresponding to scrambling processing on a UE side, the eNB is also required to implement a corresponding descrambling operation. For example, after the partial Msg3 and/or the Msg3 are/is received, the method further includes that: the partial Msg3 and/or the Msg3 is descrambled using a first TC-RNTI. Under the condition that the first response message contains a second TC-RNTI and the remaining Msg3 is received, the received remaining Msg3 is descrambled using the first TC-RNTI or the second TC-RNTI.

Complete preferred embodiments of the disclosure will be described below in combination with the abovementioned embodiments and preferred implementation modes.

First preferred embodiment

In the preferred embodiment, a contention-free random access method is provided. The example is applied to conditions of a handover process, arrival of downlink data, UE location and the like, and is also applied to an (Enhanced) (e) Carrier Aggregation (CA) or Dual Connectivity (DC) scenario. Specific operations are as follows.

In a first operation, an eNB allocates a proprietary ID, i.e., a C-RNTI, for UE.

In a second operation, the eNB notifies the UE to perform random access and complete UL synchronization.

The eNB notifies the subordinate UE to perform random access and complete UL synchronization, and notification signaling may be physical-layer signaling and may also be high-layer signaling.

The physical-layer signaling may be DCI. A CRC in the DCI is scrambled or masked by adopting the C-RNTI of the UE.

If the DCI is transmitted through a licensed carrier, the eNB directly notifies the UE to perform random access through the DCI in a PDCCH.

If the DCI is transmitted through an unlicensed carrier, the eNB, before transmitting the DCI, is required to implement LBT or CCA detection at first. If a channel state is detected to be clear, it is determined that a right of use of the unlicensed carrier is acquired and the DCI may be sent on the unlicensed carrier. On the contrary, if the unlicensed carrier is failed to be obtained by contention, the DCI may not be sent on the unlicensed carrier. Optionally, for avoiding the condition that the eNB fails to implement LBT all the time and thus may not access the unlicensed carrier, the DCI may be sent on the licensed carrier.

Here, an LBT mechanism/CCA required to be implemented for downlink transmission of transmission equipment (for example, the eNB or the UE) on the unlicensed carrier will be briefly described. For example, the LBT mechanism includes one of: LBT Cat4, or, LBT Cat2, or enhanced LBT Cat2, or, a direct Extended CCA (eCCA) process. An LBT Cat4 mechanism is adopted for downlink transmission on the unlicensed carrier, a contention window is relatively large, for example, 7,15,31,63,127,255,511,1023, and the eNB, for sending random access triggering signaling PDCCH order on the unlicensed carrier, may implement LBT Cat4 with a small contention window (for example, the contention window may be 1,2,3,4,5,6,7,8,9,10,11,12 or a simplified LBT mechanism (for example, LBT Cat2).

Wherein, an LBT Cat4 (i.e., defer period+eCCA process) flow is substantially as follows:

the transmission equipment (for example, the eNB or the UE), after detecting that the channel is clear in a defer period, may perform downlink transmission; and/or,

the transmission equipment (for example, the eNB or the UE), after detecting that the channel is clear in the defer period, may perform downlink or UL transmission when a random backoff value N is progressively decreased to 0 according to the following operations.

Operation 1: an initial random backoff value N is set.

Wherein, the random backoff value N may be a number randomly generated by uniform distribution or binomial distribution between [0, CWp], or, a value of N may also be indicated by the eNB, or the value of N is predefined. CWp is a random number between CWmin and CWmax, wherein CWmin is a positive integer not smaller than 1, and CWmax is maximally 1,024. Preferably, CWmax may be 1, 2, 3, 4, 5, 6, 7, 11, 15, 31, 63, 127, 255 and the like.

Operation 2: it is determined whether a present value of N is larger than 0. If a judgment result is that N is larger than 0, an operation of progressively decreasing the value of N by a specific number is implemented.

Wherein, the specific number may be configured by the eNB or is predefined. Preferably, the specific number is 1, that is, an N=N-1 operation is implemented.

Operation 3: the equipment detects a channel clear condition in a slot, and if it is detected that the channel is clear in the slot, Operation 4 is implemented. On the contrary, if it is detected that the channel is busy in the slot, Operation 5 is implemented.

Operation 4: it is determined whether the present value of N is equal to 0, and if YES, channel detection is stopped and it is determined that the right of use of the unlicensed carrier is acquired. On the contrary, if N is unequal to 0, Operation 2 is implemented.

Operation 5: a channel clear condition in the defer period is detected. If it is detected that the channel is clear in the defer period, Operation 2 is implemented. On the contrary, if it is detected that the channel is busy in the defer period, Operation 5 is repeatedly implemented. The defer period may be formed by adding n*slot to a fixed duration. n is a number more than or equal to 0. Preferably, n is 0, 1, 2, 3 and the like. A duration of the slot is 9us, and the fixed duration is 16us.

An LBT Cat2 flow is substantially as follows: a CCA detection starting moment is fixed, or is dynamically variable, or is randomly selected in a plurality of time buckets in a specific interval, or is configured at a fixed location within the plurality of small time buckets within the specific interval. If it is detected that the channel which is busy turns to clear and time when it is continuously detected that the channel is clear is not shorter than a preset CCA duration, it is determined that the right of use of the unlicensed carrier is acquired. For the disclosure, the eNB may preferably adopt LBT Cat for channel access for transmission of the DCI. Wherein, the CCA duration may be a 16us+n*slot duration, n is an integer more than or equal to 0, and n is preferably 1, 2, 3 and the like. The duration of the slot is 9us. That is, the CCA duration may be 16us, or, 25us, 34us and the like, and may also be 9us or 4us.

A difference between enhanced LBT Cat2 and LBT Cat2 is that a CCA detection starting point may be randomly selected within a certain time bucket. This is favorable for fairness of contention between asynchronous systems for channel access and advanced contention of transmission equipment at an early CCA detection starting point for channel access. For example, if the certain time bucket is 10 and may be divided into 10 small segments of which each small segment occupies 1 part, transmission equipment 1 may determine a starting point of the third small segment in the 10 small segment as its own CCA detection starting point, and transmission equipment 2 may fixedly configure a starting point of the seventh small segment in the 10 small segments as its own CCA detection starting point. That is, different transmission equipment may randomly select their own CCA detection starting points and may also fixedly configure different starting locations.

The direct eCCA process: the eCCA process is formed by N slot processes and, when it is detected that the channel is busy in the slot, entering the defer period or not entering the defer period. N is the random backoff value, N is an integer randomly generated between [0, CWp] and CWp is an integer randomly generated between [CWmin, CWmax]. In addition, N may be indicated to the UE by the eNB, or is predefined. Preferably, N may be 1, 2 and 3. A maximum contention window CWmax may be a positive integer between [1, 63]. A specific eCCA process is as follows.

In 1, the random backoff value N is generated.

In 2, it is determined whether N is presently larger than 0. If N is larger than 0, Operation 3 is implemented. If N is equal to 0, it is determined that the right of use of the unlicensed carrier is acquired. In such a case, if the UE has yet not implemented slot detection or has yet not entered the eCCA process, it is necessary to reset the random backoff value N, and Operation 1 is implemented.

In 3, the transmission equipment detects whether the channel is clear or not in the slot, and if the channel is clear, Operation 4 is implemented. Or, if it is detected that the channel is busy, the defer period, i.e., Operation 5, is entered, or, the defer period is not entered but Operation 3 is directly repeated.

In 4, the operation of progressively decreasing the value of N by a certain number value is implemented, wherein the certain number value may be predefined, or indicated by the eNB, or predetermined by the eNB and the UE. Preferably, N=N-1. Operation 2 is implemented.

In 5, whether the channel is clear in the defer period or not is detected, and if it is assessed that the channel is clear, Operation 4 is implemented. If it is detected that the channel is busy, Operation 5 is repeated. The defer period is formed by 16us+n*slot, n is an integer more than or equal to 0, and n is preferably 0, 1, 2, 3 and the like. The duration of the slot is 9us.

An implementation sequence of the steps and/or processes in the abovementioned LBT mechanisms may be changed without influence.

Correspondingly, the UE receiving the scrambled CRC may obtain the unscrambled CRC according to a corresponding descrambling manner.

Wherein, the high-layer signaling may be RRC signaling. The high-layer signaling may be common signaling sent to the UE and may also be dedicated RRC signaling sent to the UE. Wherein, the RRC signaling is mainly configured to notify the UE to perform random access.

Specifically, the DCI or the RRC notification signaling may include at least one of the following conditions.

Only related information of a preamble is included, for example, a preamble index. After receiving the preamble index, the UE may determine the sent preamble according to the related information of the preamble. A time-domain and/or frequency-domain resource for sending of the preamble (i.e., the abovementioned time-domain and/or frequency-domain resource for sending of the preamble) may be predefined. For example, the time-domain and/or frequency-domain resource corresponding to the preamble index sent by the UE is predefined, or, a fixed time-domain and/or frequency-domain resource is predefined for the UE, or, it is predetermined that the time-domain and/or frequency-domain resource is defined according to LBT (that is, a time-domain and/or frequency-domain resource or a time-domain and/or frequency-domain resource set is configured according to an LBT location or an LBT implementation result), or, a candidate time-domain and/or frequency-domain resource set sending the preamble is predefined, or, a time-domain and/or frequency-domain resource or a candidate time-domain and/or frequency-domain resource set is predetermined by the UE and the eNB, or, the time-domain and/or frequency-domain resource is determined according to a corresponding relationship between a UE ID and a time-domain and/or frequency-domain resource.

Preferably, time-domain information may also be included, for example, sending subframe information. That is, the UE sends the preamble on a subframe corresponding to the time-domain information. In such a manner, frequency-domain information for sending the preamble after the UE receives the notification signaling may be preset. For example, a fixed frequency-domain resource may be preset, or, a frequency-domain resource is predetermined by the UE and the eNB, or, a frequency-domain resource may be randomly selected from a candidate frequency-domain resource set, or, a smallest, or largest or fixed frequency-domain resource index number is selected from a candidate resource set, or, a location of the frequency-domain resource is determined according to a corresponding relationship between a UE ID and a frequency-domain resource.

Preamble information and time-domain and/or frequency-domain resource information are included.

The preamble information and the time-domain and/or frequency-domain resource information are not included. That is, the UE, after receiving the notification signaling, directly sends the preamble predetermined by the UE and the eNB to the eNB according to the predetermined time-domain and/or frequency-domain resource or according to a specific time-domain and/or frequency-domain resource after a moment when LBT succeeds, wherein the specific time-domain resource may be a first subframe or a plurality of symbols or subframes adjacent to the moment when LBT succeeds, or, a subframe or one or more offset symbols or subframes in a specific time window after LBT fails on a present PRACH resource.

In the third operation, the UE sends a dedicated preamble to the eNB.

The UE, after receiving the notification signaling, sends the preamble on a time-domain and/or frequency-domain resource corresponding to the preamble on the licensed carrier; or,

the UE, after receiving the notification signaling, does not implement the LBT mechanism and/or the CCA detection process on the unlicensed carrier but sends the preamble on the time-domain and/or frequency-domain resource corresponding to the preamble through an SCS. The eNB and the UE estimate in advance or determine as a default the specific candidate time-domain and/or frequency-domain resource on which the UE may send the preamble. Under this condition, the time-domain and/or frequency-domain resource on which the UE may send the preamble may be occupied by UE not belonging to the local cell or UE not belonging to the same operating company, thereby causing the problems that the eNB may not receive the preamble sent by the UE, the channel may not be accurately assessed or the like. Or, the eNB indicates whether the UE may send the preamble or not on each subframe or each candidate time-domain and/or frequency-domain resource, that is, the eNB may indicate the UE that the present subframe or the present time-domain and/or frequency-domain resource is being occupied by UE belonging to the same cell or the same operating company, and then the UE may directly send the preamble on the subframe or the time-domain and/or frequency-domain resource without implementing LBT. Or, the specific subframe or time-domain and/or frequency-domain resource for sending the preamble is determined by combining the specific candidate subframe which is estimated in advance or determined as a default by the eNB and the UE and on which the UE may send the preamble and a signaling indication of the eNB. Or, UE which has successfully occupies the channel in the same cell or the same operating company notifies and interacts with other UE about occupancy information (for example, by adopting a Device to Device (D2D) technology) to enable the other UE to directly use the occupied resource of the UE to send its own preamble without implementing LBT. Or,

the UE, after receiving the notification signaling, implements the LBT mechanism and/or the CCA detection. If the LBT mechanism and/or the CCA detection process are/is completed before the time-domain and/or frequency-domain resource (i.e., the abovementioned first time-domain and/or frequency-domain resource) which is notified by the eNB, or is notified through high-layer signaling or is predetermined, the corresponding preamble which is notified by the eNB, or is notified through signaling (physical-layer DCI or high-layer RRC signaling) or is predetermined may be normally sent on the corresponding time-domain and/or frequency-domain resource which is notified by the eNB, or is notified through signaling (physical-layer DCI or high-layer RRC signaling) or is predetermined. On the contrary, if the LBT mechanism and/or the CCA detection are/is not completed before the time-domain and/or frequency-domain resource which is notified by the eNB, or is notified through the signaling (the physical-layer DCI or the high-layer RRC signaling) or is predetermined, the corresponding preamble which is notified by the eNB or is predetermined may not be normally sent. Or, the preamble is sent on a specific time-domain and/or frequency-domain resource after the moment when the LBT mechanism and/or the CCA detection succeeds (i.e., the abovementioned adjacent time-domain and/or frequency-domain resource after the success moment when the LBT mechanism and/or the CCA detection succeeds). Wherein, the specific time-domain resource may be a first subframe or a plurality of symbols or subframes adjacent to the moment when LBT succeeds, or, a subframe or one or more offset symbols or subframes in a specific time window after LBT fails on the present PRACH resource.

The UE, before receiving the notification signaling, starts implementing the LBT mechanism and/or the CCA detection. If the LBT mechanism and/or the CCA detection process are/is completed before the time-domain and/or frequency-domain resource which is notified by the eNB, or is notified through the high-layer signaling or is predetermined, the corresponding preamble which is notified by the eNB, or is notified through the high-layer signaling or is predetermined may be normally sent on the corresponding time-domain and/or frequency-domain resource which is notified by the eNB, or is notified through the high-layer signaling or is predetermined. On the contrary, if the LBT mechanism and/or the CCA detection are/is not completed before the time-domain and/or frequency-domain resource which is notified by the eNB, or is notified through the high-layer signaling or is predetermined, the preamble may not be normally sent. Or, the preamble is sent on the specific time-domain and/or frequency-domain resource after the moment when the LBT mechanism and/or the CCA detection succeeds. Wherein, the specific time-domain resource may be a first subframe or a plurality of symbols or subframes adjacent to the moment when LBT succeeds, or, a subframe or one or more offset symbols or subframes (third predetermined time-domain and/or frequency-domain resource) in a specific time window after LBT fails on the present PRACH resource.

The LBT mechanism and/or CCA implemented by the UE side may include one of: LBT Cat4 (the CWmax is suggested to be as small as possible), or, LBT Cat2, or, enhanced LBT Cat2, or, defer period+eCCA (it is detected that the channel is busy, there is no defer period or there is a defer period), or, the eCCA process (it is detected that the channel is busy, including that: there is no defer period, or, there is a defer period). Preferably, the UE sends the preamble by adopting LBT Cat2, or, eCCA (eCCA is formed by N*slot, N is a positive integer not smaller than 1, N or the maximum contention window is preferably 3, 4, 5, 6, 7, 8, 9, 10, 11, 12, 13, 14 and 15 and the duration of the slot is 9us) without any defer period. Here, defer period-free eCCA refers to, when it is detected that the channel is busy in the slot duration, not entering the defer period but directly judging whether the channel is busy or clear in a next slot duration, wherein the defer period may be formed by 16us+n*slot, and preferably, n is 0, 1 and 2. The slot is 9us. In addition, 16us is formed by 9us+7us or 7us+9us. The maximum contention window in the eCCA process is preferably 1, 2, 3, 4, 5 and 6.

In the fourth operation, the UE monitors an RAR, sent by the eNB, corresponding to the dedicated preamble.

After the UE sends the preamble, the UE monitors the RAR sent by the eNB, wherein a CRC of a PDCCH in the RAR is scrambled or masked with an RA-RNTI, the RA-RNTI may be predefined, and the RA-RNTI is determined according to the location of the time-domain and/or frequency-domain resource for sending of the preamble, i.e., last 6 PRACH frequency-domain resources in a subframe for Time Division Duplex (TDD) and only one PRACH frequency-domain resource at a moment for Frequency Division Duplex (FDD). Furthermore, when a large amount of UE sends preambles and there are insufficient frequency-domain resources configured in a subframe in such a case, the number of the PRACH frequency-domain resources and a range or number of PRACH time-domain resources may be extended.

$$\text{RA-RNTI} = 1 + t_id + 10 * f_id.$$

Base on the above formula, if the time-domain resource is fixed, the RA-RNTI is fixed for FDD. In such a case, the UE may monitor the PDCCH scrambled by the RA-RNTI to obtain the RAR. For FDD, the RA-RNTI may also not be determined. Or, the frequency-domain resource is fixed but the time-domain resource may not be fixed. In such a case, the UE may be required to monitor PDCCHs scrambled by RA-RNTIs calculated by all possible time-domain and/or frequency-domain resources.

After monitoring and descrambling the PDCCH, the UE decodes a Physical Downlink Shared Channel (PDSCH), thereby obtaining a TA value.

In the related art, random access is completed on a licensed carrier, that is, the preamble is sent on the time-domain and/or frequency-domain resource which is configured by the eNB or is predetermined according to configuration of the eNB or predetermination. For random access on an unlicensed carrier, successful preamble sending of the UE on the time-domain and/or frequency-domain resource which is configured by the eNB or is predetermined is completely determined by whether the LBT mechanism and/or the CCA detection may be successfully implemented on the UE side or not and sufficient time-domain and/or frequency-domain resources sending the preamble.

In the embodiment of the disclosure, during involved operations of transmitting, by the eNB or the UE, information on the unlicensed carrier, the eNB or the UE is required to implement the LBT mechanism or the CCA detection at first, wherein the LBT mechanism may adopt one of the LBT mechanisms or processes introduced in the embodiment. Preferably, for sending related information in the random access process, the eNB or the UE may adopt a simplified LBT mechanism or parameter configuration, for example, an LBT Cat2 or small-contention-window LBT Cat4 mechanism (the maximum contention window may be 1, 2, 3, 4, 5 and the like) or the defer period-free eCCA process or a defer period-free defer period+eCCA process.

Referring to the following embodiment, some methods for increasing or improving a preamble sending opportunity or increasing preamble sending resources will be provided for the condition that the UE fails to contend for the unlicensed carrier or fails to implement LBT before the corresponding time-domain and/or frequency-domain resource in the following embodiment.

Second preferred embodiment

In the preferred embodiment, a method for sending a preamble on an unlicensed carrier, i.e., a method for sending the preamble on a time-domain and/or frequency-domain resource or time-domain and/or frequency-domain resource set which is notified by an eNB, or is notified through signaling or is predetermined, is provided, wherein the time-domain resource for sending of the preamble (i.e., the abovementioned first predetermined time-domain and/or frequency-domain resource) may be a length of K subframes or S OFDM symbols, wherein, preferably, K is 1, 2 and 3 and S is 2. In a frequency domain, it may be 6 continuous Physical Resource Blocks (PRBs) and may also be resources occupying the whole bandwidth or 80% of the whole bandwidth.

The method for sending the preamble on the unlicensed carrier includes one of the following methods.

A first method: the preamble is sent in an SCS manner, wherein the time-domain and/or frequency-domain resource for sending of the preamble may be notified by the eNB, or is notified through the signaling, or is predetermined, or has a smallest or largest corresponding resource index or fixed resource index in a predetermined time-domain and/or frequency-domain resource set, or is a randomly selected resource. For the first method, UE is not required to consider whether a channel has been occupied at present or a time point of a location of the time-domain and/or frequency-domain resource or not.

It is to be noted that the SCS generally refers to a function of directly sending a short-term signal or channel without implementing LBT mechanism and/or CCA detection on the unlicensed carrier. When the signal or channel is sent in a duration of the SCS, a Licensed-Assisted Access (LAA) point is not required to implement an LBT mechanism and/or CAA detection function. Therefore, for ensuring friendly coexistence of different systems and equipment on the unlicensed carrier, a sending duration of the SCS is preferably required to meet a certain control requirement. Wherein, the SCS may have other names and definitions in some regions and states, the SCS is not defined in some regions and states, and for these regions and states, the SCS and a similar rule (for example, there is made such a requirement on the sending duration that the sending duration in an observation period with a fixed duration is not larger than a set proportion) may be defined to send a signal of a non-occupancy period. In such a case, the preamble is sent in a format similar to format 4, that is, during sending of each time, a symbol length of only two symbols is occupied or a symbol length smaller or larger than the length of two symbols may also be occupied.

A second manner: if the unlicensed carrier is obtained by contention before the time-domain and/or frequency-domain resource for sending of the preamble (i.e., the abovementioned first predetermined time-domain and/or frequency-domain resource), the preamble may be normally sent on the time-domain and/or frequency-domain resource for sending of the preamble. If the unlicensed carrier is not obtained by contention, the preamble is stopped to be sent on the time-domain and/or frequency-domain resource. A next time-domain and/or frequency-domain resource for sending of the preamble (i.e., the abovementioned second predetermined time-domain and/or frequency-domain resource) is waited for, and if the unlicensed carrier is also not obtained by contention on the next time-domain and/or frequency-domain resource for sending of the preamble, sending is continued to be stopped.

Wherein, the time-domain and/or frequency-domain resource for sending of the preamble may be notified through physical-layer DCI or notified through high-layer RRC signaling or predetermined. The time-domain and/or frequency-domain resource in the second method may be one or more of time-domain resources which are notified through signaling or are predefined. Frequency-domain resources on different time-domain resources may be the same or different and may be acquired according to a manner of notification through the signaling or predetermination.

A location where the LBT mechanism and/or the CCA detection are/is implemented for sending the preamble on the PRACH time-domain and/or frequency-domain resource may be adjacent to and before the location of the time-domain and/or frequency-domain resource for sending of the preamble, wherein last k symbols in a previous subframe or previous one or more subframes may be adjacent to and before the time-domain and/or frequency-domain resource for sending of the preamble, or, the location where the LBT mechanism and/or the CCA detection are/is implemented is before the time-domain and/or frequency-domain resource for sending of the preamble but is not adjacent to the location, for example, a blank between successful implementation of the LBT mechanism and/or the CCA detection and the time-domain and/or frequency-domain resource for sending of the preamble (i.e., the abovementioned adjacent time-domain and/or frequency-domain resource), and the UE may send a Physical Uplink Shared Channel (PUSCH) of the UE or send a reservation signal, wherein the reservation signal may occupy part of the resources on the whole bandwidth and has a certain frequency-domain pattern, that is, a frequency-domain resource out of the frequency-domain pattern of the reservation signal is configured for other UE to implement the LBT mechanism and/or the CCA detection. Similarly, a specific frequency-domain resource may be reserved on a PUSCH sending resource, and for avoiding PUSCH resource waste, only a specific Resource Element (RE) may be reserved for the other UE to implement the LBT mechanism and/or CCA detection for channel access.

A third manner: if the unlicensed carrier is obtained by contention before the time-domain and/or frequency-domain resource for sending of the preamble, the preamble may be normally sent on the time-domain and/or frequency-domain resource for sending of the preamble. If the unlicensed carrier is not obtained by contention, the preamble is stopped to be sent on the time-domain and/or frequency-domain resource for sending of the preamble is stopped, and after the unlicensed carrier is obtained by contention next time, is complementally sent, but not always on the configured time-domain and/or frequency-domain resource for sending of the preamble, which is called irregular sending.

Third preferred embodiment

In the preferred embodiment, a method for improving or increasing a success rate of sending a preamble is provided.

For a characteristic of an unlicensed carrier (it is specified in control requirements of some regions that an LBT mechanism and/or CCA detection are/is required to be implemented to obtain a right of use of the unlicensed carrier for transmission before transmission on the unlicensed carrier), one of the following manners may be adopted to increase or improve the success rate of sending the preamble.

A first manner: an interval or period of a PRACH time-domain resource for sending of the preamble (here, a time-domain and/or frequency-domain resource of a PRACH is a time-domain and/or frequency-domain resource for sending of the preamble) is shortened, or a PRACH time-domain and/or frequency-domain resource density is reduced.

If it is configured on a licensed carrier or the unlicensed carrier that there is only one PRACH resource for sending of a preamble in each radio frame, for example, for an FDD system, a specific subframe in an even frame, for example, a subframe index 1 or 4 or 7, a period of the PRACH resource is shortened. That is, when the UE fails to implement the LBT mechanism and/or the CCA detection before the subframe index number 1 or 4 or 7 in an even frame 0, the UE may be triggered to implement the LBT mechanism and/or the CCA detection before a corresponding subframe index number in the next frame (odd frame), and if the LBT mechanism and/or the CCA detection succeeds before the present subframe (i.e., the PRACH time-domain resource), the preamble may be sent. On the contrary, if the LBT mechanism and/or the CCA detection are failed, contention for the unlicensed carrier is continued to be tried again before a corresponding time-domain subframe location in the next frame, for the purpose of sending the preamble. Or, if the LBT mechanism and/or the CCA detection fails before the corresponding subframe 1 or 4 or 7 in the even frame, contention for the unlicensed carrier may be continued to be tried before multiple continuous or discrete subframes after the subframe 1 or 4 or 7 in the even frame, thereby sending the preamble. Here, the preamble may be sent on the premise that the LBT mechanism and/or the CCA detection succeeds before any subframe in these subframes. For TDD, if a specific subframe in each frame is a PRACH time-domain resource, the period of the PRACH resource may be shortened. That is, if there is a specific PRACH time-domain resource in a first half frame of a radio frame, an interval of appearance of the PRACH resource is shortened, that is, a corresponding specific location in a latter half frame of the radio frame may also be taken as a PRACH time-domain resource. Here, a number or proportion of UL and downlink subframes may be flexibly determined according to a novel frame structure type without limitations of an existing fixed UL and downlink subframe configuration of TDD. Or, all subframes in a certain time window after the PRACH resource on which LBT is failed to be implemented are directly configured as candidate PRACH resources for the UE. Wherein, a frequency-domain resource location in a PRACH time-domain resource complementally sending the preamble may be fixed or variable relative to a frequency-domain resource location in a PRACH time-domain resource which is predetermined or indicated by physical-layer signaling or high-layer signaling. That is, the time-domain resource for sending of the preamble is different but the frequency-domain resource location is different or the same.

A second manner: for increasing a success probability of sending the preamble but not increasing detection complexity of an eNB, a preamble sending window (i.e., the abovementioned time window) may be defined to increase a preamble sending opportunity. The preamble sending window may be located before or after or include a PRACH time-domain resource which is preset or notified through signaling (physical-layer DCI or high-layer RRC signaling) or predetermined by UE and the eNB, and may also be located before or after a time-domain location of the LBT mechanism and/or the CCA detection or include the time-domain location of the LBT mechanism and/or the CCA detection. In addition, the preamble sending window (there is the PRACH time-domain resource for sending of the preamble in the window) and the PRACH time-domain resource which is preset or notified through the signaling (the physical-layer DCI or the high-layer RRC signaling) may be continuous in a time domain and may also be discontinuous in the time domain. Preferably, the preamble sending window may be a continuous time bucket in which the preamble may be sent after the PRACH time-domain resource which is preset or notified through the signaling (the physical-layer DCI or the high-layer RRC signaling) or predetermined by the UE and the eNB or after a starting location of the PRACH time-domain resource which is preset or notified through the signaling (the physical-layer DCI or the high-layer RRC signaling) or predetermined by the UE and the eNB. The preamble sending window may be one or more sending time points when the preamble may be sent (i.e., the abovementioned third predetermined time-domain and/or frequency-domain resource or candidate time-domain and/or frequency-domain resource) existing in a certain time bucket, and locations of multiple time-domain resource for sending of the preamble in the time bucket may be continuous in the time domain or discontinuous in the time domain. Furthermore, the time-domain resource capable of sending the preamble in the preamble sending window may be one or more resources which are continuous in the time domain and may also be one or more resources discrete in the time domain. If the unlicensed carrier is not obtained by contention on the PRACH time-domain resource which is preset or notified through the signaling (the physical-layer DCI or the high-layer RRC signaling) or predetermined by the UE and the eNB, sending may be continued to be tried in the preamble sending window after the PRACH time-domain resource. If the LBT mechanism and/or the CCA detection succeeds before the time-domain resource for sending of the preamble in the time window, the preamble is sent, and a next sending opportunity is the PRACH time-domain resource which is preset or notified through the signaling (the physical-layer DCI or the high-layer RRC signaling) or predetermined by the UE and the eNB. On the contrary, if the LBT mechanism and/or the CCA detection fails before the time-domain resource for sending of the preamble in the time window, the preamble is stopped to be sent, the LBT mechanism and/or the CCA detection are continued to be implemented before a next time-domain resource for sending of the preamble in the time window, and the preamble is tried to be resent. If the unlicensed carrier is not obtained by contention in the preamble sending window, that is, the preamble is failed to be sent or the LBT mechanism and/or the CCA detection fails in the preamble sending window, the next sending opportunity is a next PRACH time-domain resource which is preset or notified through the signaling (the physical-layer DCI or the high-layer RRC signaling) or predetermined by the UE and the eNB. Here, the PRACH time-domain and/or frequency-domain resource is a resource for sending of the preamble.

Wherein, the preamble is sent according to one of a PRACH resource or PRACH resource set notified through the physical-layer DCI or the high-layer RRC signaling. A PRACH resource in the related art is randomly selected with the same probability from an available PRACH time-don resource set. However, because the preamble may be sent on the premise that the LBT mechanism and/or the CCA detection succeed/succeeds, randomness of the PRACH time-domain resource is required to be limited to a certain extent. The PRACH time-domain resource for sending of the preamble may be determined in one of the following manners:

selecting a subframe with a smallest subframe index number from the available PRACH time-domain set; or,
selecting a subframe with a largest subframe index number from the available PRACH time-domain set; or,
selecting a preset or fixed subframe in the available PRACH time-domain set; or,
selecting a first resource after successful implementation of the LBT mechanism and/or the CCA detection as the PRACH time-domain resource; or,
randomly selecting or fixedly determining a resource from a resource set after successful implementation of the LBT mechanism and/or the CCA detection as the PRACH time-domain resource; or,
performing random selection from the preamble sending time window; or,
selecting a fixed resource from the preamble sending time window; or,
selecting a first resource (one or more subframes or one or two and more symbols) after successful LBT from the preamble sending time window; or,
selecting a certain fixed resource or randomly selecting a resource (one or more subframes or one or two and more symbols) after successful implementation of the LBT mechanism and/or the CCA detection from the preamble sending time window; or,
determining the time-domain resource for sending of the preamble in the available PRACH time-domain resource set or a candidate time-domain resource set sending the preamble according to a manner indicated by the eNB.

Preferably, the frequency-domain resource for sending of the preamble (i.e., a corresponding frequency-domain resource block sending the preamble in the frequency domain) may be determined according to one of the following manners:

performing random selection with the same probability; or,
selecting a smallest frequency-domain resource index number; or,
selecting a largest frequency-domain resource index number; or,
selecting a resource corresponding to an offset in the frequency domain; or,
selecting a predefined frequency-domain resource. Here, the frequency-domain resource is a corresponding frequency-domain resource block index sending the preamble in the frequency domain. For example, there are five resources configurable to send the preamble in a time-domain resource, and correspondingly, there are five frequency-domain indexes configurable to send the preamble. There is made such a hypothesis that the smallest frequency-domain resource index is selected, that is, the preamble is sent on a resource block corresponding to a frequency-domain resource index 0 (i.e., a first resource block in the available resources). A resource block in the frequency domain occupies 6 PRBs.

It is particularly pointed out that, for a flexible UL and downlink frame structure, an attribute (UL or downlink) of each subframe may be flexibly configured. On such a basis, a PRACH may be located and configured on each UL subframe, or odd UL subframes or even UL subframes in indicated UL subframes, wherein the location of the frequency-domain resource for sending of the preamble in the subframes may be selected according to the abovementioned methods.

In addition, the preamble sending time window may be formed by at least one of the following parameters: a time-domain offset 1 (i.e., the abovementioned first time-domain offset) (that is, the offset 1 is a distance between the configured time-domain resource for sending of the preamble and a starting point of the time window), an offset between a starting point of a candidate time-domain resource for sending of the preamble in the time window and the starting point of the time window, i.e., an offset 2 (i.e., the abovementioned second time-domain offset), a size and number of the time-domain resource for sending of the preamble in the window, a length of the time window, the starting point of the time window (i.e., a corresponding moment obtained by adding the offset 1 after the configured time-domain resource for sending of the preamble) and an interval of the time-domain resource for sending of the preamble.

The method described in the second manner may be described below with an example. In the following example, the starting point of the time window is the starting point of the location of the corresponding configured time-domain resource for sending of the preamble. However, the following method is also applied to the condition that the starting point of the time window is the end of the location of the corresponding configured time-domain resource for sending of the preamble. That is, a location of the time window and a pattern of the candidate PRACH time-domain resource in the window may be triggered by a failure in implementation of the LBT mechanism and/or the CCA detection before the location of the corresponding configured time-domain resource for sending of the preamble and may also be notified through the physical-layer DCI, or notified through the high-layer RRC signaling, or pre-configured or predetermined by the eNB and the UE.

If the PRACH time-domain location sending the preamble has been determined, for example, a subframe 7 in a certain radio frame, the preamble sending window may include one of the following conditions.

One is that candidate PRACH time-domain resources in the preamble sending time window are continuous in the time domain. FIG. 5 is a schematic diagram of PRACH resources which are continuous in time in a preamble sending time window according to an embodiment of the disclosure. As shown in FIG. 5, the starting point of the preamble sending time window is the present PRACH time-domain resource and its ending point is before the next PRACH time-domain resource. Wherein, the time window may be formed by a plurality of preamble sending durations, and each preamble duration may be one subframe, two subframes or three subframes or some symbols. When the number of times for which certain UE sends the preamble or the number of times for which the LBT mechanism and/or the CCA detection are/is continuously failed to be implemented to send the preamble reaches a preset threshold value, the UE stops trying to send the preamble. The preset threshold value may be acquired in a manner of predefinition, or predetermination between the eNB and the UE, or notification through physical-layer signaling, or notification through high-layer signaling or notification to the UE by the eNB.

If the UE successfully contends for the unlicensed carrier before the configured PRACH time-domain resource, the preamble is normally sent on the PRACH time-domain resource. If the unlicensed carrier is not obtained by contention before the present PRACH time-domain resource, the UE may tries to contend for the unlicensed carrier again before the candidate time-domain resource for sending of the preamble in the time window, that is, the UE tries to continue implementing the LBT mechanism and/or the CCA detection before a next PRACH time-domain resource in the time window, and if the right of use of the unlicensed carrier is successfully acquired by contention, the UE sends the preamble on the PRACH resource, namely complementally sending the preamble. If the right of use of the unlicensed carrier is not acquired by contention, the UE continues trying to continue implementing the LBT mechanism and/or the CCA detection before the next PRACH time-domain resource in the time window, and if the LBT mechanism and/or the CCA detection succeed/succeeds, the preamble is sent on the present PRACH resource. On the contrary, if the LBT mechanism and/or the CCA detection are/is failed, implementation of the LBT mechanism and/or the CCA detection is continued to be tried on the candidate PRACH time-domain resource in the time window to send the preamble until the time window is ended. If the UE does not successfully contend for the unlicensed carrier all the time in the present time window, sending is tried again in the next configured PRACH resource and/or time window, wherein the configured PRACH resource may be preset or determined by notification through the physical-layer DCI or the high-layer RRC signaling. Optionally, if the PRACH time-domain resource set is configured, it may be determined according to the PRACH time-domain resource selection method provided in the embodiment.

Under this condition, the candidate time-domain resource for sending of the preamble in the preamble sending window is formed by a plurality of PRACH time-domain resources which are continuous in the time domain.

The other is that the PRACH resources in the preamble sending window are discontinuous in the time domain, wherein the candidate PRACH resources sending the preamble may be at the same interval or at different intervals.

FIG. 6 is a schematic diagram of PRACH resources which are discrete at the same interval on time in a preamble sending time window according to an embodiment of the disclosure. As shown in FIG. 6, the candidate PRACH resources sending the preamble are at the same interval. Wherein, the preamble sending time window may include and may also not include the configured PRACH time-domain resource. In addition, methods for the time window before the configured PRACH resource are also similar.

A first condition: as shown in FIG. 6, there is made such a hypothesis that the configured PRACH resource is a first PRACH resource in the sending time window, and if the UE successfully contends for the unlicensed carrier on the configured PRACH time-domain resource, the preamble is normally sent on the configured PRACH time-domain resource, and the frequency-domain resource may be randomly selected, or predefined or fixedly determined or have a smallest or largest available frequency-domain resource index. If failing to contend for the unlicensed carrier on the configured PRACH time-domain resource, the UE tries to send the preamble on a next PRACH time-domain resource in the time window. If the next PRACH time-domain resource is obtained by contention, the preamble is sent on the time-domain resource, and the location of the frequency-domain resource may be kept unchanged or changed. On the contrary, if the next PRACH time-domain resource is not obtained by contention, the preamble is stopped to be sent on the PRACH time-domain resource. The LBT mechanism and/or the CCA detection are/is continued to be implemented on the next of the next PRACH resource in the time window, and the preamble is tried to be sent until the time window is ended. If the unlicensed carrier is not obtained by contention all the time in the time window, the UE may only wait for the next configured PRACH resource. Here, the candidate PRACH time-domain resources for sending of the preamble in the time window are discrete in the time domain. In addition, the location of LBT implemented to send the preamble on the candidate PRACH time-domain resource may be a tail location (one or more symbols) in the previous subframe of the candidate PRACH time-domain resource, which may specifically refer to the descriptions about the LBT or CCA detection location in the following fourth preferred embodiment.

In addition, the candidate resource for sending of the preamble in the time window may also be formed by PRACH time-domain resources which are discrete at the same interval or PRACH time-domain resources which are at different intervals.

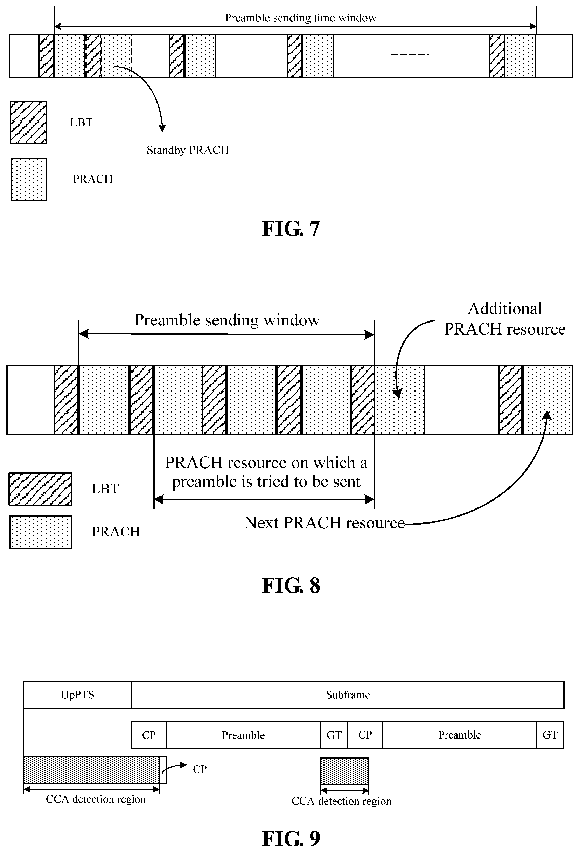

A second condition: the method for increasing the success probability of sending the preamble on the discrete PRACH resources in the time window further includes that: standby PRACH resources are added between the discrete candidate PRACH resources. FIG. 7 is a schematic diagram of adding standby PRACH resources between discrete PRACH resources in a time window according to an embodiment of the disclosure, as shown in FIG. 7.

The difference with the first condition is that, if the UE fails to contend for the unlicensed carrier on the configured PRACH resource and a location of the first candidate PRACH time-domain resource for sending of the preamble in the time window is not reached, sending of the preamble is continued to be tried on the first candidate PRACH time-domain resource after the configured PRACH time-domain resource in the time window, and if the LBT mechanism and/or the CCA detection succeeds, the preamble is sent at a present time point. Preferably, a new opportunity for sending the preamble is provided on the first time-domain resource after the configured PRACH.

A third condition: the unlicensed carrier is still not obtained by contention in the preamble sending time window, and PRACH time-domain resources may be added after the sending window. FIG. 8 is a schematic diagram of adding PRACH time-domain resources after a preamble sending window according to an embodiment of the disclosure, as shown in FIG. 8. Wherein, the PRACH durations in the time window may be continuous or discontinuous. The PRACH durations may be lengths of 1, 2 and 3 subframes or lengths of k OFDM symbols.

There is another condition: the PRACH time-domain resource for sending of the preamble is determined according to the location where the LBT mechanism and/or the CCA detection are/is onimplemented.

If the time-domain location where the LBT mechanism and/or the CCA detection are/is implemented is determined, the UE contends for the right of use of the unlicensed carrier at the possible time-domain location where the LBT mechanism and/or the CCA detection are/is implemented and, if successfully contending for the right of use of the unlicensed carrier, sends the preamble on k complete OFDM symbols or one or more subframes after the LBT mechanism and/or the CCA detection succeed/succeeds. If the moment when the LBT mechanism and/or the CCA detection succeeds does not reach a symbol or subframe boundary, a reservation signal or an occupancy signal is required to be sent. Sending of the preamble is completely determined by the location where the LBT mechanism and/or the CCA detection are/is implemented.

There is another condition: the location where the LBT mechanism and/or the CCA detection are/is implemented, and the PRACH time-domain resource for sending of the preamble is determined according to the moment when LBT or CCA is successfully implemented.

If the location where the LBT mechanism and/or the CCA detection are/is implemented is not limited, the UE may start implementing an LBT process at any moment and send the preamble on the k complete OFDM symbols or one or more subframes after the moment when the LBT mechanism and/or the CCA detection succeeds. If the moment when the LBT mechanism and/or the CCA detection succeeds does not reach the symbol or subframe boundary, the reservation signal or the occupancy signal is required to be sent. Sending of the preamble is completely determined by the starting moment and/or success moment of the LBT mechanism and/or the CCA detection and is unrelated or related with the configured PRACH or the available PRACH resource (the first time-domain resource after the LBT mechanism and/or the CCA detection succeeds is right the PRACH resource).

In addition, a size of an LBT contention window sending the preamble by the UE or the LBT mechanism is regulated according to whether the number of times for which LBT is failed to be implemented to send the preamble reaches the preset threshold value or not. For example, if the preset threshold value is 3, when the UE continuously adopts an LBT process of which a maximum contention window is 15 to send the preamble, the contention window adopted for implementation of LBT is reduced to 7 immediately after third LBT is failed. By parity of reasoning, if the UE still fails to acquire the unlicensed carrier to send the preamble when the contention window is regulated to a minimum value or when the preamble sending window is ended or the maximum number of times for which the preamble may be sent is preset, LBT is stopped to be implemented until the next time-domain and/or frequency-domain resource or time window sending the preamble. On the contrary, if the UE successfully accesses the unlicensed carrier and sends the preamble after the size of the LBT contention window is regulated, the initial size of the contention window is recovered. Or, the LBT implementation mechanism may also be regulated according to the number of times for which LBT is failed. If LBT Cat4 (for example, a defer period+eCCA process) is adopted at the beginning and the number of times for which LBT is failed is larger than the preset value, a random backoff-free mechanism or simplified LBT, for example, LBT Cat2 and an eCCA process (when it is detected that the channel is busy, a defer period may be entered or the defer period is not entered) may be adopted. Or, the LBT process has yet not been completed before the time-domain and/or frequency-domain location where the preamble is sent, and if a present value of N meets the preset threshold value or it is determined by last CCA detection that the channel is clear, it may be determined that transmission equipment acquires the right of use of the unlicensed carrier.

Wherein, the preset threshold value may be acquired in a manner of indication by the eNB, predefinition and predetermination between the eNB and the UE.

Fourth preferred embodiment

In the preferred embodiment, a method for a relationship between a location where an LBT mechanism and/or CCA detection are/is implemented to send a preamble and each of a CP and GT of a PRACH and multiplexing a PRACH resource between different UE is provided. (Optionally, a structural design of the PRACH resource may be added).

For formats 0-3, 1, 2, 2 and 3 subframes are occupied in a time domain of the PRACH respectively, wherein the PRACH is formed by the CP, the preamble and the GT. The CP is configured to ensure that a receiver may perform frequency detection and resist interference between symbols. The GT is configured to avoid interference to other UE.

Wherein, for the condition that an UpPTS is before a PRACH time-domain location, for ensuring interference between symbols, a region where UE or UE in a UE group implements the LBT mechanism and/or the CCA detection is part or all of the UpPTS, or, part or all of a GP and/or the UpPTS, or, part or all of a DwPTS and/or the GP and/or the UpPTS, or, last k symbols in a downlink subframe and/or the DwPTS and/or the GP and/or the UpPTS, or, part or all of the UpPTS and/or part or all of CP time, or, part or all of the GP and/or the UpPTS and/or part or all of the CP time, or, part or all of the DwPTS and/or the GP and/or the UpPTS and/or part or all of the CP time, or, the last k symbols in the downlink subframe and/or the DwPTS and/or the GP and/or the UpPTS and/or part or all of the CP time. k is a positive integer not smaller than 1.

For the condition that an UL frame is before the PRACH time-domain location, furthermore, if a previous subframe is a PRACH subframe, the CCA detection location may be part or all of GT of a PRACH in the previous subframe, or, part or all of the GT and/or part or all of CP time of a present PRACH subframe, wherein a starting point of the CCA detection may be a starting point of the GT or a certain location in the GT. FIG. 9 is a schematic diagram of a location where an LBT mechanism and/or CCA detection are/is implemented when a preamble is sent in formats 0~3 according to an embodiment of the disclosure, as shown in FIG. 9.

If the previous subframe is an UL subframe and there is no PRACH in the UL subframe, the CCA detection location may be limited to be last k OFDM symbols of the previous subframe, or, the k OFDM symbols and/or part or all of a CP in the present subframe (the PRACH subframe), or, one or more subframes before the PRACH subframe and/or part or all of the CP in the present subframe (the PRACH subframe).

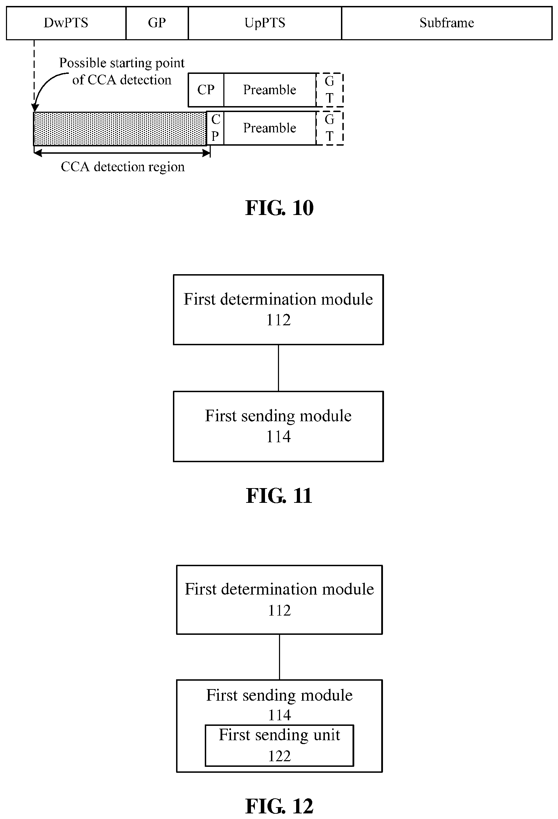

A format 4 is only applied to a TDD system and an UpPTS length is occupied in the time domain of the PRACH. FIG. 10 is a schematic diagram of a location where an LBT mechanism and/or CCA detection are/is implemented when a preamble is sent in a format 4 according to an embodiment of the disclosure. As shown in FIG. 10, the location where the CCA detection is implemented before the preamble in the format 4 is sent on a corresponding resource of an unlicensed carrier may be one of:

part or all of GP time; or,
part or all of the GP and/or part or all of the CP time; or,
part or all of the DwPTS and/or the GP and/or part or all of the CP time; or,
the last k symbols in the downlink subframe and/or the DwPTS and/or the GP and/or part or all of the CP time.

Part of the abovementioned resource time may be time corresponding to x% in the time. For example, part of the CP time is time corresponding to x% in the whole CP time, a starting point is a starting location of a CP region, and an ending point is a point at x% of the CP time from the CP. x is a number between [0, 100].

Preferably, a frequency-domain location where LBT or CCA detection is implemented to send the preamble may refer to: the whole bandwidth for detection or part of resource locations on the whole bandwidth for detection, wherein part of the resources may be a resource with a frequency-domain pattern, and preferably, the resource may be of an RE level, or a PRB, or a Resource Block Group (RBG) or of a sub-band level. For example, a pattern formed by resources corresponding to odd resource indexes on the frequency-domain resource is configured for UE to implement LBT or CCA detection on the corresponding resource. A PUSCH and/or GT and/or a CP may be sent on the other resources. That is, the GT and/or the CP are/is sent in the frequency domain according to a certain frequency-domain pattern.

Different LBT mechanisms may be configured according to different CCA detection regions, wherein the LBT mechanisms may refer to introductions about the LBT mechanisms in the first embodiment.

For each abovementioned condition, if the UE does not complete an LBT process before a boundary of a time-domain resource for sending of the preamble, the LBT process is continued to be implemented in the CP, or, for avoiding the interference between the symbols, it is determined that a right of use of the unlicensed carrier is acquired once it is detected in a preset CCA duration that the channel is clear in the CP, thereby sending the preamble at the corresponding time-domain and/or frequency-domain location. In such a case, a new CP length (shortened CP) is obtained by subtracting the CCA duration from an original CP length. Particularly, for the condition that CCA detection is implemented in the GT, a new GT length is obtained by subtracting time from the start of CCA to a boundary of the GT from an original GT length.

In addition, for enabling multiple pieces of different UE to multiplex the same time-domain resource and/or frequency-domain resource, the following manner may be adopted for implementation.

Based on the abovementioned limitations to the CCA detection location in different formats, if the moment when the UE completes the LBT process does not reach the location of the time-domain resource for sending of the preamble, the UE is required to send a reservation signal or an occupancy signal or an initial signal for other UE to recognize, wherein a time-domain length of the reservation signal or the occupancy signal or the initial signal is: from a success moment of the LBT mechanism and/or the CCA detection to a starting point of a PRACH resource subframe; or, part or all of a CP from the success moment of the LBT mechanism and/or the CCA detection to the PRACH resource subframe; or, from the success moment of the LBT mechanism and/or the CCA detection to a subframe or symbol boundary. If a first time-domain resource after the success moment of the LBT mechanism and/or the CCA detection is not a PRACH resource, the UE may send a PUSCH or a Physical Uplink Control Channel (PUCCH) or a Sounding Reference Signal (SRS) till the starting point of the PRACH resource subframe. The reservation signal or the occupancy signal or the initial signal may be sent on the whole bandwidth or sent on part of frequency-domain resources in the whole bandwidth in a frequency domain. Part of the frequency-domain resources may be REs/PRBs/RBGs/sub-band resources which are at the same interval or different intervals in the frequency domain. Here, if UE in the same operating company shares the same reservation signal or occupancy signal or initial signal pattern (or shares the same LBT mechanism and/or CCA detection frequency-domain pattern, i.e., a pattern formed by part or all of the frequency-domain resources except the reservation signal) and the detection UE (UE intended to multiplex the resource) detects on an LBT mechanism and/or CCA detection resource except part of the frequency-domain resources that the channel is clear (for example, it is detected on a resource of a pattern corresponding to the LBT mechanism and/or the CCA detection that energy of the channel is lower than a CCA threshold A), it is determined that there is no other system existing in the channel. If energy detected on a resource corresponding to the reservation signal or occupancy signal or initial signal pattern or the whole bandwidth is lower than a preset CCA detection threshold B (wherein the CCA detection thresholds A and B may be the same or different, that is, the CCA detection threshold B is larger than the CCA detection threshold A), or, is higher than the CCA detection threshold A but lower than the CCA detection threshold B, it is determined that the channel is occupied by the UE of the same operating company, that is, it is determined that the right of use of the unlicensed carrier is acquired and multiplexing is allowed, that is, the resource may be multiplexed to send preambles respectively, wherein time-domain and/or frequency-domain resources sending the may be different or the same. UE under different cells of the same operating company may also have different reservation signal or occupancy signal or initial signal patterns, that is, frequency division is adopted for CCA detection patterns of the UE of different cells, and if it is detected on the corresponding CCA detection pattern that the channel is clear, the UE may send a reservation signal on a frequency-domain resource out of the CCA detection pattern or send it on the whole bandwidth, and in such a case, the detection UE or the UE intended to multiplex the resource receives and parses it on the corresponding reservation signal or occupancy signal or initial signal pattern or the whole bandwidth and, if it is parsed (a content of the reservation signal may be received and decoded, or, whether the channel is clear or not or is occupied by UE in the same cell or the same operating company is judged only through the received energy) that the signal is sent by the UE of the local cell, sends its own preamble on a subsequent PRACH resource. Or, after the channel is occupied, the frequency-domain resource may also be formed by at least one of the reservation signal pattern, the CCA pattern and an idle resource or a PUSCH resource. Here, the CCA pattern is configured for other detection UE to perform signal recognition, thereby multiplexing the resource. In addition, the reservation signal or the occupancy signal or the initial signal may contain an indication message, or, a UE ID or a cell ID or an operating company ID or the like, and the reservation signal may also send an SRS sequence, wherein the reservation signal may also be a CP or GT or a PUSCH or an SRS or the like.

In addition, the UE successfully implementing LBT or CCA may send the reservation signal in a blank after the success moment of LBT or CCA and before the time-domain resource for sending of the preamble, and the reservation signal has a certain frequency-domain pattern (for example, the reservation signal is sent at a specific frequency-domain location and a specific idle frequency-domain resource is configured for other UE to implement LBT or CCA detection). The PUSCH is sent outside the frequency-domain resource in the time-domain resource for sending of the preamble by the UE, wherein a specific resource may be muted on the frequency-domain in the PUSCH for the other UE to implement LBT or CCA detection. The specific resource may be of an RE level, or a PRB, or an RBG or of a sub-band level. Preferably, for avoiding resource waste, the PUSCH or any information or signal is not sent on a specific RE resource only. A specific resource configured for the other UE to implement LBT or CCA detection may also be reserved on a corresponding frequency domain sending the CP or the GT. When it is detected on the frequency-domain resource for implementation of LBT or CCA detection that the energy of the channel is lower than the CCA threshold A, it is determined that there is no other system existing in the channel. When the energy detected outside the frequency-domain resource corresponding to LBT or CCA or the whole bandwidth is lower than the preset CCA detection threshold B (wherein the CCA detection thresholds A and B may be the same or different, and optionally, the CCA detection threshold B is larger than the CCA detection threshold A), or, is higher than the CCA detection threshold A but lower than the CCA detection threshold B, it is determined that the channel is occupied by the UE of the same operating company or the same cell, that is, it is determined that the right of use of the unlicensed carrier is acquired.

Preferably, when multiple pieces of UE are simultaneously required to send respective preambles at a time-domain location, for fairness, different UE may randomly or fixedly select different CCA detection starting locations to start the CCA detection.

Preferably, a novel PRACH channel structure may be designed. For the condition of coexistence of the LBT mechanism and/or the CCA detection and the PRACH (i.e., coexistence in one or more subframes or one or two or more symbols), a time-domain length of the PRACH may be reduced, and optionally, the frequency-domain resource may be extended. That is, the LBT mechanism and/or the CCA detection coexist/coexists with the PRACH time-domain resource in a time division manner. Or, the LBT mechanism and/or the CCA detection coexist/coexists with the PRACH time-domain resource in a frequency division manner. For the latter condition, the UE successfully implementing the LBT mechanism and/or the CCA detection sends the preamble on the PRACH resource (here, the PRACH time-domain location may be a PRACH resource of the same subframe where the success moment of LBT is, the format 4 being adopted to send the preamble in such a case, or, a subframe after the success moment of LBT, preferably, the first or multiple subframes after the success moment of LBT), and the detection UE implements the LBT mechanism and/or the CCA detection on part or all of the resources on the frequency-domain resource except the PRACH resource and, if it is detected that the channel is clear, sends its own preamble on the next PRACH resource, wherein the frequency-domain resource on the PRACH time-domain resource may be formed by at least one of a PRACH frequency-domain resource, a CCA detection frequency-domain resource, a PUSCH, a reservation signal and a blank, and these components coexist in the frequency division manner.

Fifth preferred embodiment

In the preferred embodiment, a method for contention-based random access on an unlicensed carrier is provided. Specifically, a contention-based random access process may be implemented through one of the following manners.

A first manner

In 1, UE is required to implement LBT or CCA at first before sending a Msg or performing transmission on the unlicensed carrier. If the unlicensed carrier is obtained by contention, the UE enters Operation 2. If the unlicensed carrier is not obtained by contention, the UE is not allowed to send information on the unlicensed carrier. There is a special condition that the UE is not required to implement an LBT mechanism and/or CCA detection to acquire a right of use of the unlicensed carrier but may send the Msg in an SCS manner.

In 2, after successfully contending for the unlicensed carrier, the UE sends a Msg1_1, wherein the Msg1_1 includes a Msg1 (the Msg1 is mainly intended to send a preamble) and part of information in a subsequent Msg3. The UE sends the Msgs included in the Msg1_1 on a specific time-domain and/or frequency-domain resource. Here, the UE may send the Msg1 on a time-domain and/or frequency-domain resource, namely sending the preamble on the time-domain and/or frequency-domain resource, and sends part of the information in the subsequent Msg3 on another time-domain and/or frequency-domain resource. The one time-domain and/or frequency-domain resource and the other time-domain and/or frequency-domain resource may be the same in a time domain but different in a frequency domain or different in the time domain but the same in the frequency domain or different in the time domain and different in the frequency domain. In addition, the UE may also send a content in the Msg1_1 on the same time-domain and/or frequency-domain resource. For avoiding the condition that multiple pieces of UE send Msgs on the same time-domain and/or frequency-domain resource to cause a collision and thus an eNB may not correctly decode contents in the Msgs, the preamble and part of the information in the subsequent Msg3 in the Msg1_1 are preferably transmitted on different time-domain and/or frequency-domain resources.

The time-domain and/or frequency-domain resource for sending of the preamble is obtained by physical-layer DCI, or, high-layer RRC signaling, or, predefinition, or predetermination between the eNB and the UE, and may also be determined according to a success moment of the LBT mechanism and/or the CCA detection, that is, the preamble is sent on a first available time-domain and/or frequency-domain resource after the success moment of the LBT mechanism and/or the CCA detection. The time-domain resource may include one or more subframes or k OFDM symbols. The frequency-domain resource occupies L PRBs. Wherein, k is a positive integer, and preferably, k is 2. L is any positive integer between [1, 100], and preferably, L is 6.

There is a corresponding relationship between the preamble and a TC-RNTI, or, a UE ID corresponds to the preamble, or, the UE ID corresponds to the TC-RNTI, or, there is a corresponding relationship between the UE ID and each of the preamble and the TC-RNTI. The preamble may be a preamble determined according to an existing rule, or, predefined, or, predetermined by the eNB and the UE, or notified through the high-layer RRC, or notified through the physical-layer DCI. The existing rule is determined according to the Msg3, path loss and the like.

The time-domain and/or frequency-domain resource for sending of the partial Msg3 may be predefined, or predetermined by the eNB and the UE, or indicated by the eNB, or notified through the high-layer RRC, or notified through the physical-layer DCI, or the same as the time-domain resource for sending of the preamble but implicitly offset by an offset in the frequency domain, or different from the time-domain resource for sending of the preamble (for example, offset by an offset relative to the time-domain resource for sending of the preamble in the time domain) but the same or different in the frequency domain. Preferably, the time-domain resource for sending of the partial Msg3 is the same as the time-domain resource for sending of the preamble but offset by a certain offset in the frequency domain, or, the two resources are adjacent in the time domain and may adopt the same location in the frequency domain. The offset is at least from the frequency-domain resource for sending of the preamble to a boundary of a frequency-domain region available for the preamble. That is, the frequency-domain resource for sending of the partial Msg3 is preferably a frequency-domain resource except the frequency-domain resource available for sending the preamble. Here, the time-domain and/or frequency-domain resource for the partial Msg3 is not limited to the abovementioned time-domain and/or frequency-domain location.

The partial Msg3 may be at least one of: the UE ID, or a C-RNTI, or an RRC request, or an SR or a BSR.

The UE sends part of the subsequent Msg3 on the time-domain and/or frequency-domain resource for sending of the Msg3, wherein a TC-RNTI corresponding to the preamble or a TC-RNTI configured for the UE by the eNB is used to scramble or mask a transmission channel and/or a control channel. The TC-RNTI may be acquired by predetermination between the eNB and the UE, or configured/notified to the UE by the eNB through a licensed carrier, or configured/notified to the UE through an unlicensed carrier, or predefined, or notified to the eNB and/or the UE through the high-layer RRC signaling, or notified to the eNB and/or the UE through the physical-layer DCI, or notified through MAC-layer signaling.

In the operation, the partial Msg3 is contained for the following purpose: since the unlicensed carrier is used based on a result of the LBT mechanism and/or the CCA detection and has certain uncertainty, once the right of use of the unlicensed carrier is acquired, some useful information, for example, information of a required resource size, traffic magnitude and the like, is sent in advance as much as possible to enable the eNB to allocate a more appropriate resource after receiving the Msg.

In 3, the eNB, after receiving the preamble and the partial Msg3, sends a response message to the UE, for example, the response message (for example, an RAR and/or a contention result response message) including TA and at least one of the following Msgs:

UL grant information, wherein the TC-RNTI transmitted by the eNB may be predetermined with the UE (for example, the TC-RNTI adopted for scrambling in Operation 2), or a new TC-RNTI sent to the UE by the eNB;
an UL grant Msg, a resource allocated in the UL grant Msg being configurable to send the remaining Msg3;
a preamble index; and
the C-RNTI, wherein the C-RNTI is configured to determine whether the UE succeeds in contention for not when the C-RNTI Msg is contained in Operation 2.

The eNB calculates an RA-RNTI according to a location of the time-domain and/or frequency-domain resource for the received preamble and then scramble a CRC in a corresponding PDCCH in the RAR using the RA-RNTI. Correspondingly, the eNB is also required to receive the partial Msg3 on the time-domain and/or frequency-domain resource for sending of the partial Msg3 and perform descrambling by adopting predefinition, or the TC-RNTI corresponding to the UE ID, or the TC-RNTI corresponding to a preamble sequence or the TC-RNTI predetermined by the eNB and the UE, thereby obtaining the partial Msg3.

The eNB may send the response message (for example, the RAR and/or a contention result) through the licensed carrier or the unlicensed carrier. For the latter condition, the eNB is required to implement the LBT mechanism and/or CCA detection at first, and may send the corresponding response message only after successfully contending for the unlicensed carrier.

In 4, the UE receives the response message sent by the eNB and sends the remaining Msg3 (in the embodiment, it may be determined that the remaining Msg3 is a new Msg3 because a message content is different from the original) on the resource corresponding to a corresponding UL grant.

That is, the UE adopts its own RA-RNTI for PDCCH descrambling and further decodes a PDSCH. If the obtained preamble index is consistent with its own preamble, reception succeeds. The Msg such as the TA, the TC-RNTI and the UL grant is acquired.

If the UE adopts the TC-RNTI for descrambling and further obtains information consistent with its own sending resource size request and/or the C-RNTI, it may be determined that random access succeeds.

In the operation, the UE, when sending the new Msg3 and performing scrambling, may adopt the TC-RNTI in the response message sent by the eNB (that is, the old TC-RNTI is replaced with the new TC-RNTI) or still adopt the TC-RNTI in Operation 2 (i.e., the old TC-RNTI). Here, the TC-RNTI scrambling the transmission channel may be acquired in the following manners: predefinition, or the TC-RNTI corresponding to the UE ID, or the TC-RNTI corresponding to the preamble sequence, or predetermination between the eNB and the UE. The remaining Msg3, for example, one of the UE ID, the SR, the C-RNTI or an RRC request, a handover request, the BSR and the like, is sent on the resource allocated in the UL grant.

In 5, the eNB sends a Msg4 according to the received new Msg3.

The eNB receives the new Msg3, scrambles it by use of the replaced new TC-RNTI, or the old TC-RNTI (i.e., predefinition, or, the TC-RNTI corresponding to the UE ID, or the TC-RNTI corresponding to the preamble sequence, or the TC-RNTI predetermined by the eNB and the UE) and contains the C-RNTI in the new Msg3, or the C-RNTI contained in the Msg1_1, or the UE ID or the TC-RNTI in the Msg4 sent to the UE.

In 6, the UE determines whether random access succeeds, namely determining whether random access succeeds by comparing the C-RNTI contained in the Msg4, and/or the TC-RNTI and/or the UE ID.

A second manner

In 1, the UE is required to implement LBT or CCA at first before sending the Msg on the unlicensed carrier. If the right of use of the unlicensed carrier is obtained by contention, the UE enters Operation 2. If the right of use of the unlicensed carrier is not obtained by contention, the UE is not allowed to send information on the unlicensed carrier. There is a special condition that the UE is not required to implement the LBT mechanism and/or the CCA detection to acquire the right of use of the unlicensed carrier but may send the Msg in the SCS manner.

In 2, the UE sends a Msg1_M on a time-domain and/or frequency-domain resource after the LBT mechanism and/or the CCA detection succeeds, wherein the Msg1_M includes the Msg1 and the Msg3. That is, the UE, after successfully contending for the unlicensed carrier, sends the preamble, the information in the Msg3 and the like together by adopting a one-step method.

The Msg1 is for sending of the preamble, wherein the preamble may correspond to the UE ID, or is predefined, or corresponds to the TC-RNTI, or is predetermined by the eNB and the UE or is notified through signaling (physical-layer DCI or high-layer RRC signaling). A time-domain and/or frequency-domain resource for sending of the Msg1 may be obtained by the physical-layer DCI, or the high-layer RRC signaling, or predefinition or predetermination between the eNB and the UE, and may also be determined according to the success moment of the LBT mechanism and/or the CCA detection, that is, the preamble is sent on the first available time-domain and/or frequency-domain resource after the success moment of the LBT mechanism and/or the CCA detection. The time-domain resource may include one or more subframes or k OFDM symbols. The frequency-domain resource occupies L PRBs. Wherein, k is a positive integer, and preferably, k is 2. L is any positive integer between [1, 100], and preferably, L is 6.

The Msg3 includes at least one of: the UE ID, or the C-RNTI, or the RRC request, or the handover Msg, or the SR, the BSR or the like.

The time-domain and/or frequency-domain resource for sending of the Msg3 may be predefined, or indicated by the eNB, or notified through the high-layer RRC, or notified through the physical-layer DCI, or the same as the time-domain resource for sending of the preamble but implicitly offset by an offset in the frequency domain, or different from the time-domain resource for sending of the preamble (for example, offset by an offset relative to the time-domain resource for sending of the preamble in the time domain) but the same or different in the frequency domain. Preferably, the time-domain resource for sending of the partial Msg3 is the same as the time-domain resource for sending of the preamble but offset by a certain offset in the frequency domain, or, the two resources are adjacent in the time domain and may adopt the same location in the frequency domain. The offset is at least from the frequency-domain resource for sending of the preamble to the boundary of the frequency-domain region available for the preamble. That is, the frequency-domain resource for sending of the Msg3 is a frequency-domain resource except the frequency-domain resource available for sending the preamble, and the time-domain resource is the same as the time-domain resource for sending of the preamble or is part of the time-domain resource. Here, the time-domain and/or frequency-domain resource for the Msg3 is not limited to the abovementioned time-domain and/or frequency-domain location.

Wherein, the TC-RNTI is used to scramble a corresponding transmission channel sending the Msg3. The TC-RNTI is predefined, or the TC-RNTI corresponding to the UE ID, or the TC-RNTI corresponding to the preamble sequence, or the TC-RNTI predetermined by the eNB and the UE.

In 3, after the eNB receives the Msg1_M, the eNB sends a Msg2_M, namely sending a response message, for example, the response message (for example, an RAR and/or a contention result response message) including TA and at least one of the following Msgs:

TC-RNTI information, wherein the TC-RNTI may be configured for the UE to use during random access of next time;
an UL grant Msg, wherein the UL grant Msg may be configured for the UE to use during random access of this time or next time;
a preamble index;
the C-RNTI, wherein the C-RNTI is a content contained in the Msg1_M reported by the UE; and
the UE ID, wherein the UE-ID is a content contained in the Msg1_M reported by the UE.

Wherein, a CRC in a corresponding PDCCH in the corresponding RAR may be scrambled by the RA-RNTI.

In Operation 3, the eNB may send the response message on a licensed carrier or an unlicensed carrier.

In 4, the UE receives the response message sent by the eNB and determines whether random access succeeds. The UE may receive the response message between +k subframes after sending the Msg1_M, wherein k is a positive integer, and preferably, k is 3, 4, 5, 6, 7, 8, 9 and the like.

The UE decodes the response message on the corresponding time-domain and/or frequency-domain resource for sending of the preamble and/or the corresponding control channel and/or the corresponding PDSCH, thereby acquiring a TA value, the UL grant, the C-RNTI and the UE ID. If succeeding in decoding, the UE may compare the C-RNTI or the UE ID to determine whether it succeeds in random access or not. If the C-RNTI or UE ID obtained by decoding is consistent with its own, random access succeeds.

In the embodiment of the disclosure, the LBT mechanism/CCA required to be implemented by sending of the preamble or related signaling or Msg sent by the eNB or UE side on the unlicensed carrier, for example, the preamble, PDCCH order triggering signaling, a Msg1, a Msg2, part or all of the Msg3, the Msg4, an SRS or a PUSCH, may be implemented according to one of the following LBT mechanisms or processes: LBT Cat4 (including two types: one is that it is detected in an eCCA process that the channel is busy in a slot and a defer period is entered, and the other is that it is detected in the eCCA process that the channel is busy in the slot and the defer period is not entered), or, LBT Cat2, or enhanced LBT Cat2 or a direct eCCA process (including two types, one is that it is detected in the eCCA process that the channel is busy in the slot and the defer period is entered, and the other is that it is detected in the eCCA process that the channel is busy in the slot and the defer period is not entered). An LBT Cat4 mechanism is adopted for downlink transmission on the unlicensed carrier, a contention window is relatively large, for example, 7,15,31,63,127,255,511,1023, and the eNB, for sending random access triggering signaling PDCCH order on the unlicensed carrier, may implement LBT Cat4 with a small contention window (for example, the contention window may be 1,2,3,4,5,6,7,8,9,10,11,12 or a simplified LBT mechanism (for example, LBT Cat2).

Wherein, an LBT Cat4 (i.e., defer period+eCCA process) flow is substantially as follows:

> transmission equipment (for example, the eNB or the UE) detects that the channel is clear in the defer period, may perform downlink transmission; and/or, the transmission equipment (for example, the eNB or the UE), after detecting that the channel is clear in the defer period, may perform downlink or UL transmission when a random backoff value N is progressively decreased to 0 according to the following operations.

Operation 1: an initial random backoff value N is set.

Wherein, the random backoff value N may be a number randomly generated by uniform distribution or binomial distribution between [0, CWp], or, a value of N may also be indicated by the eNB, or the value of N is predefined. CWp is a random number between CWmin and CWmax, wherein CWmin is a positive integer not smaller than 1, and CWmax is maximally 1,024. Preferably, CWmax may be 1, 2, 3, 4, 5, 6, 7, 11, 15, 31, 63, 127, 255 and the like.

Operation 2: it is determined whether a present value of N is larger than 0. If a judgment result is that N is larger than 0, an operation of progressively decreasing the value of N by a specific number is implemented.

Wherein, the specific number may be configured by the eNB or is predefined. Preferably, the specific number is 1, that is, an N=N-1 operation is implemented.

Operation 3: the equipment detects a channel clear condition in a slot, and if it is detected that the channel is clear in the slot, Operation 4 is implemented. On the contrary, if it is detected that the channel is busy in the slot, Operation 5 is implemented. Or, Operation 5 is not implemented, and Operation 3 is directly repeated.

Operation 4: it is determined whether the present value of N is equal to 0, and if YES, channel detection is stopped and it is determined that the right of use of the unlicensed carrier is acquired. On the contrary, if N is unequal to 0, Operation 2 is implemented.

Operation 5: a channel clear condition in the defer period is detected. If it is detected that the channel is clear in the defer period, Operation 2 is implemented. On the contrary, if it is detected that the channel is busy in the defer period, Operation 5 is repeatedly implemented. The defer period may be formed by adding n*slot to a fixed duration. n is a number more than or equal to 0. Preferably, n is 0, 1, 2, 3 and the like. A duration of the slot is 9us, and the fixed duration is 16us.

An LBT Cat2 flow is substantially as follows: a CCA detection starting moment may be fixed, or is dynamically variable, or is randomly selected in a plurality of time buckets in a specific interval, or is configured at a fixed location within the plurality of small time buckets within the specific interval. If it is detected that the channel which is busy turns to clear and time when it is continuously detected that the channel is clear is not shorter than a preset CCA duration, it is determined that the right of use of the unlicensed carrier is acquired. For the disclosure, the eNB may preferably adopt LBT Cat for channel access for transmission of the DCI. Wherein, the CCA duration may be a 16us+n*slot duration, n is an integer more than or equal to 0, and n is preferably 1, 2, 3 and the like. The duration of the slot is 9us. That is, the CCA duration may be 16us, or, 25us, 34us and the like, and may also be 9us or 4us.

A difference between enhanced LBT Cat2 and LBT Cat2 is that a CCA detection starting point may be randomly selected within a certain time bucket. This is favorable for fairness of contention between asynchronous systems for channel access and advanced contention of transmission equipment at an early CCA detection starting point for channel access. For example, if the certain time bucket is 10 and may be divided into 10 small segments of which each small segment occupies 1 part, transmission equipment 1 may determine a starting point of the third small segment in the 10 small segment as its own CCA detection starting point, and transmission equipment 2 may fixedly configure a starting point of the seventh small segment in the 10 small segments as its own CCA detection starting point. That is, different transmission equipment may randomly select their own CCA detection starting points and may also fixedly configure different starting locations.

The direct eCCA process: the eCCA process is formed by N slot processes and, when it is detected that the channel is busy in the slot, entering the defer period or not entering the defer period. N is the random backoff value, N is an integer randomly generated between [0, CWp] and CWp is an integer randomly generated between [CWmin, CWmax]. In addition, N may be indicated to the UE by the eNB, or is predefined. Preferably, N may be 1, 2 and 3. A maximum contention window CWmax may be a positive integer between [1, 63]. A specific eCCA process is as follows.

In 1, the random backoff value N is generated.

In 2, it is determined whether N is presently larger than 0. If N is larger than 0, Operation 3 is implemented. If N is equal to 0, it is determined that the right of use of the unlicensed carrier is acquired. In such a case, if the UE has yet not implemented slot detection or has yet not entered the eCCA process, it is necessary to reset the random backoff value N, and Operation 1 is implemented.

In 3, the transmission equipment detects whether the channel is clear or not in the slot, and if the channel is clear, Operation 4 is implemented. Or, if it is detected that the channel is busy, the defer period, i.e., Operation 5, is entered, or, the defer period is not entered but Operation 3 is directly repeated.

In 4, the operation of progressively decreasing the value of N by a certain number value is implemented, wherein the certain number value may be predefined, or indicated by the eNB, or predetermined by the eNB and the UE. Preferably, N=N-1. Operation 2 is implemented.

In 5, whether the channel is clear in the defer period or not is detected, and if it is assessed that the channel is clear, Operation 4 is implemented. If it is detected that the channel is busy, Operation 5 is repeated. The defer period is formed by 16us+n*slot, n is an integer more than or equal to 0, and n is preferably 0, 1, 2, 3 and the like. The duration of the slot is 9us.

An implementation sequence of the steps and/or processes in the abovementioned LBT mechanisms may be changed without influence.

From the above descriptions about the implementation modes, those skilled in the art may clearly know that the method according to the abovementioned embodiments may be implemented in a manner of combining software and a necessary universal hardware platform, and of course, may also be implemented through hardware, but the former is a preferred implementation mode under many circumstances. Based on such an understanding, the technical solutions of the disclosure substantially or parts making contributions to the conventional art may be embodied in form of software product, and the computer software product is stored in a storage medium, including a plurality of instructions configured to enable a piece of computer equipment (which may be a personal computer, a server, network equipment or the like) to implement the method of each embodiment of the disclosure.

An embodiment further provides preamble sending and receiving devices, which are configured to implement the abovementioned embodiments and preferred implementation modes. What has been described will not be elaborated. For example, term "module", used below, may be a combination of software and/or hardware capable of realizing a preset function. Although the devices described in the following embodiment are preferably implemented with software, implementation with hardware or a combination of the software and the hardware is also possible and conceivable.

FIG. 11 is a structure block diagram of a device for sending a preamble according to an embodiment of the disclosure. As shown in FIG. 11, the device includes: a first determination module 112 and a first sending module 114. The device will be described below.

The first determination module 112 is configured to determine a time-domain and/or frequency-domain resource for sending of a preamble on an unlicensed carrier; and the first sending module 114 is connected to the first determination module 112, and is configured to send the preamble on the determined time-domain and/or frequency-domain resource.

FIG. 12 is a first preferred structure block diagram of a first sending module 114 in a device for sending a preamble according to an embodiment of the disclosure. As shown in FIG. 12, the first sending module 114 includes a first sending unit 122. The first sending unit 122 will be described below.

The first sending unit 122 is configured to send the preamble on the time-domain and/or frequency-domain resource through an SCS.

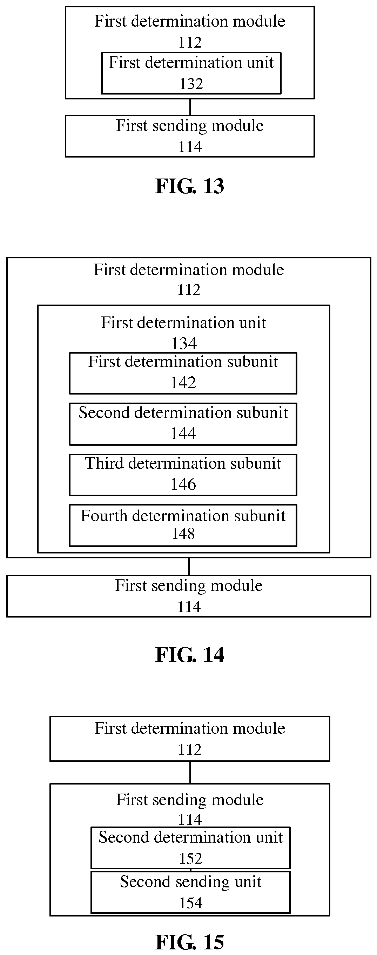

FIG. 13 is a preferred structure block diagram of a first determination module 112 in a device for sending a preamble according to an embodiment of the disclosure. As shown in FIG. 13, the first determination module 112 includes a first determination unit 132. The first determination module 112 will be described below.

The first determination unit 132 is configured to implement at least one of the following operations:

determining the time-domain and/or frequency-domain resource for sending of the preamble according to a predefined manner;
determining the time-domain and/or frequency-domain resource for sending of the preamble according to physical-layer DCI;
determining the time-domain and/or frequency-domain resource for sending of the preamble according to high-layer RRC signaling; and
determining the time-domain and/or frequency-domain resource for sending of the preamble according to an implementation result of an LBT mechanism and/or CCA detection.

FIG. 14 is a preferred structure block diagram of a first determination unit 132 in a first determination module 112 in a device for sending a preamble according to an embodiment of the disclosure. As shown in FIG. 14, the first determination unit 132 includes one of: a first determination subunit 142, a second determination subunit 144, a third determination subunit 146 and a fourth determination subunit 148. The first determination unit 132 will be described below.

The first determination subunit 142 is configured to, under the condition that the implementation result is that the LBT mechanism and/or the CCA detection succeeds before a first predetermined time-domain and/or frequency-domain resource on the unlicensed carrier, determine the first predetermined time-domain and/or frequency-domain resource as the time-domain and/or frequency-domain resource for sending of the preamble; the second determination subunit 144, configured to, under the condition that the implementation result is that the LBT mechanism and/or the CCA detection fails before the first predetermined time-domain and/or frequency-domain resource on the unlicensed carrier, continue implementing the LBT mechanism and/or the CCA detection, and under the condition that the LBT mechanism and/or the CCA detection succeeds on the unlicensed carrier, determine an adjacent time-domain and/or frequency-domain resource after a moment when the LBT mechanism and/or the CCA detection succeeds as the time-domain and/or frequency-domain resource for sending of the preamble; the third determination subunit 146 is configured to, under the condition that the implementation result is that the LBT mechanism and/or the CCA detection fails before the first predetermined time-domain and/or frequency-domain resource on the unlicensed carrier, implement the LBT mechanism and/or the CCA detection before a second predetermined time-domain and/or frequency-domain resource after the first predetermined time-domain and/or frequency-domain resource on the unlicensed carrier, and under the condition that the LBT mechanism and/or the CCA detection succeeds before the second predetermined time-domain and/or frequency-domain resource, determine the second predetermined time-domain and/or frequency-domain resource as the time-domain and/or frequency-domain resource for sending of the preamble; and the fourth determination subunit 148 is configured to, under the condition that the implementation result is that the LBT mechanism and/or the CCA detection fails before the first predetermined time-domain and/or frequency-domain resource on the unlicensed carrier, implement the LBT mechanism and/or the CCA detection in a time window for sending of the preamble on the unlicensed carrier, and under the condition that the LBT mechanism and/or the CCA detection succeeds before a third predetermined time-domain and/or frequency-domain resource in the time window, determine the third predetermined time-domain and/or frequency-domain resource as the time-domain and/or frequency-domain resource for sending of the preamble.

FIG. 15 is a second preferred structure block diagram of a first sending module 114 in a device for sending a preamble according to an embodiment of the disclosure. As shown in FIG. 15, the first sending module 114 includes a second determination unit 152 and a second sending unit 154. The first sending module 114 will be described below.

The second determination unit 152 is configured to determine, according to the determined time-domain and/or frequency-domain resource, a fourth predetermined time-domain and/or frequency-domain resource for sending of part or all of a content of a Msg3 on the unlicensed carrier; and the second sending unit 154 is connected to the second determination unit 152, and is configured to send the preamble on the determined time-domain and/or frequency-domain resource and send part or all of the content of the Msg3 on the determined fourth time-domain and/or frequency-domain resource.

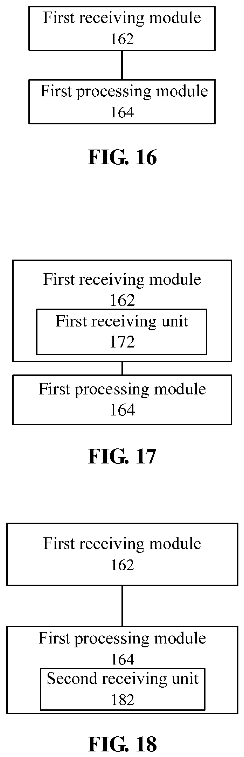

FIG. 16 is a structure block diagram of a device for receiving a preamble according to an embodiment of the disclosure. As shown in FIG. 16, the device includes: a first receiving module 162 and a first processing module 164. The device will be described below.

The first receiving module 162 is configured to receive a preamble sent by UE on a time-domain and/or frequency-domain resource on an unlicensed carrier; and the first processing module 164 is connected to the first receiving module 162, and is configured to implement random access processing for the UE according to the received preamble.

FIG. 17 is a preferred structure block diagram of a first receiving module 162 in a device for receiving a preamble according to an embodiment of the disclosure. As shown in FIG. 17, the first receiving module 162 includes a first receiving unit 172. The first receiving unit 172 will be described below.

The first receiving unit 172 is configured to receive the preamble sent by the UE on the time-domain and/or frequency-domain resource on the unlicensed carrier through an SCS.

FIG. 18 is a preferred structure block diagram of a first processing module 164 in a device for receiving a preamble according to an embodiment of the disclosure. As shown in FIG. 18, the first processing module 164 includes a second receiving unit 182. The second receiving unit 182 will be described below.

The second receiving unit 182 is configured to receive part or all of a content of a Msg3 on a fourth predetermined time-domain and/or frequency-domain resource on the unlicensed carrier, wherein the fourth predetermined time-domain and/or frequency-domain resource includes at least one of: a time-domain and/or frequency-domain resource which is the same in a time domain as the time-domain and/or frequency-domain resource and is offset by a third offset in a frequency domain relative to the time-domain and/or frequency-domain resource, and a time-domain and/or frequency-domain resource which is offset by a fourth offset in the time domain relative to the time-domain and/or frequency-domain resource and is the same in the frequency domain as the time-domain and/or frequency-domain resource.

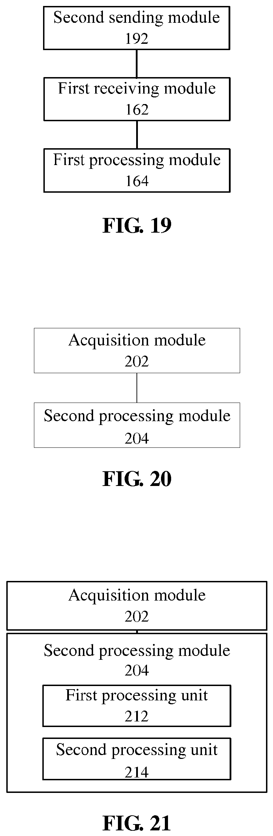

FIG. 19 is a preferred structure block diagram of a device for receiving a preamble according to an embodiment of the disclosure. As shown in FIG. 19, the device, besides all the structures shown in FIG. 16, further includes a second sending module 192. The second sending module 192 will be described below.

The second sending module 192 is connected to the first receiving module 162, and is configured to send, to the UE, an instruction for determination of the time-domain and/or frequency-domain resource and/or the fourth time-domain and/or frequency-domain resource and/or the preamble.

FIG. 20 is a structure block diagram of a first random access device according to an embodiment of the disclosure. As shown in FIG. 20, the device includes an acquisition module 202 and a second processing module 204. The device will be described below.

The acquisition module 202 is configured to acquire a right of use of an unlicensed carrier; and the second processing module 204 is connected to the acquisition module 202, and is configured to perform random access processing according to the unlicensed carrier of which the right of use is acquired.

FIG. 21 is a preferred structure block diagram of a second processing module 204 in a first random access device according to an embodiment of the disclosure. As shown in FIG. 21, the second processing module 204 includes a first processing unit 212 or a second processing unit 214. The second processing module 204 will be described below.

The first processing unit 212 is configured to send a Msg_1 to an eNB on the unlicensed carrier, the Msg_1 including a Msg1 containing a preamble for random access and/or a partial Msg3 containing part of a content of an Msg3, receive a first response message sent by the eNB according to the Msg_1, send the remaining Msg3 containing the remaining content, except part of the content, of the Msg3 to the eNB according to the first response message, receive a Msg4 sent by the eNB according to the remaining Msg3 and determine whether random access on the unlicensed carrier succeeds according to the Msg4; or,
the second processing unit 214 is configured to send a Msg_M to the eNB on the unlicensed carrier, the Msg_M including the Msg1 containing the preamble for random access and/or the Msg3 containing all of the content of the Msg3, receive a second response message sent by the eNB according to the Msg_M and determine whether random access on the unlicensed carrier succeeds according to the second response message.

Preferably, the first processing unit 212 is further configured to send the partial Msg3, and scramble a transmission channel and/or control channel sending the partial Msg3 using a first TC-RNTI; or, the second processing unit 214 is further configured to, before the Msg3 is sent, scramble a transmission channel and/or control channel sending the Msg3 using the first TC-RNTI.

Preferably, the first processing unit 212 is further configured to send the remaining Msg3, and scramble a transmission channel and/or control channel for sending of the remaining Msg3 using the first TC-RNTI or a second TC-RNTI.

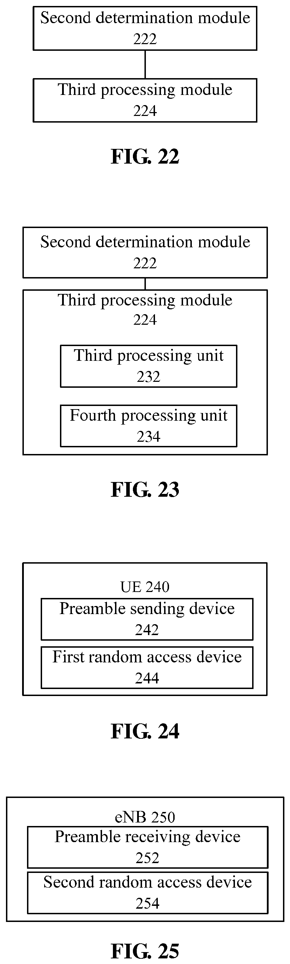

FIG. 22 is a structure block diagram of a second random access device according to an embodiment of the disclosure. As shown in FIG. 22, the device includes a second determination module 222 and a third processing module 224. The device will be described below.

The second determination module 222 is configured to determine an unlicensed carrier obtained by UE by contention; and the third processing module 224 is connected to the second determination module 222, and is configured to implement random access processing for the UE according to the determined unlicensed carrier.

FIG. 23 is a preferred structure block diagram of a third processing module 224 in a second random access device according to an embodiment of the disclosure. As shown in FIG. 23, the third processing module 224 includes a third processing unit 232 or a fourth processing unit 234. The third processing module 224 will be described below.

The third processing unit 232 is configured to receive a Msg_1 sent by the UE on the unlicensed carrier, the Msg_1 including a Msg1 containing a preamble for random access and/or a partial Msg3 containing part of a content of an Msg3, send a first response message to the UE based on the Msg_1, receive the remaining Msg3 sent by the UE according to the first response message and containing the remaining content, except part of the content, of the Msg3 and send a Msg4 to the UE according to the remaining Msg3, wherein the Msg4 is configured for the UE to determine whether random access on the unlicensed carrier succeeds; or,
the fourth processing unit 234 is configured to receive a Msg_M sent by the UE on the unlicensed carrier, the Msg_M including the Msg1 containing the preamble for random access and/or the Msg3 containing all of the content of the Msg3, and send a second response message to the UE according to the Msg_M, wherein the second response message is configured for the UE to determine whether random access on the unlicensed carrier succeeds.

Preferably, the third processing unit 232 is further configured to: send the first response message to the UE on a licensed carrier; or, implement an LBT mechanism and/or CCA detection on the unlicensed carrier and send the first response message on a time-domain and/or frequency-domain resource obtained by contention after the LBT mechanism and/or the CCA detection succeeds.

Preferably, the third processing unit 232 is further configured to, after the partial Msg3 is received, descramble the partial Msg3 using a first TC-RNTI; or, the fourth processing unit may further be configured to, after the Msg3 is received, descramble the Msg3 using the first TC-RNTI.

Preferably, the third processing unit 232 is further configured to, under the condition that the first response message contains a second TC-RNTI and the remaining Msg3 is received, descramble the received remaining Msg3 using the first TC-RNTI or the second TC-RNTI.

FIG. 24 is a structure block diagram of UE according to an embodiment of the disclosure. As shown in FIG. 24, the UE 240 includes any abovementioned device 242 for sending a preamble and/or any abovementioned first random access device 244.

FIG. 25 is a structure block diagram of an eNB according to an embodiment of the disclosure. As shown in FIG. 25, the eNB 250 includes any abovementioned device 252 for receiving a preamble and/or any abovementioned second random access device 254.

It is to be noted that each of the abovementioned modules may be implemented through software or hardware and the latter condition may be implemented in, but not limited to, the following manner: all of the modules are located in the same processor or the modules are located in multiple processors respectively.

An embodiment of the disclosure further provides a storage medium. Optionally, in the embodiment, the storage medium may be configured to store a program code for implementation of the following operations:

in S1, a time-domain and/or frequency-domain resource for sending of a preamble on an unlicensed carrier is determined; and
in S2, the preamble is sent on the determined time-domain and/or frequency-domain resource.

Optionally, the storage medium is further configured to store a program code for implementation of the following operation:
in S1, the operation that the preamble is sent on the determined time-domain and/or frequency-domain resource in S1 includes that: the preamble is sent on the time-domain and/or frequency-domain resource through an SCS.

Optionally, the storage medium is further configured to store a program code for implementation of the following operations:
the operation that the time-domain and/or frequency-domain resource for sending of the preamble on the unlicensed carrier is determined includes the following operations:

in S1, an LBT mechanism and/or CCA detection are/is implemented on the unlicensed carrier; and
in S2, the time-domain and/or frequency-domain resource for sending of the preamble on the unlicensed carrier is determined according to an implementation result of implementation of the LBT mechanism and/or the CCA detection.

Optionally, the storage medium is further configured to store a program code for implementation of the following operations:
the operation that the time-domain and/or frequency-domain resource for sending of the preamble on the unlicensed carrier is determined according to the implementation result of implementation of the LBT mechanism and/or the CCA detection includes one of the following operations:

in S1, under the condition that the implementation result is that the LBT mechanism and/or the CCA detection succeeds before a first predetermined time-domain and/or frequency-domain resource on the unlicensed carrier, the first predetermined time-domain and/or frequency-domain resource is determined as the time-domain and/or frequency-domain resource for sending of the preamble;
in S2, under the condition that the implementation result is that the LBT mechanism and/or the CCA detection fails before the first predetermined time-domain and/or frequency-domain resource on the unlicensed carrier, the LBT mechanism and/or the CCA detection are/is continued to be implemented on the unlicensed carrier, and under the condition that the LBT mechanism and/or the CCA detection succeeds on the unlicensed carrier, an adjacent time-domain and/or frequency-domain resource after a moment when the LBT mechanism and/or the CCA detection succeeds is determined as the time-domain and/or frequency-domain resource for sending of the preamble;
in S3, under the condition that the implementation result is that the LBT mechanism and/or the CCA detection fails before the first predetermined time-domain and/or frequency-domain resource on the unlicensed carrier, the LBT mechanism and/or the CCA detection are/is implemented before a second predetermined time-domain and/or frequency-domain resource after the first predetermined time-domain and/or frequency-domain resource on the unlicensed carrier, and under the condition that the LBT mechanism and/or the CCA detection succeeds before the second predetermined time-domain and/or frequency-domain resource, the second predetermined time-domain and/or frequency-domain resource is determined as the time-domain and/or frequency-domain resource for sending of the preamble; and
in S4, under the condition that the implementation result is that the LBT mechanism and/or the CCA detection fails before the first predetermined time-domain and/or frequency-domain resource on the unlicensed carrier, the LBT mechanism and/or the CCA detection are/is implemented in a time window configured to complementally send the preamble on the unlicensed carrier, and under the condition that the LBT mechanism and/or the CCA detection succeeds before a third predetermined time-domain and/or frequency-domain resource in the time window, the third predetermined time-domain and/or frequency-domain resource is determined as the time-domain and/or frequency-domain resource for sending of the preamble.

Optionally, the storage medium is further configured to store a program code for implementation of the following operation:
in S1, a region before the first predetermined time-domain and/or frequency-domain resource or before the second predetermined time-domain and/or frequency-domain resource or before the third predetermined time-domain and/or frequency-domain resource includes one of: a special subframe before the first predetermined time-domain and/or frequency-domain resource or before the second predetermined time-domain and/or frequency-domain resource or before the third predetermined time-domain and/or frequency-domain resource; an UL subframe before the first predetermined time-domain and/or frequency-domain resource or before the second predetermined time-domain and/or frequency-domain resource or before the third predetermined time-domain and/or frequency-domain resource; and a preamble subframe before the first predetermined time-domain and/or frequency-domain resource or before the second predetermined time-domain and/or frequency-domain resource or before the third predetermined time-domain and/or frequency-domain resource.

Optionally, the storage medium is further configured to store a program code for implementation of the following operation:

in S1, under the condition that the region before the first predetermined time-domain and/or frequency-domain resource or before the second predetermined time-domain and/or frequency-domain resource or before the third predetermined time-domain and/or frequency-domain resource is the special subframe, a region for implementation of the LBT mechanism and/or the CCA detection includes at least one of the following conditions: under the condition that the region before the first predetermined time-domain and/or frequency-domain resource or before the second predetermined time-domain and/or frequency-domain resource or before the third predetermined time-domain and/or frequency-domain resource is an UpPTS of the special subframe, the region for implementation of the LBT mechanism and/or the CCA detection includes at least one of: part or all of the UpPTS; part or all of a GP, and/or the UpPTS; part or all of a DwPTS, and/or the GP, and/or the UpPTS; last k symbols in a downlink subframe, and/or the DwPTS, and/or the GP, and/or the UpPTS; part or all of the UpPTS, and/or part or all of CP time; part or all of the GP, and/or the UpPTS, and/or part or all of the CP time; part or all of the DwPTS, and/or the GP, and/or the UpPTS, and/or part or all of the CP time; and the last k symbols in the downlink subframe, and/or the DwPTS, and/or the GP, and/or the UpPTS, and/or part or all of the CP time; and under the condition that the region before the first predetermined time-domain and/or frequency-domain resource or before the second predetermined time-domain and/or frequency-domain resource or before the third predetermined time-domain and/or frequency-domain resource is the GP of the special subframe, the region for implementation of the LBT mechanism and/or the CCA detection includes at least one of: part or all of GP time; part or all of the GP and/or part or all of the CP time; part or all of the DwPTS and/or the GP and/or part or all of the CP time; and the last k symbols in the downlink subframe, and/or the DwPTS, and/or the GP, and/or part or all of the CP time.

Optionally, the storage medium is further configured to store a program code for implementation of the following operation:

in S1, under the condition that the region before the first predetermined time-domain and/or frequency-domain resource or before the second predetermined time-domain and/or frequency-domain resource or before the third predetermined time-domain and/or frequency-domain resource is the UL subframe, the region for implementation of the LBT mechanism and/or the CCA detection includes at least one of the following conditions: under the condition that the region before the first predetermined time-domain and/or frequency-domain resource or before the second predetermined time-domain and/or frequency-domain resource or before the third predetermined time-domain and/or frequency-domain resource is the UL subframe and a PRACH exists in a previous subframe of the first predetermined time-domain and/or frequency-domain resource or in the second predetermined time-domain and/or frequency-domain resource or in the third predetermined time-domain and/or frequency-domain resource, the region for implementation of the LBT mechanism and/or the CCA detection includes at least one of: part or all of GT of the PRACH of the previous subframe, and part or all of the GT of the PRACH of the previous subframe and/or part or all of CP time of a present PRACH subframe where the first predetermined time-domain and/or frequency-domain resource or the second predetermined time-domain and/or frequency-domain resource or the third predetermined time-domain and/or frequency-domain resource is located; and under the condition that the region before the first predetermined time-domain and/or frequency-domain resource or before the second predetermined time-domain and/or frequency-domain resource or before the third predetermined time-domain and/or frequency-domain resource is the UL subframe and there is no PRACH in the previous subframe of the first predetermined time-domain and/or frequency-domain resource or of the second predetermined time-domain and/or frequency-domain resource or of the third predetermined time-domain and/or frequency-domain resource, the region for implementation of the LBT mechanism and/or the CCA detection includes at least one of: last k OFDM symbols of the previous subframe, and the last k OFDM symbols of the previous subframe and/or part or all of the CP time of the present PRACH subframe where the first predetermined time-domain and/or frequency-domain resource or the second predetermined time-domain and/or frequency-domain resource or the third predetermined time-domain and/or frequency-domain resource is located.

Optionally, the storage medium is further configured to store a program code for implementation of the following operation:

in S1, the first predetermined time-domain and/or frequency-domain resource and/or the second predetermined time-domain resource and/or the third predetermined time-domain resource are/is determined in at least one of the following manners: a determination manner of allocation to UE by an eNB; a determination manner of notification through physical-layer signaling; a determination manner of notification through high-layer signaling; a determination manner of negotiation between the eNB and the UE; and a determination manner of pre-configuration for the UE by a system.

Optionally, the storage medium is further configured to store a program code for implementation of the following operation:

in S1, under the condition that there are multiple adjacent time-domain and/or frequency-domain resources, the multiple adjacent time-domain and/or frequency-domain resources are time-domain and/or frequency-domain resources which are continuous in a time domain or time-domain and/or frequency-domain resources which are discrete in the time domain; and/or, under the condition that there are multiple second predetermined time-domain and/or frequency-domain resources, the multiple second time-domain and/or frequency-domain resources are time-domain and/or frequency-domain resources which are continuous in the time domain or time-domain and/or frequency-domain resources which are discrete in the time domain; and/or, under the condition that there are multiple third time-domain and/or frequency-domain resources in the time window, the multiple third time-domain and/or frequency-domain resources are time-domain and/or frequency-domain resources which are continuous in the time domain or time-domain and/or frequency-domain resources which are discrete in the time domain.

Optionally, the storage medium is further configured to store a program code for implementation of the following operation:

in S1, the multiple adjacent time-domain and/or frequency-domain resources, or the multiple second predetermined time-domain and/or frequency-domain resources or the multiple third time-domain and/or frequency-domain resources which are time-domain and/or frequency-domain resources discrete in the time domain include at least one of: time-domain and/or frequency-domain resources at the same interval and with different resource block sizes in the time domain; time-domain and/or frequency-domain resources at the same interval in the time domain and with the same resource block size; time-domain and/or frequency-domain resources at different intervals in the time domain and with different resource block sizes; and time-domain and/or frequency-domain resources at different intervals in the time domain and with the same resource block size.

Optionally, the storage medium is further configured to store a program code for implementation of the following operation:

in S1, the first predetermined time-domain and/or frequency-domain resource includes K subframes or N OFDM symbols in the time domain, wherein K and N are integers more than or equal to 1.

Optionally, the storage medium is further configured to store a program code for implementation of the following operation:

in S1, the time window may be located after the first predetermined time-domain and/or frequency-domain resource, or may be located before the first predetermined time-domain and/or frequency-domain resource or may include the first predetermined time-domain and/or frequency-domain resource.

Optionally, the storage medium is further configured to store a program code for implementation of the following operation:

in S1, the third predetermined time-domain and/or frequency-domain resource in the time window is determined through the following parameters: a first offset configured to identify an offset distance between the first predetermined time-domain and/or frequency-domain resource and a starting point of the time window; a second offset configured to identify an offset distance between the third predetermined time-domain and/or frequency-domain resource for sending of the preamble in the time window and the starting point of the time window; a size of the third predetermined time-domain and/or frequency-domain resource; a number of the third predetermined time-domain and/or frequency-domain resources; a window length of the time window; and an interval between the third predetermined time-domain and/or frequency-domain resources.

Optionally, the storage medium is further configured to store a program code for implementation of the following operations:

the operation that the preamble is sent on the determined time-domain and/or frequency-domain resource includes the following operations:

> in S1, a fourth predetermined time-domain and/or frequency-domain resource for sending of part or all of a content of a Msg3 on the unlicensed carrier is determined according to the determined time-domain and/or frequency-domain resource; and
> in S2, the preamble is sent on the determined time-domain and/or frequency-domain resource, and part or all of the content of the Msg3 is sent on the determined fourth time-domain and/or frequency-domain resource.

Optionally, the storage medium is further configured to store a program code for implementation of the following operation:

in S1, the fourth time-domain and/or frequency-domain resource includes at least one of: a time-domain and/or frequency-domain resource which is the same in the time domain as the time-domain and/or frequency-domain resource and is offset by a third offset in a frequency domain relative to the time-domain and/or frequency-domain resource; and a time-domain and/or frequency-domain resource which is offset by a fourth offset in the time domain relative to the time-domain and/or frequency-domain resource and is the same in the frequency domain as the time-domain and/or frequency-domain resource.

An embodiment of the disclosure further provides another storage medium. Optionally, in the embodiment, the storage medium may be configured to store a program code for implementation of the following operations:

in S1, a preamble sent by UE on a time-domain and/or frequency-domain resource on an unlicensed carrier is received; and
in S2, random access processing for the UE is implemented according to the received preamble.

Optionally, the storage medium is further configured to store a program code for implementation of the following operation:
the operation that the preamble sent by the UE on the time-domain and/or frequency-domain resource on the unlicensed carrier is received includes the following operation:
in S1, the preamble sent by the UE on the time-domain and/or frequency-domain resource on the unlicensed carrier through an SCS is received.

Optionally, the storage medium is further configured to store a program code for implementation of the following operation:
the operation that random access processing for the UE is implemented according to the received preamble includes the following operation:
in S1, part or all of a content of a Msg3 is received on a fourth predetermined time-domain and/or frequency-domain resource on the unlicensed carrier, wherein the fourth predetermined time-domain and/or frequency-domain resource includes at least one of: a time-domain and/or frequency-domain resource which is the same in a time domain as the time-domain and/or frequency-domain resource and is offset by a third offset in a frequency domain relative to the time-domain and/or frequency-domain resource, and a time-domain and/or frequency-domain resource which is offset by a fourth offset in the time domain relative to the time-domain and/or frequency-domain resource and is the same in the frequency domain as the time-domain and/or frequency-domain resource.

Optionally, the storage medium is further configured to store a program code for implementation of the following operation:
in S1, before the operation that the preamble sent by the UE on the time-domain and/or frequency-domain resource on the unlicensed carrier is received, the method further includes that: an instruction for determination of the time-domain and/or frequency-domain resource and/or the fourth time-domain and/or frequency-domain resource and/or the preamble is sent to the UE.

An embodiment of the disclosure further provides a storage medium. Optionally, in the embodiment, the storage medium may be configured to store a program code for implementation of the following operations:

in S1, a right of use of an unlicensed carrier is acquired; and
in S2, random access processing is performed according to the unlicensed carrier of which the right of use is acquired.

Optionally, the storage medium is further configured to store a program code for implementation of the following operations:
the operation that random access processing is performed according to the carrier includes the following operations:

in S1, a Msg_1 is sent to an eNB on the unlicensed carrier, the Msg_1 including a Msg1 containing a preamble for random access and/or a partial Msg3 containing part of a content of the Msg3, a first response message sent by the eNB according to the Msg_1 is received, the remaining Msg3 containing the remaining content, except part of the content, of the Msg3 is sent to the eNB according to the first response message, a Msg4 sent by the eNB according to the remaining Msg3 is received and whether random access on the unlicensed carrier succeeds is determined according to the Msg4; or,
in S2, a Msg_M is sent to the eNB on the unlicensed carrier, the Msg_M including the Msg1 containing the preamble for random access and/or the Msg3 containing all of the content of the Msg3, a second response message sent by the eNB according to the Msg_M is received and whether random access on the unlicensed carrier succeeds is determined according to the second response message.

Optionally, the storage medium is further configured to store a program code for implementation of the following operations:

in S1, a time-domain and/or frequency-domain resource for sending of the Msg1 is the same as or different from a time-domain and/or frequency-domain resource for sending of the partial Msg3; or,
in S2, the time-domain and/or frequency-domain resource for sending of the Msg1 is the same as or different from a time-domain and/or frequency-domain resource for sending of the Msg3.

Optionally, the storage medium is further configured to store a program code for implementation of the following operations:
in S1, part of the content of the Msg3 includes at least one of: a UE ID, a C-RNTI, an RRC request, an SR and a BSR.

Optionally, the storage medium is further configured to store a program code for implementation of the following operation:
in S1, the operation that the partial Msg3 and/or the Msg3 are/is sent further includes that: a first TC-RNTI is used to scramble a transmission channel and/or control channel for sending of the partial Msg3 and/or the Msg3.

Optionally, the storage medium is further configured to store a program code for implementation of the following operations:

in S1, the TC-RNTI is acquired through at least one of the following corresponding relationships: a corresponding relationship between a TC-RNTI and a preamble, a corresponding relationship between a TC-RNTI and a UE ID and a corresponding relationship between a TC-RNTI and each of a preamble and a UE ID; or,
in S2, the TC-RNTI is acquired in at least one of the following manners: an acquisition manner of predetermination between the eNB and UE, an acquisition manner of notifying or configuring the UE by the eNB, an acquisition manner of notification through high-layer signaling, an acquisition manner of notification through physical-layer signaling and an acquisition manner of notification through MAC-layer signaling.

Optionally, the storage medium is further configured to store a program code for implementation of the following operation:
in S1, the first response message contains at least one of the following information: a second TC-RNTI, UL grant information, a preamble index and the C-RNTI.

Optionally, the storage medium is further configured to store a program code for implementation of the following operation:
in S1, the operation that the remaining Msg3 is sent further includes that: the first TC-RNTI or the second TC-RNTI is used to scramble a transmission channel and/or control channel for sending of the remaining Msg3.

An embodiment of the disclosure further provides another storage medium. Optionally, in the embodiment, the storage medium may be configured to store a program code for implementation of the following operations:

in S1, an unlicensed carrier obtained by UE by contention is determined; and
in S2, random access processing for the UE is implemented according to the determined unlicensed carrier.

Optionally, the storage medium is further configured to store a program code for implementation of the following operations:
the operation that random access processing for the UE is implemented according to the determined unlicensed carrier includes the following operations:

in S1, a Msg_1 sent by the UE is received on the unlicensed carrier, the Msg_1 including a Msg1 containing a preamble for random access and/or a partial Msg3 containing part of a content of an Msg3, a first response message is sent to the UE based on the Msg_1, the remaining Msg3 sent by the UE according to the first response message and containing the remaining content, except part of the content, of the Msg3 is received and a Msg4 is sent to the UE according to the remaining Msg3, wherein the Msg4 is configured for the UE to determine whether random access on the unlicensed carrier succeeds; or,
in S2, a Msg_M sent by the UE is received on the unlicensed carrier, the Msg_M including the Msg1 containing the preamble for random access and/or the Msg3 containing all of the content of the Msg3, and a second response message is sent to the UE according to the Msg_M, wherein the second response message is configured for the UE to determine whether random access on the unlicensed carrier succeeds.

Optionally, the storage medium is further configured to store a program code for implementation of the following operations:
the operation that the first response message is sent to the UE based on the Mssg_1 includes the following operations:

in S1, the first response message is sent to the UE on a licensed carrier; or,
in S2, an LBT mechanism and/or CCA detection are/is implemented on the unlicensed carrier, and the first response message is sent on a time-domain and/or frequency-domain resource obtained by contention after the LBT mechanism and/or the CCA detection succeeds.

Optionally, the storage medium is further configured to store a program code for implementation of the following operation:
in S1, after the operation that the partial Msg3 and/or the Msg3 are/is received, the method further includes that: the partial Msg3 and/or the Msg3 is descrambled using a first TC-RNTI.

Optionally, the storage medium is further configured to store a program code for implementation of the following operation:
in S1, under the condition that the first response message contains a second TC-RNTI and the remaining Msg3 is received, the received remaining Msg3 is descrambled using the first TC-RNTI or the second TC-RNTI.

Optionally, in the embodiment, the storage medium may include, but not limited to: various media capable of storing program codes such as a U disk, a Read-Only Memory (ROM), a Random Access Memory (RAM), a mobile hard disk, a magnetic disk or an optical disk.

Optionally, in the embodiment, a processor implements, according to the program code stored in the storage medium, the following operations: a time-domain and/or frequency-domain resource for sending of a preamble on an unlicensed carrier is determined; and the preamble is sent on the determined time-domain and/or frequency-domain resource.

Optionally, in the embodiment, the processor executes, according to the program code stored in the storage medium the following operation: the operation that the preamble is sent on the determined time-domain and/or frequency-domain resource includes that: the preamble is sent on the time-domain and/or frequency-domain resource through an SCS.

Optionally, in the embodiment, the processor executes, according to the program code stored in the storage medium the following operation: the operation that the time-domain and/or frequency-domain resource for sending of the preamble on the unlicensed carrier is determined includes that: an LBT mechanism and/or CCA detection are/is implemented on the unlicensed carrier; and the time-domain and/or frequency-domain resource for sending of the preamble on the unlicensed carrier is determined according to an implementation result of implementation of the LBT mechanism and/or the CCA detection.

Optionally, in the embodiment, the processor executes, according to the program code stored in the storage medium the following operation: the operation that the time-domain and/or frequency-domain resource for sending of the preamble on the unlicensed carrier is determined according to the implementation result of implementation of the LBT mechanism and/or the CCA detection includes one of the following operations: under the condition that the implementation result is that the LBT mechanism and/or the CCA detection succeeds before a first predetermined time-domain and/or frequency-domain resource on the unlicensed carrier, the first predetermined time-domain and/or frequency-domain resource is determined as the time-domain and/or frequency-domain resource for sending of the preamble; under the condition that the implementation result is that the LBT mechanism and/or the CCA detection fails before the first predetermined time-domain and/or frequency-domain resource on the unlicensed carrier, the LBT mechanism and/or the CCA detection are/is continued to be implemented on the unlicensed carrier, and under the condition that the LBT mechanism and/or the CCA detection succeeds on the unlicensed carrier, an adjacent time-domain and/or frequency-domain resource after a moment when the LBT mechanism and/or the CCA detection succeeds is determined as the time-domain and/or frequency-domain resource for sending of the preamble; under the condition that the implementation result is that the LBT mechanism and/or the CCA detection fails before the first predetermined time-domain and/or frequency-domain resource on the unlicensed carrier, the LBT mechanism and/or the CCA detection are/is implemented before a second predetermined time-domain and/or frequency-domain resource after the first predetermined time-domain and/or frequency-domain resource on the unlicensed carrier, and under the condition that the LBT mechanism and/or the CCA detection succeeds before the second predetermined time-domain and/or frequency-domain resource, the second predetermined time-domain and/or frequency-domain resource is determined as the time-domain and/or frequency-domain resource for sending of the preamble; and under the condition that the implementation result is that the LBT mechanism and/or the CCA detection fails before the first predetermined time-domain and/or frequency-domain resource on the unlicensed carrier, the LBT mechanism and/or the CCA detection are/is implemented in a time window configured to complementally send the preamble on the unlicensed carrier, and under the condition that the LBT mechanism and/or the CCA detection succeeds before a third predetermined time-domain and/or frequency-domain resource in the time window, the third predetermined time-domain and/or frequency-domain resource is determined as the time-domain and/or frequency-domain resource for sending of the preamble.

Optionally, in the embodiment, the processor executes, according to the program code stored in the storage medium the following operation: a region before the first predetermined time-domain and/or frequency-domain resource or before the second predetermined time-domain and/or frequency-domain resource or before the third predetermined time-domain and/or frequency-domain resource includes one of: a special subframe before the first predetermined time-domain and/or frequency-domain resource or before the second predetermined time-domain and/or frequency-domain resource or before the third predetermined time-domain and/or frequency-domain resource; an UL subframe before the first predetermined time-domain and/or frequency-domain resource or before the second predetermined time-domain and/or frequency-domain resource or before the third predetermined time-domain and/or frequency-domain resource; and a preamble subframe before the first predetermined time-domain and/or frequency-domain resource or before the second predetermined time-domain and/or frequency-domain resource or before the third predetermined time-domain and/or frequency-domain resource.

Optionally, in the embodiment, the processor executes, according to the program code stored in the storage medium the following operation: under the condition that the region before the first predetermined time-domain and/or frequency-domain resource or before the second predetermined time-domain and/or frequency-domain resource or before the third predetermined time-domain and/or frequency-domain resource is the special subframe, a region for implementation of the LBT mechanism and/or the CCA detection includes at least one of the following conditions: under the condition that the region before the first predetermined time-domain and/or frequency-domain resource or before the second predetermined time-domain and/or frequency-domain resource or before the third predetermined time-domain and/or frequency-domain resource is an UpPTS of the special subframe, the region for implementation of the LBT mechanism and/or the CCA detection includes at least one of: part or all of the UpPTS; part or all of a GP, and/or the UpPTS; part or all of a DwPTS, and/or the GP, and/or the UpPTS; last k symbols in a downlink subframe, and/or the DwPTS, and/or the GP, and/or the UpPTS; part or all of the UpPTS and/or part or all of CP time; part or all of the GP, and/or the UpPTS, and/or part or all of the CP time; part or all of the DwPTS, and/or the GP, and/or the UpPTS, and/or part or all of the CP time; and the last k symbols in the downlink subframe, and/or the DwPTS, and/or the GP, and/or the UpPTS, and/or part or all of the CP time; and under the condition that the region before the first predetermined time-domain and/or frequency-domain resource or before the second predetermined time-domain and/or frequency-domain resource or before the third predetermined time-domain and/or frequency-domain resource is the GP of the special subframe, the region for implementation of the LBT mechanism and/or the CCA detection includes at least one of: part or all of GP time; part or all of the GP and/or part or all of the CP time; part or all of the DwPTS, and/or the GP, and/or part or all of the CP time; and the last k symbols in the downlink subframe, and/or the DwPTS, and/or the GP, and/or part or all of the CP time.

Optionally, in the embodiment, the processor executes, according to the program code stored in the storage medium the following operation: under the condition that the region before the first predetermined time-domain and/or frequency-domain resource or before the second predetermined time-domain and/or frequency-domain resource or before the third predetermined time-domain and/or frequency-domain resource is the UL subframe, the region for implementation of the LBT mechanism and/or the CCA detection includes at least one of the following conditions: under the condition that the region before the first predetermined time-domain and/or frequency-domain resource or before the second predetermined time-domain and/or frequency-domain resource or before the third predetermined time-domain and/or frequency-domain resource is the UL subframe and a PRACH exists in a previous subframe of the first predetermined time-domain and/or frequency-domain resource or in the second predetermined time-domain and/or frequency-domain resource or in the third predetermined time-domain and/or frequency-domain resource, the region for implementation of the LBT mechanism and/or the CCA detection includes at least one of: part or all of GT of the PRACH of the previous subframe, and part or all of the GT of the PRACH of the previous subframe and/or part or all of CP time of a present PRACH subframe where the first predetermined time-domain and/or frequency-domain resource or the second predetermined time-domain and/or frequency-domain resource or the third predetermined time-domain and/or frequency-domain resource is located; and under the condition that the region before the first predetermined time-domain and/or frequency-domain resource or before the second predetermined time-domain and/or frequency-domain resource or before the third predetermined time-domain and/or frequency-domain resource is the UL subframe and there is no PRACH in the previous subframe of the first predetermined time-domain and/or frequency-domain resource or of the second predetermined time-domain and/or frequency-domain resource or of the third predetermined time-domain and/or frequency-domain resource, the region for implementation of the LBT mechanism and/or the CCA detection includes at least one of: last k OFDM symbols of the previous subframe, and the last k OFDM symbols of the previous subframe and/or part or all of the CP time of the present PRACH subframe where the first predetermined time-domain and/or frequency-domain resource or the second predetermined time-domain and/or frequency-domain resource or the third predetermined time-domain and/or frequency-domain resource is located.

Optionally, in the embodiment, the processor executes, according to the program code stored in the storage medium the following operation: the first predetermined time-domain and/or frequency-domain resource and/or the second predetermined time-domain resource and/or the third predetermined time-domain resource are/is determined in at least one of the following manners: a determination manner of allocation to UE by an eNB; a determination manner of notification through physical-layer signaling; a determination manner of notification through high-layer signaling; a determination manner of negotiation between the eNB and the UE; and a determination manner of pre-configuration for the UE by a system.

Optionally, in the embodiment, the processor executes, according to the program code stored in the storage medium the following operation: under the condition that there are multiple adjacent time-domain and/or frequency-domain resources, the multiple adjacent time-domain and/or frequency-domain resources are time-domain and/or frequency-domain resources which are continuous in a time domain or time-domain and/or frequency-domain resources which are discrete in the time domain; and/or, under the condition that there are multiple second predetermined time-domain and/or frequency-domain resources, the multiple second time-domain and/or frequency-domain resources are time-domain and/or frequency-domain resources which are continuous in the time domain or time-domain and/or frequency-domain resources which are discrete in the time domain; and/or, under the condition that there are multiple third time-domain and/or frequency-domain resources in the time window, the multiple third time-domain and/or frequency-domain resources are time-domain and/or frequency-domain resources which are continuous in the time domain or time-domain and/or frequency-domain resources which are discrete in the time domain.

Optionally, in the embodiment, the processor executes, according to the program code stored in the storage medium the following operation: the multiple adjacent time-domain and/or frequency-domain resources, or the multiple second predetermined time-domain and/or frequency-domain resources or the multiple third time-domain and/or frequency-domain resources which are time-domain and/or frequency-domain resources discrete in the time domain include at least one of: time-domain and/or frequency-domain resources at the same interval and with different resource block sizes in the time domain; time-domain and/or frequency-domain resources at the same interval in the time domain and with the same resource block size; time-domain and/or frequency-domain resources at different intervals in the time domain and with different resource block sizes; and time-domain and/or frequency-domain resources at different intervals in the time domain and with the same resource block size.

Optionally, in the embodiment, the processor executes, according to the program code stored in the storage medium the following operation: the first predetermined time-domain and/or frequency-domain resource includes K subframes or N OFDM symbols in the time domain, wherein K and N are integers more than or equal to 1.

Optionally, in the embodiment, the processor executes, according to the program code stored in the storage medium the following operation: the time window may be located after the first predetermined time-domain and/or frequency-domain resource, or may be located before the first predetermined time-domain and/or frequency-domain resource or may include the first predetermined time-domain and/or frequency-domain resource.

Optionally, in the embodiment, the processor executes, according to the program code stored in the storage medium the following operation: the third predetermined time-domain and/or frequency-domain resource in the time window is determined through the following parameters: a first offset configured to identify an offset distance between the first predetermined time-domain and/or frequency-domain resource and a starting point of the time window; a second offset configured to identify an offset distance between the third predetermined time-domain and/or frequency-domain resource for sending of the preamble in the time window and the starting point of the time window; a size of the third predetermined time-domain and/or frequency-domain resource; a number of the third predetermined time-domain and/or frequency-domain resources; a window length of the time window; and an interval between the third predetermined time-domain and/or frequency-domain resources.

Optionally, in the embodiment, the processor executes, according to the program code stored in the storage medium the following operation: the operation that the preamble is sent on the determined time-domain and/or frequency-domain resource includes the following operations: a fourth predetermined time-domain and/or frequency-domain resource for sending of part or all of a content of a Msg3 on the unlicensed carrier is determined according to the determined time-domain and/or frequency-domain resource; and the preamble is sent on the determined time-domain and/or frequency-domain resource, and part or all of the content of the Msg3 is sent on the determined fourth time-domain and/or frequency-domain resource.

Optionally, in the embodiment, the processor executes, according to the program code stored in the storage medium the following operation: the fourth time-domain and/or frequency-domain resource includes at least one of: a time-domain and/or frequency-domain resource which is the same in the time domain as the time-domain and/or frequency-domain resource and is offset by a third offset in a frequency domain relative to the time-domain and/or frequency-domain resource; and a time-domain and/or frequency-domain resource which is offset by a fourth offset in the time domain relative to the time-domain and/or frequency-domain resource and is the same in the frequency domain as the time-domain and/or frequency-domain resource.

Optionally, in the embodiment, the processor executes, according to the program code stored in the storage medium the following operations: a preamble sent by UE on a time-domain and/or frequency-domain resource on an unlicensed carrier is received; and random access processing for the UE is implemented according to the received preamble.

Optionally, in the embodiment, the processor executes, according to the program code stored in the storage medium the following operation: the operation that the preamble sent by the UE on the time-domain and/or frequency-domain resource on the unlicensed carrier is received includes the following operation: the preamble sent by the UE on the time-domain and/or frequency-domain resource on the unlicensed carrier through an SCS is received.

Optionally, in the embodiment, the processor executes, according to the program code stored in the storage medium the following operation: the operation that random access processing for the UE is implemented according to the received preamble includes the following operation: part or all of a content of a Msg3 is received on a fourth predetermined time-domain and/or frequency-domain resource on the unlicensed carrier, wherein the fourth predetermined time-domain and/or frequency-domain resource includes at least one of: a time-domain and/or frequency-domain resource which is the same in a time domain as the time-domain and/or frequency-domain resource and is offset by a third offset in a frequency domain relative to the time-domain and/or frequency-domain resource, and a time-domain and/or frequency-domain resource which is offset by a fourth offset in the time domain relative to the time-domain and/or frequency-domain resource and is the same in the frequency domain as the time-domain and/or frequency-domain resource.

Optionally, in the embodiment, the processor executes, according to the program code stored in the storage medium the following operation: before the operation that the preamble sent by the UE on the time-domain and/or frequency-domain resource on the unlicensed carrier is received, the method further includes that: an instruction for determination of the time-domain and/or frequency-domain resource and/or the fourth time-domain and/or frequency-domain resource and/or the preamble is sent to the UE.

Optionally, in the embodiment, the processor executes, according to the program code stored in the storage medium the following operations: a right of use of an unlicensed carrier is acquired; and random access processing is performed according to the unlicensed carrier of which the right of use is acquired.

Optionally, in the embodiment, the processor executes, according to the program code stored in the storage medium the following operation: the operation that random access processing is performed according to the carrier includes the following operations: a Msg_1 is sent to an eNB on the unlicensed carrier, the Msg_1 including a Msg1 containing a preamble for random access and/or a partial Msg3 containing part of a content of the Msg3, a first response message sent by the eNB according to the Msg_1 is received, the remaining Msg3 containing the remaining content, except part of the content, of the Msg3 is sent to the eNB according to the first response message, a Msg4 sent by the eNB according to the remaining Msg3 is received and whether random access on the unlicensed carrier succeeds is determined according to the Msg4; or, a Msg_M is sent to the eNB on the unlicensed carrier, the Msg_M including the Msg1 containing the preamble for random access and/or the Msg3 containing all of the content of the Msg3, a second response message sent by the eNB according to the Msg_M is received and whether random access on the unlicensed carrier succeeds is determined according to the second response message.

Optionally, in the embodiment, the processor executes, according to the program code stored in the storage medium the following operation: a time-domain and/or frequency-domain resource for sending of the Msg1 is the same as or different from a time-domain and/or frequency-domain resource for sending of the partial Msg3; or, the time-domain and/or frequency-domain resource for sending of the Msg1 is the same as or different from a time-domain and/or frequency-domain resource for sending of the Msg3.

Optionally, in the embodiment, the processor executes, according to the program code stored in the storage medium the following operation: part of the content of the Msg3 includes at least one of: a UE ID, a C-RNTI, an RRC request, an SR and a BSR.

Optionally, in the embodiment, the processor executes, according to the program code stored in the storage medium the following operation: the operation that the partial Msg3 and/or the Msg3 are/is sent further includes that: a transmission channel and/or control channel for sending of the partial Msg3 and/or the Msg3 is scrambled using a first TC-RNTI.

Optionally, in the embodiment, the processor executes, according to the program code stored in the storage medium the following operation: the TC-RNTI is acquired through at least one of the following corresponding relationships: a corresponding relationship between a TC-RNTI and a preamble, a corresponding relationship between a TC-RNTI and a UE ID and a corresponding relationship between a TC-RNTI and each of a preamble and a UE ID; or, the TC-RNTI is acquired in at least one of the following manners: an acquisition manner of predetermination between the eNB and UE, an acquisition manner of notifying or configuring the UE by the eNB, an acquisition manner of notification through high-layer signaling, an acquisition manner of notification through physical-layer signaling and an acquisition manner of notification through MAC-layer signaling.

Optionally, in the embodiment, the processor executes, according to the program code stored in the storage medium the following operation: the first response message contains at least one of the following information: a second TC-RNTI, UL grant information, a preamble index and the C-RNTI.

Optionally, in the embodiment, the processor executes, according to the program code stored in the storage medium the following operation: the operation that the remaining Msg3 is sent further includes that: the first TC-RNTI or the second TC-RNTI is used to scramble a transmission channel and/or control channel for sending of the remaining Msg3.

Optionally, in the embodiment, the processor executes, according to the program code stored in the storage medium the following operations: an unlicensed carrier obtained by UE by contention is determined; and random access processing for the UE is implemented according to the determined unlicensed carrier.

Optionally, in the embodiment, the processor executes, according to the program code stored in the storage medium the following operation: the operation that random access processing for the UE is implemented according to the determined unlicensed carrier includes the following operations: a Msg_1 sent by the UE is received on the unlicensed carrier, the Msg_1 including a Msg1 containing a preamble for random access and/or a partial Msg3 containing part of a content of the Msg3, a first response message is sent to the UE based on the Msg_1, the remaining Msg3 sent by the UE according to the first response message and containing the remaining content, except part of the content, of the Msg3 is received and a Msg4 is sent to the UE according to the remaining Msg3, wherein the Msg4 is configured for the UE to determine whether random access on the unlicensed carrier succeeds; or, a Msg_M sent by the UE is received on the unlicensed carrier, the Msg_M including the Msg1 containing the preamble for random access and/or the Msg3 containing all of the content of the Msg3, and a second response message is sent to the UE according to the Msg_M, wherein the second response message is configured for the UE to determine whether random access on the unlicensed carrier succeeds.

Optionally, in the embodiment, the processor executes, according to the program code stored in the storage medium the following operation: the operation that the first response message is sent to the UE based on the Mssg_1 includes the following operations: the first response message is sent to the UE on a licensed carrier; or, an LBT mechanism and/or CCA detection are/is implemented on the unlicensed carrier, and the first response message is sent on a time-domain and/or frequency-domain resource obtained by contention after the LBT mechanism and/or the CCA detection succeeds.

Optionally, in the embodiment, the processor executes, according to the program code stored in the storage medium the following operation: after the operation that the partial Msg3 and/or the Msg3 are/is received, the method further includes that: the partial Msg3 and/or the Msg3 is descrambled using a first TC-RNTI.

Optionally, in the embodiment, the processor executes, according to the program code stored in the storage medium the following operation: under the condition that the first response message contains a second TC-RNTI and the remaining Msg3 is received, the received remaining Msg3 is descrambled using the first TC-RNTI or the second TC-RNTI.

Optionally, specific examples in the embodiment may refer to the examples described in the abovementioned embodiments and optional implementation modes and will not be elaborated in the embodiment.

Obviously, those skilled in the art should know that each module or each step of the disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for implementation with the computing devices, the shown or described steps may be implemented in sequences different from those described here in some circumstances, or may form each integrated circuit module respectively, or multiple modules or steps therein may form a single integrated circuit module for implementation. As a consequence, the disclosure is not limited to any specific hardware and software combination.

The above is only the preferred embodiment of the disclosure and not intended to limit the disclosure.

**INDUSTRIAL APPLICABILITY**

As mentioned above, the preamble sending and receiving methods and devices, UE and eNB provided by the embodiments of the disclosure have the following beneficial effects: the problem of incapability of implementing a random access process on the unlicensed carrier in the related art is solved, and an effect of successfully implementing random access on the unlicensed carrier is further achieved.

**Claims**

**1.** A method for sending a preamble, applied to a user equipment, comprising:

determining (S102) a time-domain and/or frequency-domain resource for sending the preamble;
determining a time-domain and/or frequency-domain resource for sending part or all of a content of a Message 3, Msg3 according to the time-domain and/or frequency-domain resource for sending the preamble and
sending (S104) the preamble on the time-domain resource for sending of the preamble, and sending the part or all of the content of the Msg3 on the time-domain and/or frequency-domain resource for sending the part or all of the content of the Msg3;
wherein the time-domain and/or frequency-domain resource for sending the part or all of the content of the Msg3 comprises one of:

the time-domain and/or frequency-domain resource for sending the part or all of the content of the Msg3 is the same as the time-domain resource for sending the preamble and is offset by a first offset in a frequency domain; and
the time-domain and/or frequency-domain resource for sending the part or all of the content of the Msg3 is the same as the frequency-domain resource for sending the preamble and is offset by a second offset in a time domain.

**2.** The method according to claim 1, wherein determining the time-domain and/or frequency-domain resource for sending the preamble comprises one of:

under the condition that a Listen Before Talk, LBT, mechanism and/or Clear Channel Assessment, CCA, detection succeeds before a first predetermined time-domain and/or frequency-domain resource, determining the first predetermined time-domain and/or frequency-domain resource as the time-domain and/or frequency-domain resource for sending of the preamble;
under the condition that the LBT mechanism and/or the CCA detection fails before the first predetermined time-domain and/or frequency-domain resource, continuing performing the LBT mechanism and/or the CCA detection, and under the condition that the LBT mechanism and/or the CCA detection succeeds, determining a time-domain and/or frequency-domain resource after a position when the LBT mechanism and/or the CCA detection succeeds as the time-domain and/or frequency-domain resource for sending the preamble;
under the condition that the LBT mechanism and/or the CCA detection fails before the first predetermined time-domain and/or frequency-domain resource, performing the LBT mechanism and/or the CCA detection before a second predetermined time-domain and/or frequency-domain resource after the first predetermined time-domain and/or frequency-domain resource, and under the condition that the LBT mechanism and/or the CCA detection succeeds before the second predetermined time-domain and/or frequency-domain resource, determining the second predetermined time-domain and/or frequency-domain resource as the time-domain and/or frequency-domain resource for sending the preamble; and
under the condition that the LBT mechanism and/or the CCA detection fails before the first predetermined time-domain and/or frequency-domain resource, performing the LBT mechanism and/or the CCA detection in a time window for sending the preamble, and under the condition that the LBT mechanism and/or the CCA detection succeeds before a third predetermined time-domain and/or frequency-domain resource in the time window, determining the third predetermined time-domain and/or frequency-domain resource as the time-domain and/or frequency-domain resource for sending the preamble.

**3.** The method according to claim 2, wherein, under the condition that a region before the first predetermined time-domain and/or frequency-domain resource or before the second predetermined time-domain and/or frequency-domain resource or before the third predetermined time-domain and/or frequency-domain resource is an Uplink, UL, subframe, a region for performing the LBT mechanism and/or the CCA detection comprises at least one of:

under the condition that the region before the first predetermined time-domain and/or frequency-domain resource or before the second predetermined time-domain and/or frequency-domain resource or before the third predetermined time-domain and/or frequency-domain resource is the UL subframe and a Physical Random Access Channel, PRACH, exists in a previous subframe of the first predetermined time-domain and/or frequency-domain resource or in the second predetermined time-domain and/or frequency-domain resource or in the third predetermined time-domain and/or frequency-domain resource, the region for performing the LBT mechanism and/or the CCA detection comprises at least one of: part or all of Gap Time, GT, of the PRACH of a previous subframe; and part or all of the GT of the PRACH of the previous subframe, and/or part or all of Cyclic Prefix, CP, time of a present PRACH subframe where the first predetermined time-domain and/or frequency-domain resource or the second predetermined time-domain and/or frequency-domain resource or the third predetermined time-domain and/or frequency-domain resource is located; and
under the condition that the region before the first predetermined time-domain and/or frequency-domain resource or before the second predetermined time-domain and/or frequency-domain resource or before the third predetermined time-domain and/or frequency-domain resource is the UL subframe and there is no PRACH in the previous subframe of the first predetermined time-domain and/or frequency-domain resource or of the second predetermined time-domain and/or frequency-domain resource or of the third predetermined time-domain and/or frequency-domain resource, the region for performing the LBT mechanism and/or the CCA detection comprises at least one of: last k Orthogonal Frequency Division Multiplexing, OFDM, symbols of the previous subframe; and the last k OFDM symbols of the previous subframe, and/or part or all of the CP time of the present PRACH subframe where the first predetermined time-domain and/or frequency-domain resource or the second predetermined time-domain and/or frequency-domain resource or the third predetermined time-domain and/or frequency-domain resource is located.

**4.** The method according to claim 2, wherein at least one of the first predetermined time-domain and/or frequency-domain resource, the second predetermined time-domain and/or frequency-domain resource, the third predetermined time-domain and/or frequency-domain resource and a starting location or duration or ending location of LBT/CCA or the CP or the GT or the PRACH resource is determined in at least one of the following manners:

a determination manner of allocation to User Equipment, UE, by an Evolved Node B, eNB;
a determination manner of notification through physical-layer signaling;
a determination manner of notification through high-layer signaling;
a determination manner of negotiation between the eNB and the UE; and
a determination manner of pre-configuration for the UE by a system.

**5.** The method according to claim 1, wherein, sending the preamble comprises at least one of:

performing the LBT mechanism and/or the CCA detection, determining the time-domain and/or frequency-domain resource for sending the preamble according to a result of performing the LBT mechanism and/or the CCA detection, and performing the LBT mechanism and/or the CCA detection succeeds, sending the preamble on the determined time-domain and/or frequency-domain resource;
sending the preamble on a time window; and
after performing the LBT mechanism and/or the CCA detection succeeds, sending the preamble on a configured time-domain and/or frequency-domain resource.

**6.** The method according to claim 2, in a case where under the condition that the LBT mechanism and/or the CCA detection fails before the first predetermined time-domain and/or frequency-domain resource, performing the LBT mechanism and/or the CCA detection in a time window for sending the preamble, and under the condition that the LBT mechanism and/or the CCA detection succeeds before a third predetermined time-domain and/or frequency-domain resource in the time window, determining the third predetermined time-domain and/or frequency-domain resource as the time-domain and/or frequency-domain resource for sending the preamble, the time window is located after the first predetermined time-domain and/or frequency-domain resource, or located before the first predetermined time-domain and/or frequency-domain resource or comprises the first predetermined time-domain and/or frequency-domain resource.

**7.** The method according to claim 2, wherein the third predetermined time-domain and/or frequency-domain resource in the time window is determined through the following parameters:

a third offset configured to identify an offset distance between the first predetermined time-domain and/or frequency-domain resource and a starting point of the time window;
a fourth offset configured to identify an offset distance between the third predetermined time-domain and/or frequency-domain resource for sending the preamble in the time window and the starting point of the time window;
a size of the third predetermined time-domain and/or frequency-domain resource;
a number of third predetermined time-domain and/or frequency-domain resources;
a window length of the time window; and
a time domain interval between the third predetermined time-domain and/or frequency-domain resources.

**8.** The method according to claim 7, wherein the part of the content of the Msg3 comprises at least one of: a User Equipment, UE, Identity, ID, a Cell Radio Network Temporary Identifier, C-RNTI, a Radio Resource Control, RRC, request, a Scheduling Request, SR, and a Buffer Status Report, BSR.

**9.** A device for sending a preamble, **characterized by** comprising:

a first determination module (112), configured to determine a time-domain and/or frequency-domain resource for sending the preamble;
a second determination unit (152), configured to determine a time-domain and/or frequency-domain resource for sending part or all of a content of a Message , Msg3 according to the time-domain and/or frequency-domain resource for sending the preamble; and
a second sending unit (154) configured to send the preamble on the time-domain and/or frequency-domain resource for sending the preamble and send the part or all of the content of the Msg3 on the time-domain and/or frequency domain resource for sending the part or all of the content of the Msg3;
wherein the time-domain and/or frequency-domain resource for sending the part or all of the content of the Msg3 comprises one of:

the time-domain and/or frequency-domain resource for sending the part or all of the content of the Msg3 is the same as the time-domain resource for sending the preamble and is offset by a first offset in a frequency domain;
and the time-domain and/or frequency-domain resource for sending the part or all of the content of the Msg3 is the same as the frequency-domain resource for sending the preamble and is offset by a second offset in a time domain.

**Patentansprüche**

1. Verfahren zum Senden einer Präambel, angewandt auf ein Benutzergerät, umfassend:

   Bestimmen (S102) einer Zeitdomänen- und/oder Frequenzdomänenressource zum Senden der Präambel;
   Bestimmen einer Zeitdomänen- und/oder Frequenzdomänenressource zum Senden eines Teils oder des gesamten Inhalts einer Nachricht 3, Msg3, gemäß der Zeitdomänen- und/oder Frequenzdomänenressource zum Senden der Präambel, und
   Senden (S104) der Präambel auf der Zeitdomänenressource zum Senden der Präambel, und Senden des gesamten oder eines Teils des Inhalts der Msg3 auf der Zeitdomänen- und/oder Frequenzdomänenressource zum Senden des gesamten oder eines Teils des Inhalts der Msg3;
   wobei die Zeitdomänen- und/oder Frequenzdomänenressource zum Senden des gesamten oder eines Teils des Inhalts der Msg3 eines der folgenden Elemente umfasst:

   die Zeitdomänen- und/oder Frequenzdomänenressource zum Senden des gesamten oder eines Teils des Inhalts von Msg3 gleich ist wie die Zeitdomänenressource zum Senden der Präambel und um einen ersten Offset in einer Frequenzdomäne versetzt ist; und
   die Zeitdomänen- und/oder Frequenzdomänenressource zum Senden des gesamten oder eines Teils des Inhalts von Msg3 gleich ist wie die Frequenzdomänenressource zum Senden der Präambel und um einen zweiten Offset in einer Zeitdomäne versetzt ist.

2. Verfahren nach Anspruch 1, wobei ein Bestimmen der Zeitdomänen- und/oder Frequenzdomänenressource zum Senden der Präambel eines von unter der Bedingung, dass ein Mechanismus Listen Before Talk, LBT, und/oder eine Erkennung von Freikanal-Analyse, CCA, vor einer ersten vorbestimmten Zeitdomänen- und/oder Frequenzdomänenressource erfolgreich ist, Bestimmen der ersten vorbestimmten Zeitdomänen- und/oder Frequenzdomänenressource als die Zeitdomänen- und/oder Frequenzdomänenressource zum Senden der Präambel umfasst;

   unter der Bedingung, dass der LBT-Mechanismus und/oder die CCA-Erkennung vor der ersten vorbestimmten Zeitdomänen- und/oder Frequenzdomänenressource fehlschlägt, Fortsetzen der Durchführung des LBT-Mechanismus und/oder der CCA-Erkennung, und unter der Bedingung, dass der LBT-Mechanismus und/oder die CCA-Erkennung erfolgreich ist, Bestimmen einer Zeitdomänen- und/oder Frequenzdomänenressource nach einer Position, wenn der LBT-Mechanismus und/oder die CCA-Erkennung erfolgreich ist, als die Zeitdomänen- und/oder Frequenzdomänenressource zum Senden der Präambel;
   unter der Bedingung, dass der LBT-Mechanismus und/oder die CCA-Erkennung vor der ersten vorbestimmten Zeitdomänen- und/oder Frequenzdomänenressource fehlschlägt, Durchführen des LBT-Mechanismus und/oder der CCA-Erkennung vor einer zweiten vorbestimmten Zeitdomänen- und/oder Frequenzdomänenressource nach der ersten vorbestimmten Zeitdomänen- und/oder Frequenzdomänenressource, und unter der Bedingung, dass der LBT-Mechanismus und/oder die CCA-Erkennung vor der zweiten vorbestimmten Zeitdomänen- und/oder Frequenzdomänenressource erfolgreich ist, Bestimmen der zweiten vorbestimmten Zeitdomänen- und/oder Frequenzdomänenressource als die Zeitdomänen- und/oder Frequenzdomänenressource zum Senden der Präambel; und
   unter der Bedingung, dass der LBT-Mechanismus und/oder die CCA-Erkennung vor der ersten vorbestimmten Zeitdomänen- und/oder Frequenzdomänenressource fehlschlägt, Durchführen des LBT-Mechanismus und/oder der CCA-Erkennung in einem Zeitfenster zum Senden der Präambel, und unter der Bedingung, dass der LBT-Mechanismus und/oder die CCA-Erkennung vor einer dritten vorbestimmten Zeitdomänen- und/oder Frequenzdomänenressource in dem Zeitfenster erfolgreich ist, Bestimmen der dritten vorbestimmten Zeitdomänen- und/oder Frequenzdomänenressource als die Zeitdomänen- und/oder Frequenzdomänenressource zum Senden der Präambel.

3. Verfahren nach Anspruch 2, wobei unter der Bedingung, dass ein Bereich vor der ersten vorbestimmten Zeitdomänen- und/oder Frequenzdomänenressource oder vor der zweiten vorbestimmten Zeitdomänen- und/oder Frequenzdomänenressource oder vor der dritten vorbestimmten Zeitdomänen- und/oder Frequenzdomänenressource ein Teilrahmen von Uplink, UL, ist, ein Bereich zum Durchführen des LBT-Mechanismus und/oder der CCA-Erkennung mindestens eines von Folgendem umfasst:

   unter der Bedingung, dass der Bereich vor der ersten vorbestimmten Zeitdomänen- und/oder Frequenzdomänenressource oder vor der zweiten vorbestimmten Zeitdomänen- und/oder Frequenzdomänenressource oder vor der dritten vorbestimmten Zeitdomänen- und/oder Frequenzdomänenressource der UL-Teilrahmen ist und ein physikalischer Direktzugriffskanal, PRACH, in einem vorherigen Teilrahmen der ersten vorbestimmten Zeitdomänen- und/oder Frequenzdomänenressource oder in der zweiten vorbestimmten Zeitdomänen- und/oder Frequenzdomänenressource oder in der dritten vorbestimmten Zeitdomänen- und/oder Frequenzdomänenressource vorhanden ist, umfasst der Bereich zum Durchführen des LBT-Mechanismus und/oder der CCA-Erkennung mindestens eines von Folgenden: einen Teil oder die Gesamtheit der Zeitlücke, GT, des PRACH eines vorherigen Subframes; und einen Teil oder die Gesamtheit der GT des PRACH des vorherigen Subframes, und/oder einen Teil oder die Gesamtheit der Zeit für zyklisches Präfix, CP, eines gegenwärtigen PRACH-Subframes, wo sich die erste vorbestimmte Zeitdomänen- und/oder Frequenzdomänenressource oder die zweite vorbestimmte Zeitdomänen- und/oder Frequenzdomänenressource oder die dritte vorbestimmte Zeitdomänen- und/oder Frequenzdomänenressource befindet; und

unter der Bedingung, dass der Bereich vor der ersten vorbestimmten Zeitdomänen- und/oder Frequenzdomänenressource oder vor der zweiten vorbestimmten Zeitdomänen- und/oder Frequenzdomänenressource oder vor der dritten vorbestimmten Zeitdomänen- und/oder Frequenzdomänenressource der UL-Teilrahmen ist und es keinen PRACH in dem vorherigen Teilrahmen der ersten vorbestimmten Zeitdomänen- und/oder Frequenzdomänenressource oder der zweiten vorbestimmten Zeitdomänen- und/oder Frequenzdomänenressource oder der dritten vorbestimmten Zeitdomänen- und/oder Frequenzdomänenressource gibt, der Bereich zum Durchführen des LBT-Mechanismus und/oder der CCA-Erkennung mindestens eines von Folgenden umfasst: die letzten Symbole für k orthogonales Frequenzmultiplexing, OFDM, des vorherigen Teilrahmens; und die letzten k OFDM-Symbole des vorherigen Teilrahmens und/oder einen Teil oder die gesamte CP-Zeit des gegenwärtigen PRACH-Teilrahmens, in dem sich die erste vorbestimmte Zeitdomänen- und/oder Frequenzdomänenressource oder die zweite vorbestimmte Zeitdomänen- und/oder Frequenzdomänenressource oder die dritte vorbestimmte Zeitdomänen- und/oder Frequenzdomänenressource befindet.

4. Verfahren nach Anspruch 2, wobei mindestens eine von der ersten vorbestimmten Zeitdomänen- und/oder Frequenzdomänenressource, der zweiten vorbestimmten Zeitdomänen- und/oder Frequenzdomänenressource, der dritten vorbestimmten Zeitdomänen- und/oder Frequenzdomänenressource und ein Startort oder eine Dauer oder ein Endort von LBT/CCA oder der CP oder der GT oder der PRACH-Ressource auf mindestens eine der folgenden Weisen bestimmt wird:

eine Art und Weise einer Zuweisung an Benutzergeräte (UE) durch einen Evolved Node B (eNB);
eine Art und Weise einer Benachrichtigung durch Signalisierung auf der physikalischen Ebene;
eine Art und Weise einer Benachrichtigung durch Signalisierung auf hoher Ebene;
eine Art und Weise einer Verhandlung zwischen dem eNB und dem UE; und
eine Art und Weise einer Bestimmung der Vorkonfiguration für das UE durch ein System.

5. Verfahren nach Anspruch 1, wobei ein Senden der Präambel mindestens eines von Folgenden umfasst:

Durchführen des LBT-Mechanismus und/oder der CCA-Erkennung, Bestimmen der Zeitdomänen- und/oder Frequenzdomänenressource zum Senden der Präambel gemäß einem
Resultat der Durchführung des LBT-Mechanismus und/oder der CCA-Erkennung und, wenn die Durchführung des LBT-Mechanismus und/oder die CCA-Erkennung erfolgreich ist, Senden der Präambel auf der bestimmten Zeitdomänen- und/oder Frequenzbereichressource;
Senden der Präambel in einem Zeitfenster; und
nach erfolgreicher Durchführung des LBT-Mechanismus und/oder der CCA-Erkennung Senden der Präambel in einer konfigurierten Zeitdomänen- und/oder Frequenzdomänenressource.

6. Verfahren nach Anspruch 2, in einem Fall, in dem unter der Bedingung, dass der LBT-Mechanismus und/oder die CCA-Erkennung vor der ersten vorbestimmten Zeitdomänen- und/oder Frequenzdomänenressource fehlschlägt, der LBT-Mechanismus und/oder die CCA-Erkennung in einem Zeitfenster zum Senden der Präambel durchgeführt wird, und unter der Bedingung, dass der LBT-Mechanismus und/oder die CCA-Erkennung vor einer dritten vorbestimmten Zeitdomänen- und/oder Frequenzdomänenressource im Zeitfenster erfolgreich ist, Bestimmen der dritten vorbestimmten Zeitdomänen- und/oder Frequenzdomänenressource als die Zeitdomänen- und/oder Frequenzdomänenressource zum Senden der Präambel, wobei das Zeitfenster nach der ersten vorbestimmten Zeitdomänen- und/oder Frequenzdomänenressource liegt oder vor der ersten vorbestimmten Zeitdomänen- und/oder Frequenzdomänenressource liegt oder die erste vorbestimmte Zeitdomänen- und/oder Frequenzdomänenressource umfasst.

**7.** Verfahren nach Anspruch 2, wobei die dritte vorbestimmte Zeitdomänen- und/oder Frequenzdomänenressource in dem Zeitfenster durch die folgenden Parameter bestimmt wird:

einen dritten Offset, der so konfiguriert ist, dass er einen Offset-Abstand zwischen der ersten vorbestimmten Zeitdomänen- und/oder Frequenzdomänenressource und einem Startpunkt des Zeitfensters identifiziert;
einen vierten Offset, der konfiguriert ist, um einen Offset-Abstand zwischen der dritten vorbestimmten Zeitdomänen- und/oder Frequenzdomänenressource zum Senden der Präambel in dem Zeitfenster und dem Startpunkt des Zeitfensters zu identifizieren;
eine Größe der dritten vorbestimmten Zeitdomänen- und/oder Frequenzdomänenressource;
eine Anzahl dritter vorbestimmter Ressourcen in der Zeitdomänen- und/oder Frequenzdomänenressource;
eine Fensterlänge des Zeitfensters; und
ein Zeitdomänenintervall zwischen der dritten vorbestimmten Zeitdomänen- und/oder Frequenzdomänenressource.

**8.** Verfahren nach Anspruch 7, wobei der Teil des Inhalts der Msg3 mindestens eines von Folgenden umfasst: eine Identität eines Benutzergeräts, UE, eine Zellenfunknetz-Kennung, C-RNTI, eine Funkressourcensteuerung, RRC, Anfrage, eine Zeitplanungsanfrage, SR, und einen Pufferstatusbericht, BSR.

**9.** Vorrichtung zum Senden einer Präambel, **dadurch gekennzeichnet, dass** sie Folgendes umfasst:

ein erstes Bestimmungsmodul (112), das konfiguriert ist, dass es eine Zeitdomänen- und/oder Frequenzdomänenressource zum Senden der Präambel zu bestimmen;
eine zweite Bestimmungseinheit (152), die konfiguriert ist, um eine Zeitdomänen- und/oder Frequenzdomänenressource zum Senden eines Teils oder des gesamten Inhalts einer Nachricht, Msg3, gemäß der Zeitdomänen- und/oder Frequenzdomänenressource zum Senden der Präambel zu bestimmen; und
eine zweite Sendeeinheit (154), die bestätigt, die Präambel auf der Zeitdomänen- und/oder Frequenzdomänenressource zum Senden der Präambel zu senden und den Teil oder den gesamten Inhalt der Msg3 auf der Zeitdomänen- und/oder Frequenzdomänenressource zum Senden des Teils oder des gesamten Inhalts der Msg3 zu senden;
wobei die Zeitdomänen- und/oder Frequenzdomänenressource zum Senden des gesamten oder eines Teils des Inhalts der Msg3 eines der folgenden Elemente umfasst:

die Zeitdomänen- und/oder Frequenzdomänenressource zum Senden des gesamten oder eines Teils des Inhalts der Msg3 gleich ist wie die Zeitdomänenressource zum Senden der Präambel und um einen ersten Versatz in einer Frequenzdomäne versetzt ist;
und die Zeitdomänen- und/oder Frequenzdomänenressource zum Senden des gesamten oder eines Teils des Inhalts von Msg3 gleich ist wie die Frequenzdomänenressource zum Senden der Präambel und um einen zweiten Offset in einer Zeitdomäne versetzt ist.

## Revendications

**1.** Procédé d'envoi d'un préambule, appliqué à un équipement d'utilisateur, comprenant :

la détermination (S102) d'une ressource du domaine temporel et/ou du domaine fréquentiel pour l'envoi du préambule ;
la détermination d'une ressource du domaine temporel et/ou du domaine fréquentiel pour l'envoi d'une partie ou de la totalité d'un contenu d'un message 3, Msg3, en fonction de la ressource du domaine temporel et/ou du domaine fréquentiel pour l'envoi du préambule, et
l'envoi (S104) du préambule sur la ressource du domaine temporel pour l'envoi du préambule, et envoi de la partie ou de la totalité du contenu du Msg3 sur la ressource du domaine temporel et/ou du domaine fréquentiel pour l'envoi de la partie ou de la totalité du contenu du Msg3 ;
dans lequel la ressource du domaine temporel et/ou du domaine fréquentiel pour l'envoi de la partie ou de la totalité du contenu du Msg3 comprend l'un des éléments suivants :

la ressource du domaine temporel et/ou du domaine fréquentiel pour l'envoi de la partie ou de la totalité du contenu du Msg3 est la même que la ressource du domaine temporel pour l'envoi du préambule et est décalée d'un premier décalage dans un domaine fréquentiel ; et
la ressource du domaine temporel et/ou du domaine fréquentiel pour l'envoi de la partie ou de la totalité du contenu du Msg3 est la même que la ressource du domaine fréquentiel pour l'envoi du préambule et est décalée d'un second décalage dans un domaine temporel.

**2.** Procédé selon la revendication 1, dans lequel la détermination de la ressource du domaine temporel et/ou du domaine fréquentiel pour l'envoi du préambule comprend l'un des éléments suivants : à la condition qu'un mécanisme Listen Before Talk, LBT, et/ou une détection Clear Channel Assessment, CCA, réussisse avant une première ressource prédéterminée du domaine temporel et/ou du domaine fréquentiel, la détermination de la première ressource prédéterminée du domaine temporel et/ou du domaine fréquentiel comme la ressource du domaine temporel et/ou du domaine fréquentiel pour l'envoi du préambule ;

à condition que le mécanisme LBT et/ou la détection CCA échouent avant la première ressource prédéterminée du domaine temporel et/ou du domaine fréquentiel, la poursuite de l'exécution du mécanisme LBT et/ou de la détection CCA, et à condition que le mécanisme LBT et/ou la détection CCA réussissent, la détermination d'une ressource du domaine temporel et/ou du domaine fréquentiel après une position où le mécanisme LBT et/ou la détection CCA réussissent comme la ressource du domaine temporel et/ou du domaine fréquentiel pour l'envoi du préambule ;
à condition que le mécanisme LBT et/ou la détection CCA échouent avant la première ressource prédéterminée du domaine temporel et/ou du domaine fréquentiel, l'exécution du mécanisme LBT et/ou de la détection CCA avant une deuxième ressource prédéterminée du domaine temporel et/ou du domaine fréquentiel après la première ressource prédéterminée du domaine temporel et/ou du domaine fréquentiel, et à la condition que le mécanisme LBT et/ou la détection CCA réussissent avant la deuxième ressource prédéterminée du domaine temporel et/ou du domaine fréquentiel, la détermination de la deuxième ressource prédéterminée du domaine temporel et/ou du domaine fréquentiel comme la ressource du domaine temporel et/ou du domaine fréquentiel pour l'envoi du préambule ; et
à condition que le mécanisme LBT et/ou la détection CCA échouent avant la première ressource prédéterminée du domaine temporel et/ou du domaine fréquentiel, l'exécution du mécanisme LBT et/ou de la détection CCA dans une fenêtre temporelle pour l'envoi du préambule, et à condition que le mécanisme LBT et/ou la détection CCA réussissent avant une troisième ressource prédéterminée du domaine temporel et/ou du domaine de fréquence dans la fenêtre temporelle, la détermination de la troisième ressource prédéterminée du domaine temporel et/ou du domaine fréquentiel comme la ressource du domaine temporel et/ou du domaine fréquentiel pour l'envoi du préambule.

**3.** Procédé selon la revendication 2, dans lequel, à la condition qu'une région précédant la première ressource prédéterminée du domaine temporel et/ou du domaine fréquentiel ou précédant la deuxième ressource prédéterminée du domaine temporel et/ou du domaine fréquentiel ou précédant la troisième ressource prédéterminée du domaine temporel et/ou du domaine fréquentiel soit une sous-trame de liaison montante (UL), une région pour l'exécution du mécanisme LBT et/ou de la détection CCA comprend au moins l'un des éléments suivants :

à condition que la région précédant la première ressource prédéterminée du domaine temporel et/ou du domaine fréquentiel ou précédant la deuxième ressource prédéterminée du domaine temporel et/ou du domaine fréquentiel ou précédant la troisième ressource prédéterminée du domaine temporel et/ou du domaine fréquentiel soit la sous-trame UL et qu'un canal d'accès physique aléatoire, PRACH, existe dans une sous-trame précédente de la première ressource prédéterminée du domaine temporel et/ou du domaine fréquentiel ou dans la deuxième ressource prédéterminée du domaine temporel et/ou du domaine fréquentiel ou dans la troisième ressource prédéterminée du domaine temporel et/ou du domaine fréquentiel, la région pour l'exécution du mécanisme LBT et/ou de la détection CCA comprend au moins l'un des éléments suivants : une partie ou la totalité du temps d'intervalle, GT, du PRACH d'une sous-trame précédente ; et une partie ou la totalité du GT du PRACH de la sous-trame précédente, et/ou une partie ou la totalité de la durée du préfixe cyclique, CP, d'une sous-trame PRACH actuelle où se trouve la première ressource prédéterminée du domaine temporel et/ou du domaine fréquentiel ou la deuxième ressource prédéterminée du domaine temporel et/ou du domaine fréquentiel ou la troisième ressource prédéterminée du domaine temporel et/ou du domaine fréquentiel ; et
à condition que la région précédant la première ressource prédéterminée du domaine temporel et/ou du domaine fréquentiel ou précédant la deuxième ressource prédéterminée du domaine temporel et/ou du domaine fréquentiel ou précédant la troisième ressource prédéterminée du domaine temporel et/ou du domaine fréquentiel soit la sous-trame UL et qu'il n'y ait pas de PRACH dans la sous-trame précédente de la première ressource prédéterminée du domaine temporel et/ou du domaine fréquentiel ou de la deuxième ressource prédéterminée du domaine temporel et/ou du domaine fréquentiel ou de la troisième ressource prédéterminée du domaine temporel et/ou du domaine fréquentiel, la région pour l'exécution du mécanisme LBT et/ou la détection CCA comprend au moins l'un des éléments suivants : les k derniers symboles de multiplexage par répartition orthogonale de la fréquence, OFDM, de la sous-trame précédente ; et les k derniers symboles OFDM de la sous-trame précédente, et/ou une partie ou la totalité de la durée CP de la sous-trame PRACH actuelle où se trouve la première ressource prédéterminée du domaine temporel et/ou du domaine fréquentiel, ou la deuxième ressource prédéterminée du domaine temporel et/ou du domaine fréquentiel, ou la troisième ressource prédéterminée du domaine temporel et/ou du domaine fréquentiel.

**4.** Procédé selon la revendication 2, dans lequel au moins l'une de la première ressource prédéterminée du domaine temporel et/ou du domaine fréquentiel, de la deuxième ressource prédéterminée du domaine temporel et/ou du domaine fréquentiel, de la troisième ressource prédéterminée du domaine temporel et/ou du domaine fréquentiel et un emplacement de départ ou une durée ou un emplacement de fin de LBT/CCA ou du CP ou du GT ou de la ressource PRACH sont déterminés d'au moins l'une des manières suivantes :

un mode de détermination de l'attribution à l'équipement d'utilisateur, UE, par un nœud B évolué, eNB ;
un mode de détermination de notification par l'intermédiaire d'une signalisation de couche physique ;
un mode de détermination de notification par l'intermédiaire d'une signalisation de couche supérieure ;
un mode de détermination de négociation entre l'eNB et l'UE ; et
un mode de détermination de préconfiguration pour l'UE par un système.

**5.** Procédé selon la revendication 1, dans lequel l'envoi du préambule comprend au moins l'un des éléments suivants :

l'exécution du mécanisme LBT et/ou de la détection CCA, la détermination de la ressource du domaine temporel et/ou du domaine fréquentiel pour l'envoi du préambule en fonction d'un résultat de l'exécution du mécanisme LBT et/ou de la détection CCA, et si l'exécution du mécanisme LBT et/ou de la détection CCA réussit, l'envoi du préambule sur la ressource déterminée du domaine temporel et/ou du domaine fréquentiel ;
l'envoi du préambule sur une fenêtre temporelle ; et après la réussite de l'exécution du mécanisme LBT et/ou de la détection CCA, l'envoi du préambule sur une ressource configurée du domaine temporel et/ou du domaine fréquentiel.

**6.** Procédé selon la revendication 2, dans un cas où, à la condition que le mécanisme LBT et/ou la détection CCA échouent avant la première ressource prédéterminée du domaine temporel et/ou du domaine fréquentiel, l'exécution du mécanisme LBT et/ou de la détection CCA dans une fenêtre temporelle pour l'envoi du préambule, et à la condition que le mécanisme LBT et/ou la détection CCA réussissent avant une troisième ressource prédéterminée du domaine temporel et/ou du domaine fréquentiel dans la fenêtre temporelle, la détermination de la troisième ressource prédéterminée du domaine temporel et/ou du domaine fréquentiel comme étant la ressource du domaine temporel et/ou du domaine fréquentiel pour l'envoi du préambule, la fenêtre temporelle étant située après la première ressource prédéterminée du domaine temporel et/ou du domaine fréquentiel, ou située avant la première ressource prédéterminée du domaine temporel et/ou du domaine fréquentiel, ou comprenant la première ressource prédéterminée du domaine temporel et/ou du domaine fréquentiel.

**7.** Procédé selon la revendication 2, dans lequel la troisième ressource prédéterminée du domaine temporel et/ou du domaine fréquentiel dans la fenêtre temporelle est déterminée par les paramètres suivants :

un troisième décalage configuré pour identifier une distance de décalage entre la première ressource prédéterminée du domaine temporel et/ou du domaine fréquentiel et un point de départ de la fenêtre temporelle ;
un quatrième décalage configuré pour identifier une distance de décalage entre la troisième ressource prédéterminée du domaine temporel et/ou du domaine fréquentiel pour l'envoi du préambule dans la fenêtre temporelle et le point de départ de la fenêtre temporelle ;
une taille de la troisième ressource prédéterminée du domaine temporel et/ou du domaine fréquentiel ;
un certain nombre de troisièmes ressources prédéterminées du domaine temporel et/ou du domaine fréquentiel ;
une longueur de fenêtre de la fenêtre temporelle ; et
un intervalle de domaine temporel entre les troisièmes ressources prédéterminées du domaine temporel et/ou du domaine fréquentiel.

8. Procédé selon la revendication 7, dans lequel la partie du contenu du Msg3 comprend au moins l'un des éléments suivants : une identité, ID, d'équipement d'utilisateur, UE, un identifiant temporaire de réseau radio cellulaire, C-RNTI, une demande de contrôle des ressources radio, RRC, une demande de programmation, SR, et un rapport sur l'état de la mémoire tampon, BSR.

9. Dispositif pour l'envoi d'un préambule, **caractérisé en ce qu'**il comprend :

un premier module de détermination (112), configuré pour déterminer une ressource du domaine temporel et/ou du domaine fréquentiel pour l'envoi du préambule ;
une seconde unité de détermination (152), configurée pour déterminer une ressource du domaine temporel et/ou du domaine fréquentiel pour l'envoi d'une partie ou de la totalité d'un contenu d'un message, Msg3, en fonction de la ressource du domaine temporel et/ou du domaine fréquentiel pour l'envoi du préambule ; et
une seconde unité d'envoi (154) confirmée pour envoyer le préambule sur la ressource du domaine temporel et/ou du domaine fréquentiel pour envoyer le préambule et envoyer la partie ou la totalité du contenu du Msg3 sur la ressource du domaine temporel et/ou du domaine fréquentiel pour envoyer la partie ou la totalité du contenu du Msg3 ;
dans lequel la ressource du domaine temporel et/ou du domaine fréquentiel pour l'envoi de la partie ou de la totalité du contenu du Msg3 comprend l'un des éléments suivants :

la ressource du domaine temporel et/ou du domaine fréquentiel pour l'envoi de la partie ou de la totalité du contenu du Msg3 est la même que la ressource du domaine temporel pour l'envoi du préambule et est décalée d'un premier décalage dans un domaine fréquentiel ;
et la ressource du domaine temporel et/ou du domaine fréquentiel pour l'envoi de la partie ou de la totalité du contenu du Msg3 est la même que la ressource du domaine fréquentiel pour l'envoi du préambule et est décalée d'un second décalage dans un domaine temporel.

A time/frequency-domain resource configured to send a preamble on an unlicensed carrier is determined
S102
The preamble is sent on the determined time/frequency-domain resource
S104

FIG. 1

An access right over an unlicensed carrier is acquired
S202
Random access processing is performed according to the unlicensed carrier over which the access right is acquired
S204

FIG. 2

A preamble sent by UE on a time/frequency-domain resource on an unlicensed carrier is received
S302
Random access processing for the UE is executed according to the received preamble
S304

FIG. 3

An unlicensed carrier obtained by UE by contention is determined
S402
Random access processing for the UE is executed according to the determined unlicensed carrier
S404

FIG. 4

Preamble sending window
PRACH resource on which a preamble is tried to be sent
LBT
PRACH
Next PRACH resource

FIG. 5

Preamble sending window
PRACH resource on which a preamble is tried to be sent
LBT
PRACH

FIG. 6

Preamble sending time window
LBT
Standby PRACH
PRACH

FIG. 7

Preamble sending window
Additional PRACH resource
LBT
PRACH
PRACH resource on which a preamble is tried to be sent
Next PRACH resource

FIG. 8

UpPTS
Subframe
CP
Preamble
GT
CP
Preamble
GT
CP
CCA detection region
CCA detection region

FIG. 9

DwPTS
GP
UpPTS
Subframe
Possible starting point of CCA detection
CP
Preamble
G T
C P
Preamble
G T
CCA detection region

FIG. 10

First determination module 112
First sending module 114

FIG. 11

First determination module 112
First sending module 114
First sending unit 122

FIG. 12

First determination module
112
First determination unit
132
First sending module
114

FIG. 13

First determination module
112
First determination unit
134
First determination subunit
142
Second determination subunit
144
Third determination subunit
146
Fourth determination subunit
148
First sending module
114

FIG. 14

First determination module
112
First sending module
114
Second determination unit
152
Second sending unit
154

FIG. 15

First receiving module
162
First processing module
164

FIG. 16

First receiving module
162
First receiving unit
172
First processing module
164

FIG. 17

First receiving module
162
First processing module
164
Second receiving unit
182

FIG. 18

Second sending module
192
First receiving module
162
First processing module
164

FIG. 19

Acquisition module
202
Second processing module
204

FIG. 20

Acquisition module
202
Second processing module
204
First processing unit
212
Second processing unit
214

FIG. 21

Second determination module
222
Third processing module
224

FIG. 22

Second determination module
222
Third processing module
224
Third processing unit
232
Fourth processing unit
234

FIG. 23

UE 240
Preamble sending device
242
First random access device
244

FIG. 24

eNB 250
Preamble receiving device
252
Second random access device
254

FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2015057011 A1, DI GIROLAMO ROCCO
- US 20150226 A1
- US 2015049712 A1, CHEN WANSHI
- US 20150219 A1
- US 2010093386 A1, DAMNJANOVIC ALEKSANDAR
- US 20100415 A1
- US 2013301611 A1, BAGHEL SUDHIR KUMAR
- US 20131114 A1
- WO 2016007257 A1, QUALCOMM INC
- WO 20160114 A1


### Non-patent literature cited in the description


- **HUAWEI**. TDD PRACH resource selection. *3GPP DRAFT; R2-086351 TDD PRACH RESOURCE SELECTION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE*, 04 November 2008 (Prague)
- **INTEL CORPORATION**. On Random access for NB-IoT. *3GPP DRAFT; R1-160132 - INTEL NB-IOT RA, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE*, 17 January 2016, vol. RAN WG1 (Budapest)